(19)

(11) **EP 3 893 186 A1**

(12) **EUROPEAN PATENT APPLICATION**

(43) Date of publication:
**13.10.2021 Bulletin 2021/41**

(51) Int Cl.:
***G06Q 40/06*** $^{(2012.01)}$ ***G06Q 40/04*** $^{(2012.01)}$

(21) Application number: **21176331.3**

(22) Date of filing: **15.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2016 US 201662343182 P**

(62) Document number(s) of the earlier application(s) in accordance with Art. 76 EPC:
**17806015.8 / 3 465 596**

(71) Applicant: **eToro Group Ltd**
**VG 1110 Tortola-Virgin Islands British (VG)**

(72) Inventors:
- **ASSIA, Johnathan Alexander**
**Savyon (IL)**
- **GOLDKLANG, Mordechay**
**5442232 Givat Shmuel (IL)**
- **SHUMER, Dan**
**4033509 Kfar Yona (IL)**
- **DIAMANT, Paz**
**5401140 Givat Shumel (IL)**
- **SZMULEWICZ, Nir**
**7170328 Modiin (IL)**

(74) Representative: **HGF**
**1 City Walk**
**Leeds LS11 9DX (GB)**

Remarks:
This application was filed on 27-05-2021 as a divisional application to the application mentioned under INID code 62.

(54) **METHOD OF COPY TRADING AND SYSTEM THEREOF**

(57) A method of facilitating mirror trading of financial instruments in a trading network comprising a plurality of traders, the method comprising, by a processor operatively coupled to a memory:
obtaining first criteria of a copying trader, the first criteria identifying at least one first target trading position opened by a first copied trader with respect to at least one instrument, and one or more second criteria of the copying trader, each second criteria identifying at least one trading position with respect to at least one instrument, the at least one trading position being either a non-mirror trading position or a target trading position opened by a second copied trader;
opening, in a mirror portfolio, a first basket of trading positions, the basket comprising one or more trading positions in accordance with the first criteria, and one or more second baskets of trading positions, each second basket associated with respective second criteria and comprising one or more trading positions in accordance with the associated second criteria;
obtaining a liquidation trigger comprising two or more components, each component having a percentage weight with respect to the entire liquidation trigger, wherein a first component is applicable to the first basket and a second or more components are applicable to the second or more baskets; and
adjusting the liquidation trigger responsive to a performance measure of the mirror portfolio satisfying trigger change criteria, wherein the adjusted liquidation trigger comprises the two or more components.

Fig. 2

Mirror trading system (200)
Processor (210)
Monitoring module (250)
Mirroring module (260)
Trading module (220)
Matching module (240)
Data repository (203)
ECN interface (206)
Client interface (204)
Trading computer (201)
Network
Client 1
Client 2
...
Client n
Trading clients (202)

EP 3 893 186 A1

## Description

### TECHNICAL FIELD

The presently disclosed subject matter relates to mirror trading and, more particularly, to mirror trading of financial instruments.

### BACKGROUND

Social trading networks, a subcategory of online social networks, enables investors in financial markets to engage in social trading, a process through which online financial investors rely on user generated financial content as an information source for making financial trading decisions. One such method of social trading is mirror trading. Mirror trading enables traders to automatically, including e.g. according to specified rules, copy trading positions opened and managed by a selected investor in the social trading network.

However, there remains a need for additional trading tools to be implemented on a mirror trading system that enable mirror traders to automatically limit their exposure to basket losses and/or automatically lock in basket gains.

There also remains a need to reduce the computational complexity required for a computer system configured to, e.g., automatically limit a trader's exposure to basket losses and/or automatically lock in basket gains.

### GENERAL DESCRIPTION

In accordance with certain aspects of the presently disclosed subject matter, there is provided a method of facilitating mirror trading of financial instruments in a trading network comprising a plurality of traders, the method comprising, by a processor operatively coupled to a memory: obtaining from the memory, criteria received from a copying trader for identifying at least one target trading position opened by at least one copied trader in respect of at least one instrument to mirror for the copying trader in a mirror portfolio associated with the copying trader; identifying at least one target trading position satisfying the obtained criteria; automatically opening, in the mirror portfolio, a basket of trading positions comprising one or more mirror positions, each mirror position corresponding to an identified target trading position; obtaining, from the memory, one or more liquidation triggers received from the copying trader to apply to the mirror portfolio; automatically changing at least one liquidation trigger upon a performance measure for the mirror portfolio satisfying one or more trigger change criteria; and automatically liquidating the mirror portfolio upon the changed liquidation trigger being met by automatically liquidating all the trading positions in the basket of trading positions.

In accordance with certain other aspects of the presently disclosed subject matter, there is provided a system for facilitating mirror trading of financial instruments in a trading network comprising a plurality of traders, the system comprising a processor operatively coupled to a memory and configured to: obtain from the memory criteria received from a copying trader for identifying at least one target trading position opened by at least one copied trader in respect of at least one instrument to mirror for the copying trader in a mirror portfolio associated with the copying trader; identify at least one target trading position satisfying the obtained criteria; automatically open, in the mirror portfolio, a basket of trading positions comprising one or more mirror positions, each mirror position corresponding to an identified target trading position; obtain from the memory one or more liquidation triggers received from the copying trader to apply to the mirror portfolio; automatically change at least one liquidation trigger upon a performance measure for the mirror portfolio satisfying one or more trigger change criteria; and automatically liquidate the mirror portfolio upon the changed liquidation trigger being met by automatically liquidating all the trading positions in the basket of trading positions.

In accordance with certain other aspects of the presently disclosed subject matter, there is provided a non-transitory storage medium comprising instructions embodied therein, that when executed by a processor comprised in a computer, cause the processor to perform a method of facilitating mirror trading of financial instruments in a trading network comprising a plurality of traders, the method comprising: obtaining criteria received from a copying trader for identifying at least one target trading position opened by at least one copied trader in respect of at least one instrument to mirror for the copying trader in a mirror portfolio associated with the copying trader; identifying at least one target trading position satisfying the obtained criteria; automatically opening, in the mirror portfolio, a basket of trading positions comprising one or more mirror positions, each mirror position corresponding to an identified target trading position; obtaining one or more liquidation triggers received from the copying trader to apply to the mirror portfolio; automatically changing at least one liquidation trigger upon a performance measure for the mirror portfolio satisfying one or more trigger change criteria; and automatically liquidating the mirror portfolio upon the changed liquidation trigger being met by automatically liquidating all the trading positions in the basket of trading positions.

In accordance with further aspects and optionally in combination with other aspects, the obtained criteria includes criteria for identifying at least two target trading positions opened by at least two different copied traders.

In accordance with further aspects and optionally in combination with other aspects, the obtained criteria includes criteria for identifying at least one non-mirror trading position.

In accordance with further aspects and optionally in combination with other aspects, the obtained criteria includes at least an indication of each copied trader, said indication sufficient to discern each copied trader from other traders in the trading network.

In accordance with further aspects and optionally in combination with other aspects, the obtained criteria further includes an indication of one or more of: a specific target trading position, a specific instrument, a specific instrument type, a specific position types, and a specific timeframes.

In accordance with further aspects and optionally in combination with other aspects, the obtained criteria further includes an indication that the at least one target trading position is one of: a previously opened target trading position and a not yet opened target trading position.

In accordance with further aspects and optionally in combination with other aspects, the method further comprises, upon the at least one changed liquidation trigger not being met, automatically closing at least one mirror trading position in response to the corresponding trading position being closed.

In accordance with further aspects and optionally in combination with other aspects, automatically changing the at least one liquidation trigger comprises at least one of: raising the liquidation trigger and lowering the liquidation trigger.

In accordance with further aspects and optionally in combination with other aspects, automatically changing the at least one liquidation trigger comprises automatically changing the trigger according to one or more predetermined rules.

In accordance with further aspects and optionally in combination with other aspects, automatically changing the at least one liquidation trigger comprises changing the trigger in predetermined increments.

In accordance with further aspects and optionally in combination with other aspects, automatically changing the at least one liquidation trigger comprises repeatingly changing the liquidation trigger.

In accordance with further aspects and optionally in combination with other aspects, the performance measure satisfies the one or more trigger change criteria upon the performance measure being indicative of one or more of: a value of the portfolio breaching a predetermined threshold value, a change in a value of the portfolio breaching a predetermined threshold change.

In accordance with further aspects and optionally in combination with other aspects, the change is one of or more of: an absolute change and a relative change relative to a prior value.

In accordance with further aspects and optionally in combination with other aspects, one or more of the liquidation triggers is met upon at least one of a portfolio value and a change in a portfolio value breaching a predetermined threshold value.

In accordance with further aspects and optionally in combination with other aspects, one or more of the liquidation triggers is met upon a value of one or more trading positions in the basket of trading changing by a predetermined amount.

In accordance with further aspects and optionally in combination with other aspects, one or more of the liquidation triggers includes a stop loss.

In accordance with further aspects and optionally in combination with other aspects, one or more of the liquidation triggers includes a take profit.

In accordance with further aspects and optionally in combination with other aspects, one or more of the liquidation triggers includes a trailing stop loss.

In accordance with further aspects and optionally in combination with other aspects, one or more of the liquidation triggers includes a trailing take profit.

In accordance with further aspects and optionally in combination with other aspects, liquidating the mirror portfolio further comprises determining if a current value of the mirror portfolio breaches the changed at least one liquidation trigger.

In accordance with further aspects and optionally in combination with other aspects, determining if a current value of the mirror portfolio breaches the changed at least one liquidation trigger comprises: setting a target price threshold for one or more instruments held in one or more trading positions in the basket of trading positions; determining, using a computationally inexpensive operation, if any target price threshold is breached; and upon determining that at least one target price threshold is breached, calculating a current value of the portfolio using one or more computationally expensive operations, and determining if one of: the current value or a change in the current value, breaches the changed at least one liquidation trigger.

In accordance with further aspects and optionally in combination with other aspects, the one or more target price thresholds are set such that if all target price thresholds are breached, the changed at least one liquidation trigger will be breached.

In accordance with further aspects and optionally in combination with other aspects, the one or more target price thresholds are set for the one or more instruments in accordance with the current prices of each instrument and further in accordance with at least one of: each instruments' respective position size in the portfolio, and each instruments' respective volatility.

In accordance with further aspects and optionally in combination with other aspects, further comprising, upon determining that the current value of the portfolio does not breach the changed at least one liquidation trigger, revising one or more of the target price thresholds in accordance with the current prices of the respective one or more target price thresholds such that no target price thresholds are breached.

In accordance with further aspects and optionally in combination with other aspects, the computationally inexpensive operation comprises, for each instrument, obtaining the current price of the instrument, comparing the current price to its respective target price threshold, and determining if the current price breaches the target price threshold.

In accordance with further aspects and optionally in combination with other aspects, the one or more computationally expensive operations comprises, for each trading position *P* in respect of an instrument, calculating a P&L of P using the formula

$$P\&L_P = (p_c - p_0) \times u$$

where $p_c$ is the current price of the instrument per unit, $p_0$ is the initial price per unit, and $u$ is the number of units traded in $P$.

In accordance with further aspects and optionally in combination with other aspects, the current value $V$ of the portfolio is calculated using the formula

$$V = C + \sum_{i=1}^{n} c_i + \sum_{i=1}^{n} P\&L_i$$

where $C$ is the cash in the portfolio, $c_i$ is the amount the trader has invested in the i-th trading position, and $P\&L_i$ is the P&L of the *i*-th trading position.

In accordance with further aspects and optionally in combination with other aspects, one or more target price thresholds are revised upon a trading position being closed.

In accordance with further aspects and optionally in combination with other aspects, one or more target price thresholds are revised upon a new trading position being opened.

In accordance with further aspects and optionally in combination with other aspects, one or more target price thresholds are revised upon a liquidation trigger being changed.

In accordance with further aspects and optionally in combination with other aspects, one or more target price thresholds are revised upon cash being transferred in or out of the portfolio.

In accordance with further aspects and optionally in combination with other aspects, further comprising, upon a copied trader transferring an amount of cash in or out of the copied trader's account, calculating a corresponding amount of cash to transfer in or out of the mirror portfolio, transferring the calculated amount of cash, and revising one or more of the target price thresholds for one or more instruments held in one or more trading positions in the basket of trading positions.

In accordance with certain other aspects of the presently disclosed subject matter there is provided a method of reducing computational complexity required for a processor operatively coupled to a memory to perform a task related to repetitively processing a plurality of objects in each repetition out of a plurality of repetitions and determining, if a condition is met in respect of the plurality of objects in any given repetition, to take an action, wherein processing the plurality of objects in a given repetition requires the processor to first process each object in the plurality of objects, in the given repetition, using a computationally expensive operation, the method comprising, by the processor: in each repetition, obtaining each object from the memory and, prior to said first processing, preprocessing each object in the plurality of objects using a computationally inexpensive operation and determining if the results of at least one preprocessing in respect of at least one object satisfies a predetermined criteria; and only upon determining that the results of at least one preprocessing of at least one object satisfies a predetermined criteria, thereafter processing each object using the computationally expensive operation and subsequently processing the plurality of objects to determine if the condition is met, and upon determining that the condition is met taking the action; thereby reducing the number of computationally expensive operations required to be performed in one or more repetitions.

In accordance with certain other aspects of the presently disclosed subject matter, there is provided a system for reducing computational complexity required for a processor to perform a task related to repetitively processing a plurality of objects in each repetition out of a plurality of repetitions and determining, if a condition is met in respect of the plurality of objects in any given repetition, to take an action, wherein processing the plurality of objects in a given repetition requires the processor to first process each object in the plurality of objects, in the given repetition, using a computationally expensive operation, the system comprising a processor operatively coupled to a memory and configured to: in each repetition, prior to said first processing, obtain each object from the memory and preprocess each object in the plurality of objects using a computationally inexpensive operation and determine if the results of at least one preprocessing in respect of at least one object satisfies a predetermined criteria; and only upon determining that the results of at least one preprocessing of at least one object satisfies a predetermined criteria, thereafter process each object using the computationally expensive operation and subsequently process the plurality of objects to determine if the condition is met, and upon determining that the condition is met taking the action; thereby reducing the number of computationally expensive operations required to be performed in one or more repetitions.

In accordance with certain other aspects of the presently disclosed subject matter, there is provided a non-transitory storage medium comprising instructions embodied therein, that when executed by a processor comprised in a computer, cause the processor to perform a method of reducing computational complexity required for the processor to perform a task related to repetitively processing a plurality of objects in each repetition out of a plurality of repetitions and determining, if a condition is met in respect of the plurality of objects in any given repetition, to take an action, wherein processing the plurality of objects in a given repetition requires the processor to first process each object in the plurality of objects, in the given repetition, using a computationally expensive operation, the method comprising: in each repetition, prior to said first processing, preprocessing each object in the plurality of objects using a computationally inexpensive operation and determining if the results of at least one preprocessing in respect of at least one object satisfies a predetermined criteria; and only upon determining that the results of at least one preprocessing of at least one object satisfies a predetermined criteria, thereafter processing each object using the computationally expensive operation and subsequently processing the plurality of objects to determine if the condition is met, and upon determining that the condition is met taking the action; thereby reducing the number of computationally expensive operations required to be performed in one or more repetitions.

In accordance with further aspects and optionally in combination with other aspects, further comprising, upon determining that the condition is not met, revising at least one predetermined criteria in respect of at least one object in accordance with a current state of the at least one object, such that a next preprocessing of any given object in the plurality of objects will not result in a predetermined criteria in respect of the given object being satisfied.

In accordance with further aspects and optionally in combination with other aspects, the plurality of objects is a plurality of trading positions in a respective plurality of financial instruments in a trading portfolio, the plurality of trading positions comprising a basket of trading positions, and the task is to calculate the value of the trading portfolio to determine if a liquidation trigger in respect of the trading portfolio is met, and the action is liquidating the trading portfolio, and repetitively processing the plurality of trading positions comprises repetitively calculating the value of the trading portfolio each time a current price of at least one of the financial instruments is updated.

In accordance with further aspects and optionally in combination with other aspects, said first processing of a given trading position in respect of a given instrument using a computationally expensive operation comprises determining a P&L of the given trading position.

In accordance with further aspects and optionally in combination with other aspects, determining a P&L of the given trading position comprises, determining a current price of the given instrument, determining a difference in price between the current price and a price at the time of opening the position, and multiplying the difference by a number of units traded in the position.

In accordance with further aspects and optionally in combination with other aspects, the computationally inexpensive operation comprises, for a given position in respect of a given instrument, determining a current market price of the instrument, and comparing the market price with a predetermined target price threshold in respect of the given instrument.

In accordance with further aspects and optionally in combination with other aspects, upon comparing the market price with the predetermined target price threshold in respect of the given instrument, the predetermined criteria is met upon the current market price breaching the predetermined target price threshold.

In accordance with further aspects and optionally in combination with other aspects, the predetermined target price threshold for each instrument is determined prior to a given repetition in accordance with at least one of: a volatility of the instrument in a predetermined time period, a size of a position held in respect of the instrument, and a combination thereof.

In accordance with further aspects and optionally in combination with other aspects, the predetermined target price threshold for one or more instruments is revised upon at least one of a trading position in the basket of trading positions being closed, an amount of cash being transferred in or out of the trading portfolio, an amount of cash being transferred in or out of the trading portfolio, a new trading position being opened, and a liquidation trigger being changed.

In accordance with further aspects and optionally in combination with other aspects, the predetermined target price threshold for the one or more instruments is revised such that none of the target price thresholds will be breached in the next repetition.

In accordance with further aspects and optionally in combination with other aspects, the liquidation trigger includes a stop loss, a take profit, a trailing stop loss and a trailing take profit.

In accordance with certain other aspects of the presently disclosed subject matter there is provided a method of facilitating mirror trading of financial instruments in a trading network comprising a plurality of traders, the method comprising, by a processor operatively coupled to a memory: obtaining, from the memory, first criteria received from a copying trader for identifying at least one target trading position opened by at least a first copied trader in respect of at least one instrument to mirror for the copying trader in a mirror portfolio associated with the copying trader; obtaining, from the memory, second criteria received from the copying trader for identifying at least a second trading position in respect of an instrument, said second trading position being either a non-mirror trading position or a target trading position opened by at least a second copied trader different from the first copied trader; identifying at least one target trading position satisfying the first criteria and at least a second trading position satisfying the second criteria; automatically opening, in a mirror portfolio of the copying trader, a basket of trading positions, the basket of trading positions comprising at least a mirror trading position corresponding to the identified at least one target trading position in accordance with the first criteria, and at least a second trading position in accordance with the second criteria; obtaining, from the memory, a stop loss (SL) received from the copying trader to apply to the mirror portfolio; and automatically liquidating the mirror portfolio upon the SL being met.

In accordance with certain other aspects of the presently disclosed subject matter there is provided a system for facilitating mirror trading of financial instruments in a trading network comprising a plurality of traders, the system comprising a processor operatively coupled to a memory and configured to: obtain, from the memory, first criteria received from a copying trader for identifying at least one target trading position opened by at least a first copied trader in respect of at least one instrument to mirror for the copying trader in a mirror portfolio associated with the copying trader; obtain, from the memory, second criteria received from the copying trader for identifying at least a second trading position in respect of an instrument, said second trading position being either a non-mirror trading position or a target trading position opened by at least a second copied trader different from the first copied trader; identify at least one target trading position satisfying the first criteria and at least a second trading position satisfying the second criteria; automatically open, in a mirror portfolio of the copying trader, a basket of trading positions, the basket of trading positions comprising at least a mirror trading position corresponding to the identified at least one target trading position in accordance with the first criteria, and at least a second trading position in accordance with the second criteria; obtain, from the memory, a stop loss (SL) received from the copying trader to apply to the mirror portfolio; and automatically liquidate the mirror portfolio upon the SL being met.

In accordance with certain other aspects of the presently disclosed subject matter there is provided a non-transitory storage medium comprising instructions embodied therein, that when executed by a processor comprised in a computer, cause the processor to perform a method of facilitating mirror trading of financial instruments in a trading network comprising a plurality of traders, the method comprising: obtaining first criteria received from a copying trader for identifying at least one target trading position opened by at least a first copied trader in respect of at least one instrument to mirror for the copying trader in a mirror portfolio associated with the copying trader; obtaining second criteria received from the copying trader for identifying at least a second trading position in respect of an instrument, said second trading position being either a non-mirror trading position or a target trading position opened by at least a second copied trader different from the first copied trader; identifying at least one target trading position satisfying the first criteria and at least a second trading position satisfying the second criteria; automatically opening, in a mirror portfolio of the copying trader, a basket of trading positions, the basket of trading positions comprising at least a mirror trading position corresponding to the identified at least one target trading position in accordance with the first criteria, and at least a second trading position in accordance with the second criteria; obtaining a stop loss (SL) received from the copying trader to apply to the mirror portfolio; and automatically liquidating the mirror portfolio upon the SL being met.

In accordance with further aspects and optionally in combination with other aspects, the obtained first or second criteria includes at least an indication of each copied trader, said indication sufficient to discern each copied trader from other traders in the trading network.

In accordance with further aspects and optionally in combination with other aspects, the obtained first or second criteria further includes an indication of one or more of: a specific target trading position, a specific instrument, a specific instrument type, a specific position types, and a specific timeframes.

In accordance with further aspects and optionally in combination with other aspects, the obtained first or second criteria further includes an indication that the at least one target trading position is one of: a previously opened target trading position and a not yet opened target trading position.

In accordance with further aspects and optionally in combination with other aspects, the SL is met upon at least one of a portfolio value and a change in a portfolio value breaching a predetermined threshold value.

In accordance with further aspects and optionally in combination with other aspects, liquidating the mirror portfolio further comprises determining if a current value of the mirror portfolio breaches the SL.

In accordance with further aspects and optionally in combination with other aspects, determining if a current value of the mirror portfolio breaches the SL comprises: setting a target price threshold for one or more instruments held in one or more trading positions in the basket of trading positions; determining, using a computationally inexpensive operation, if any target price threshold is breached; and upon determining that at least one target price threshold is breached, calculating a current value of the portfolio using one or more computationally expensive operations, and determining if one of: the current value or a change in the current value, breaches the SL.

In accordance with further aspects and optionally in combination with other aspects, the one or more target price thresholds are set such that if all target price thresholds are breached, the SL will be breached.

In accordance with further aspects and optionally in combination with other aspects, the one or more target price thresholds are set for the one or more instruments in accordance with the current prices of each instrument and further in accordance with at least one of: each instruments' respective position size in the portfolio, and each instruments' respective volatility.

In accordance with further aspects and optionally in combination with other aspects, further comprising, upon determining that the current value of the portfolio does not breach the SL, revising one or more of the target price thresholds in accordance with the current prices of the respective one or more target price thresholds such that no target price thresholds are breached.

In accordance with further aspects and optionally in combination with other aspects, the computationally inexpensive operation comprises, for each instrument, obtaining the current price of the instrument, comparing the current price to its respective target price threshold, and determining if the current price breaches the target price threshold.

In accordance with further aspects and optionally in combination with other aspects, the one or more computationally expensive operations comprises, for each trading position *P* in respect of an instrument, calculating a P&L of P using the formula

$$P\&L_P = (p_c - p_0) \times u$$

where $p_c$ is the current price of the instrument per unit, $p_0$ is the initial price per unit, and *u* is the number of units traded in *P*.

In accordance with further aspects and optionally in combination with other aspects, the current value *V* of the portfolio is calculated using the formula

$$V = C + \sum_{i=1}^{n} c_i + \sum_{i=1}^{n} P\&L_i$$

where *C* is the cash in the portfolio, $c_i$ is the amount the trader has invested in the i-th trading position, and $P\&L_i$ is the P&L of the *i*-th trading position.

In accordance with further aspects and optionally in combination with other aspects, one or more target price thresholds are revised upon a trading position being closed.

In accordance with further aspects and optionally in combination with other aspects, one or more target price thresholds are revised upon a new trading position being opened.

In accordance with further aspects and optionally in combination with other aspects, one or more target price thresholds are revised upon cash being transferred in or out of the portfolio.

In accordance with further aspects and optionally in combination with other aspects, further comprising, upon a copied trader transferring an amount of cash in or out of the copied trader's account, calculating a corresponding amount of cash to transfer in or out of the mirror portfolio, transferring the calculated amount of cash, and revising one or more of the target price thresholds for one or more instruments held in one or more trading positions in the basket of trading positions.

In accordance with certain other aspects of the presently disclosed subject matter there is provided a method of facilitating copy trading of financial instruments, the method comprising, by a processor operatively coupled to a memory: obtaining, from the memory, a copy trading (CT) buy order received from the copying trader, the CT buy order comprising at least an indication of: at least one copied trader portfolio associated with a copied trader, and a trailing stop loss (TSL) value; associating the copying trader with a linked investment (LI) portfolio linked to each at least one copied trader portfolio; executing, in the LI portfolio, one or more first trades in respect of one or more instruments in accordance with the CT buy order, the one or more first trades mirroring one or more trades executed in the linked at least one copied trader's portfolio; monitoring the performance of the LI portfolio; and liquidating the LI portfolio upon the performance meeting a first criteria and revising the TSL value upon the performance meeting a second criteria; wherein the first criteria is met if the performance is indicative of the TSL value being breached, and the second criteria is met if the performance is indicative of a LI portfolio value increase/decrease of a predetermined amount.

In accordance with certain aspects of the presently disclosed subject matter there is provided a method of facilitating mirror trading of financial instruments in a trading network comprising a plurality of traders, the method comprising, by a processor operatively coupled to a memory: obtaining, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtaining, from the memory, a liquidation trigger comprising two or more components, each component having a specified percentage weight in respect of the entire liquidation trigger, wherein a first component is applicable to the first basket and a second or more components are applicable to the second or more baskets; and automatically changing the liquidation trigger upon a performance measure for the mirror portfolio satisfying a trigger change criteria, wherein the specified percentage weights are also applicable to said changed liquidation trigger.

In accordance with certain other aspects of the presently disclosed subject matter there is provided a system for facilitating mirror trading of financial instruments in a trading network comprising a plurality of traders, the system comprising a processor operatively coupled to a memory and configured to: obtain, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically open, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtain, from the memory, a liquidation trigger comprising two or more components, each component having a specified percentage weight in respect of the entire liquidation trigger, wherein a first component is applicable to the first basket and a second or more components are applicable to the second or more baskets; and automatically change the liquidation trigger upon a performance measure for the mirror portfolio satisfying a trigger change criteria, wherein the specified percentage weights are also applicable to said changed liquidation trigger.

In accordance with certain other aspects of the presently disclosed subject matter there is provided a non-transitory storage medium comprising instructions embodied therein, that when executed by a processor comprised in a computer, cause the processor to perform a method of facilitating mirror trading of financial instruments in a trading network comprising a plurality of traders, the method comprising: obtaining, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtaining, from the memory, a liquidation trigger comprising two or more components, each component having a specified percentage weight in respect of the entire liquidation trigger, wherein a first component is applicable to the first basket and a second or more components are applicable to the second or more baskets; and automatically changing the liquidation trigger upon a performance measure for the mirror portfolio satisfying a trigger change criteria, wherein the specified percentage weights are also applicable to said changed liquidation trigger.

In accordance with further aspects and optionally in combination with other aspects, the method further comprises: determining if at least one component of the changed liquidation trigger is met in respect of at least one basket of trading positions applicable thereto, and upon determining that a given component of the changed liquidation trigger is met in respect of a given basket of trading positions applicable thereto, liquidating the given basket of trading positions; In accordance with further aspects and optionally in combination with other aspects, the method further comprises, upon liquidating the given basket of trading positions, re-allocating the percentage weights of the remaining components of the changed liquidation trigger applicable to the remaining baskets of trading positions.

In accordance with further aspects and optionally in combination with other aspects, the method further comprises: determining if any of a second or more components of the changed liquidation trigger is met in respect of any of a respective second or more baskets of trading positions applicable thereto, and upon determining that a given second or more component of the changed liquidation trigger is met in respect of a given second or more baskets of trading positions applicable thereto, liquidating the given second or more baskets of trading positions.

In accordance with further aspects and optionally in combination with other aspects, the method further comprises, upon liquidating the given second or more baskets of trading positions, re-allocating the percentage weights of the remaining components of the changed liquidation trigger applicable to the remaining baskets of trading positions.

In accordance with further aspects and optionally in combination with other aspects, determining if a component of the changed liquidation trigger is met in respect of a basket to which the component is applicable comprises: obtaining a first parameter indicative of a liquidation threshold associated with the basket, wherein the first parameter is determined utilizing the percentage weight of the component; setting one or more target price thresholds in respect of one or more instruments held in a respective one or more trading positions in the basket, wherein a target price threshold for a given instrument is determined utilizing the first parameter or a derivative thereof and in accordance with a current price and number of units of the given instrument; determining, using a computationally inexpensive operation, if a current price of any instrument held in a trading position in the basket and in respect of which a target price threshold was set breaches the target price threshold set in respect of said instrument thereby giving rise to a breach event; determining, in response to the breach event and using one or more computationally expensive operations, if the first parameter has been breached, wherein said first parameter having been breached is thereby indicative of the component of the changed liquidation trigger being met, and wherein said first parameter not having been breached is thereby indicative of the component of the changed liquidation trigger not having been met.

In accordance with further aspects and optionally in combination with other aspects, the first parameter corresponds to a maximum allowable gain/loss in the associated basket, and said first parameter is breached when a current gain/loss in said basket is equal to or greater than said maximum allowable gain/loss.

In accordance with further aspects and optionally in combination with other aspects, the method further comprises the first parameter corresponds to a floor value for the associated basket, and said first parameter is breached when a current value of said basket is equal to or lower than said floor value.

In accordance with further aspects and optionally in combination with other aspects, the first parameter corresponds to a ceiling value for the associated basket, and said first parameter is breached when a current value of said basket is equal to or higher than said ceiling value.

In accordance with further aspects and optionally in combination with other aspects, the method further comprises revising one or more of the target price thresholds upon any one or more of: i) a new trading position being opened in the given basket; ii) a trading position in the given basket being closed; iii) a transfer-in of cash to the mirror portfolio; iv) a transfer-out of cash from the mirror portfolio; v) a breach event having occurred and wherein said first parameter has not been breached; and vi) the liquidation trigger being changed

In accordance with further aspects and optionally in combination with other aspects, the first criteria includes at least an indication of the first copied trader, said indication sufficient to discern the first copied trader from other traders in the trading network.

In accordance with further aspects and optionally in combination with other aspects, the first criteria further includes an indication of one or more of: a specific target trading position, a specific instrument, a specific instrument type, a specific position types, and a specific timeframe.

In accordance with further aspects and optionally in combination with other aspects, the first criteria further includes an indication that the at least one first target trading position is one of: a previously opened target trading position and a not yet opened target trading position.

In accordance with further aspects and optionally in combination with other aspects, the method further comprises, upon no component of the changed liquidation trigger being met, automatically closing at least one trading position in the mirror portfolio in response to the corresponding target trading position being closed.

In accordance with further aspects and optionally in combination with other aspects, automatically changing the liquidation trigger comprises at least one of: raising the liquidation trigger and lowering the liquidation trigger.

In accordance with further aspects and optionally in combination with other aspects, automatically changing the liquidation trigger comprises automatically changing the liquidation trigger according to one or more predetermined rules.

In accordance with further aspects and optionally in combination with other aspects, automatically changing the liquidation trigger comprises changing the liquidation trigger in predetermined increments.

In accordance with further aspects and optionally in combination with other aspects, automatically changing the liquidation trigger comprises repeatingly changing the liquidation trigger.

In accordance with further aspects and optionally in combination with other aspects, the performance measure satisfies the one or more trigger change criteria upon the performance measure being indicative of one or more of: i) a value of the portfolio breaching a predetermined threshold value, ii) a change in a value of the portfolio breaching a predetermined threshold change.

In accordance with further aspects and optionally in combination with other aspects, the change is one of: an absolute change, and a relative change relative to a prior value.

In accordance with further aspects and optionally in combination with other aspects, a component of the changed liquidation triggers is met in respect of the basket of trading positions applicable thereto upon at least one of the basket value and a change in the basket value breaching a predetermined threshold value.

In accordance with further aspects and optionally in combination with other aspects, a component of the liquidation trigger is met in respect of the basket of trading positions applicable thereto upon a value of one or more trading positions in the basket changing by a predetermined amount.

In accordance with further aspects and optionally in combination with other aspects, the liquidation trigger includes a stop loss.

In accordance with further aspects and optionally in combination with other aspects, the liquidation trigger includes a take profit.

In accordance with further aspects and optionally in combination with other aspects, the liquidation trigger includes a trailing stop loss.

In accordance with further aspects and optionally in combination with other aspects, the liquidation trigger includes a trailing take profit.

In accordance with further aspects and optionally in combination with other aspects, the one or more target price thresholds are set such that if all target price thresholds in respect of the instruments held in trading positions in the basket are breached, the first parameter will be breached.

In accordance with further aspects and optionally in combination with other aspects, the target price threshold for a given instrument is set in accordance with the current price of the given instrument and further in accordance with at least one of: the size of the trading position in which the given instrument is held, and the given instrument's volatility.

In accordance with further aspects and optionally in combination with other aspects, revising one or more of the target price thresholds comprises revising the one or more target price thresholds in accordance with the current prices of the respective instruments such that no target price thresholds are breached.

In accordance with further aspects and optionally in combination with other aspects, the computationally inexpensive operation comprises, for a given instrument, obtaining the current price of the instrument, comparing the current price to its respective target price threshold, and determining if the current price breaches the target price threshold.

In accordance with further aspects and optionally in combination with other aspects, the one or more computationally expensive operations comprises, for each trading position *P* in the basket in respect of an instrument, calculating a P&L of P using the formula

$$P\&L_P = (p_c - p_0) \times u$$

where $p_c$ is the current price of the instrument per unit, *po* is the initial price per unit, and *u* is the number of units traded in *P*.

In accordance with further aspects and optionally in combination with other aspects, the current value $V_B$ of the basket is calculated using the formula

$$V_B = \sum_{i=1}^{n} c_i + \sum_{i=1}^{n} P\&L_i$$

where $c_i$ is the amount the trader has invested in the i-th trading position in the basket, and $P\&L_i$ is the P&L of the *i*-th trading position in the basket.

In accordance with certain other aspects of the presently disclosed subject matter there is provided a method of facilitating mirror trading of financial instruments in a trading network comprising a plurality of traders, the method comprising, by a processor operatively coupled to a memory: obtaining, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtaining, from the memory, one or more values indicative of a respective one or more risk thresholds, each obtained value applicable to at least a part of the mirror portfolio, for each given at least part of the mirror portfolio in respect of which a value indicative of a risk threshold was obtained, continually calculating a value indicative of a risk score associated with the given at least part of the mirror portfolio, and

automatically liquidating the given part of the mirror portfolio upon the calculated value indicative of a risk score breaching the obtained value indicative of a risk threshold in respect of the given part of the mirror portfolio.

In accordance with certain other aspects of the presently disclosed subject matter there is provided a system for facilitating mirror trading of financial instruments in a trading network comprising a plurality of traders, the system comprising a processor operatively coupled to a memory and configured to: obtain, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically open, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtain, from the memory, one or more values indicative of a respective one or more risk thresholds, each obtained value applicable to at least a part of the mirror portfolio, for each given at least part of the mirror portfolio in respect of which a value indicative of a risk threshold was obtained, continually calculate a value indicative of a risk score associated with the given at least part of the mirror portfolio, and automatically liquidate the given part of the mirror portfolio upon the calculated value indicative of a risk score breaching the obtained value indicative of a risk threshold in respect of the given part of the mirror portfolio.

In accordance with certain other aspects of the presently disclosed subject matter there is provided a non-transitory storage medium comprising instructions embodied therein, that when executed by a processor comprised in a computer, cause the processor to perform a method of facilitating mirror trading of financial instruments in a trading network comprising a plurality of traders, the method comprising: obtaining, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader; automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria; obtaining, from the memory, one or more values indicative of a respective one or more risk thresholds, each obtained value applicable to at least a part of the mirror portfolio, for each given at least part of the mirror portfolio in respect of which a value indicative of a risk threshold was obtained, continually calculating a value indicative of a risk score associated with the given at least part of the mirror portfolio, and automatically liquidating the given part of the mirror portfolio upon the calculated value indicative of a risk score breaching the obtained value indicative of a risk threshold in respect of the given part of the mirror portfolio.

In accordance with further aspects and optionally in combination with other aspects, the at least a part of the mirror portfolio is selected from the entire mirror portfolio, one or baskets of trading positions, and one or more trading positions comprised in a basket of trading positions.

In accordance with further aspects and optionally in combination with other aspects, the value indicative of a risk threshold is obtained in respect of each of one or more baskets of trading positions, wherein each basket of the one or more baskets is associated with a different copied trader and a given basket comprises one or more mirror trading positions corresponding to target trading positions opened by the copied trader associated with the given basket, and wherein the obtained value for one of the one or more baskets is different from the obtained value for another one of the one or more baskets.

In accordance with further aspects and optionally in combination with other aspects, the risk score associated with a given at least part of the mirror portfolio is calculated in accordance with one or more of: i) a volatility of one or more instruments held in one or more trading positions in the given at least part of the mirror portfolio, ii) a leverage associated with one or more trading positions in the given at least part of the mirror portfolio.

In accordance with further aspects and optionally in combination with other aspects, the risk score is derived by multiplying a vector *W* indicative of a position weight of each instrument in the at least part of the mirror portfolio relative to the whole at least part of the mirror portfolio by a covariance matrix *COV* indicative of a linear correlation in a risk measure between the instruments in the at least part of the mirror portfolio according to the formula

$$W^t X W = \sum_{i=1}^{n} \sum_{j=1}^{n} W_i W_j COV_{ij}$$

where $X = COV_{ij}$ and $n$ is the number of instruments in the at least part of the mirror portfolio.

In accordance with further aspects and optionally in combination with other aspects, the first criteria includes at least an indication of the first copied trader, said indication sufficient to discern the first copied trader from other traders in the trading network.

In accordance with further aspects and optionally in combination with other aspects, the first criteria further includes an indication of one or more of: a specific target trading position, a specific instrument, a specific instrument type, a specific position types, and a specific timeframe.

In accordance with further aspects and optionally in combination with other aspects, the first criteria further includes an indication that the at least one first target trading position is one of: a previously opened target trading position and a not yet opened target trading position.

In accordance with further aspects and optionally in combination with other aspects, the method further comprises automatically closing at least one trading position in the mirror portfolio in response to the corresponding target trading position being closed.

## BRIEF DESCRIPTION OF THE DRAWINGS

In order to understand the invention and to see how it can be carried out in practice, embodiments will be described, by way of non-limiting examples, with reference to the accompanying drawings, in which:

**Fig. 1** illustrates an example of a generalized network environment in which a mirror trading system operates, in accordance with certain embodiments of the disclosed subject matter;

**Fig. 2** illustrates a generalized functional diagram of a mirror trading system, in accordance with certain embodiments of the presently disclosed subject matter;

**Fig. 3** illustrates a generalized flow chart of a sequence of operations carried out for facilitating mirror trading of financial instruments in a trading network, in accordance with certain embodiments of the presently disclosed subject matter;

**Fig. 4** schematically illustrates a basket of trading positions in a mirror trading portfolio, in accordance with certain embodiments of the presently disclosed subject matter;

**Fig. 5A** illustrates an example of a trailing stop loss applied to a mirror portfolio comprising a basket of trading positions, in accordance with certain embodiments of the presently disclosed subject matter;

**Fig. 5B** illustrates an example of a trailing take profit applied to a mirror portfolio comprising a basket of trading positions, in accordance with certain embodiments of the presently disclosed subject matter;

**Fig. 5C** illustrates a second example of a trailing take profit applied to a mirror portfolio comprising a basket of trading positions, in accordance with certain embodiments of the presently disclosed subject matter;

**Fig. 6** illustrates a generalized flow chart of repeatingly changing a liquidation trigger, in accordance with certain embodiments of the presently disclosed subject matter;

**Fig. 7** illustrates a generalized flow chart of monitoring a basket of trading positions and liquidating the basket or closing a position, in accordance with certain embodiments of the presently disclosed subject matter;

**Fig. 8A** illustrates a generalized flow chart of monitoring a mirror portfolio value in the case of a stop loss liquidation trigger, and liquidating the mirror portfolio or changing the liquidation trigger, in accordance with certain embodiments of the presently disclosed subject matter;

**Fig. 8B** illustrates a generalized flow chart of monitoring a mirror portfolio value in the case of a take profit liquidation trigger and liquidating the mirror portfolio or changing the liquidation trigger, in accordance with certain embodiments of the presently disclosed subject matter;

**Fig. 8C** illustrates a generalized flow chart of monitoring a mirror portfolio value in the case of a take profit liquidation trigger and liquidating the mirror portfolio or changing the liquidation trigger, in accordance with certain other embodiments of the presently disclosed subject matter;

**Fig. 9** illustrates a generalized flow chart of monitoring a mirror portfolio value and determining if a liquidation trigger is breached, in accordance with certain embodiments of the presently disclosed subject matter;

**Fig. 10** illustrates a generalized flow chart of reducing the computational complexity required for a processor to perform a task related to repetitively processing a plurality of objects, in accordance with certain embodiments of the presently disclosed subject matter;

**Fig. 11** illustrates a generalized flow chart of reducing the computationally complexity required for a processor to calculate a mirror portfolio value, in accordance with certain embodiments of the presently disclosed subject matter;

**Fig. 12** illustrates a first example of setting target price thresholds, in accordance with certain embodiments of the presently disclosed subject matter;

**Fig. 13** illustrates a second example of setting target price thresholds, in accordance with certain embodiments of the presently disclosed subject matter;

**Fig. 14** illustrates a third example of setting target price thresholds, in accordance with certain embodiments of the presently disclosed subject matter;

**Fig. 15** illustrates a generalized flow chart of transferring cash in or out of a portfolio, in accordance with certain embodiments of the disclosed subject matter;

**Fig. 16** illustrates a generalized flow chart of a sequence of operations carried out for facilitating mirror trading of financial instruments in a trading network, in accordance with certain embodiments of the presently disclosed subject matter;

**Fig. 17** illustrates a generalized flow chart of a sequence of operations carried out for facilitating mirror trading of financial instruments in a trading network, in accordance with certain embodiments of the presently disclosed subject matter;

**Fig. 18** illustrates a generalized flow chart of a sequence of operations carried out for facilitating mirror trading of financial instruments in a trading network, in accordance with certain embodiments of the presently disclosed subject matter;

**Fig. 19** illustrates an example of a mirror portfolio, accordance with certain embodiments of the presently disclosed subject matter;

**Fig. 20** illustrates a generalized flow chart of reducing the computationally complexity required for a processor to determine if a component of a liquidation trigger is met, in accordance with certain embodiments of the presently disclosed subject matter;

**Fig. 21** illustrates a first example of setting price target thresholds in a mirror portfolio, in accordance with certain embodiments of the presently disclosed subject matter;

**Fig. 22** illustrates a second example of setting price target thresholds in a mirror portfolio, in accordance with certain embodiments of the presently disclosed subject matter;

**Fig. 23** illustrates a third example of setting price target thresholds in a mirror portfolio, in accordance with certain embodiments of the presently disclosed subject matter; and

**Fig. 24** illustrates a generalized flow chart of a sequence of operations carried out for facilitating mirror trading of financial instruments in a trading network, in accordance with certain embodiments of the presently disclosed subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "calculating", "associating", "comparing", "pre-processing", "monitoring", "receiving", "obtaining", "revising", "opening", "changing", "generating," "liquidating" or the like, refer to the action(s) and/or process(es) of a computer that manipulate and/or transform data into other data, said data represented as physical, such as electronic, quantities and/or said data representing the physical objects. The term "computer" should be expansively construed to include any kind of electronic device with data processing capabilities including, by way of non-limiting example, the computer system comprised in the mirror trading system disclosed in the present application.

Reference to a computer or processor taking a certain action should be understood to mean issuing commands that result in the described action being taken.

It is to be understood that the term "non-transitory computer usable medium" is used herein to exclude transitory, propagating signals, but to include, otherwise, any volatile or non-volatile computer memory technology suitable to the presently disclosed subject matter.

The operations in accordance with the teachings herein may be performed by a computer specially constructed for the desired purposes or by a general-purpose computer specially configured for the desired purpose by a computer program stored in a computer readable storage medium.

Embodiments of the presently disclosed subject matter are not described with reference to any particular programming language. It will be appreciated that a variety of programming languages may be used to implement the teachings of the presently disclosed subject matter as described herein.

In the description that follows:

"Trading position", and variants thereof, should be understood to include an open trading position in respect of a given financial instrument (e.g. a purchase of 500 shares of Apple);

"Copying trader" should be understood to include the trader mirroring one or more trading positions of one or more other traders;
"Copied trader" should be understood to include the trader whose one or more trading positions are being mirrored, or is desirous of being mirrored, by a copying trader;
"Mirror position", and variants thereof, should be understood to include a proportional copy trading position copied from another trader (e.g. a copied trader), according to the proportion between the copied trader's portfolio and the copying trader's allotted copying funds. By way of non-limiting example, Bob has $100 in his trading portfolio, and invests half of this amount ($50) to buy shares of XYZ Corp. Andre allots $200 to mirror Bob. Andre's mirror position consists of a purchase of $100 worth of shares of XYZ Corp (being half of the 200$ allotted to mirror Bob's XYZ Corp. trading position). Bob's purchase of shares of XYZ Corp. and Andre's purchase of XYZ Corp. are said to be "corresponding" trading positions;
A mirror position "corresponds" to a trading position, and vice versa, when the mirror position is a copy trading position based on the corresponding trading position;
A "target trading position" is a trading position to mirror, or a trading position having been mirrored. It should be noted that a target trading position can itself be a mirror position corresponding to a different target trading position;
"P&L" (Profit and Loss) of a trading position (including a mirror position) in respect of a financial instrument should be understood to include the (unrealized) gain or loss incurred in the trading position at a point in time, and can be calculated as

$$P\&L_P = (p_c - p_0) \times u$$

where $p_c$ is the current price of the instrument per unit, $p_0$ is the initial price per unit (i.e. the price at which the trading position was opened), and $u$ is the number of units traded. For example, suppose Bob's $50 bought him 20 shares of XYZ Corp. for $2.50 per share. A week later, the share prices rises to $4.50. The P&L of Bob's position in XYZ Corp. is $40 (i.e. (4.50 - 2.50) X 20);
"Portfolio" should be understood to include at least one investment portfolio associated with a given trader, each investment portfolio including investments in financial instruments (including without limitation, e.g. stocks, bonds, commodities, currencies, etc.) and, optionally, cash. A portfolio can be e.g., one or more investment accounts or investment sub-accounts, etc. A portfolio can also be a virtual collection of a number of discrete investment portfolios or investment accounts. A "mirror portfolio" should be understood to include a portfolio designated for holding mirror positions (though in some embodiments it may also hold non-mirror positions).
"Cash" should be understood to include non-invested trading funds in a portfolio;
"Portfolio value" should be understood to include the amount of cash that the trader can be expected to be left with if the portfolio is liquidated. Portfolio value $V$ can be calculated as the total cash $C$ in the portfolio, plus the invested cash in each trade $c_i$, plus the sum of P&L of each trading position as given by the formula:

$$V = C + \sum_{i=1}^{n} c_i + \sum_{i=1}^{n} P\&L_i$$

For example, in the example detailed above, Bob's portfolio value is calculated as $50 + $50 +40 (the total cash remaining after the investment in XYZ Corp. + the cash invested in XYZ Corp. + the P&L of the trade in XYZ Corp.) for a portfolio value of $140;
"Liquidation trigger" should be understood to include a specified condition for automatically liquidating a portfolio;
"Breach" should be understood to include meet and/or exceed;
"Criteria" should be understood to include one or more criterions and combinations thereof, including, e.g. compound criterions; and
"Basket of trading positions", and variants thereof should be understood to include one or more separate trading positions virtually aggregated in a portfolio and capable of being traded as a unit.

It should be noted that the above definitions are provided in order to better understand the description herein and, where used in the claims, are not intended to limit the claimed term(s) to the definition provided above.

As used herein, the phrase "for example," "such as", "for instance" and variants thereof describe non-limiting embodiments of the presently disclosed subject matter. Reference in the specification to "one embodiment", "some embodiments", "certain embodiments" or variants thereof means that a particular feature, structure or characteristic described in connection with the embodiment(s) is included in at least one embodiment of the presently disclosed subject matter. Thus the appearance of the phrase "one embodiment", "some embodiments", "certain embodiments" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

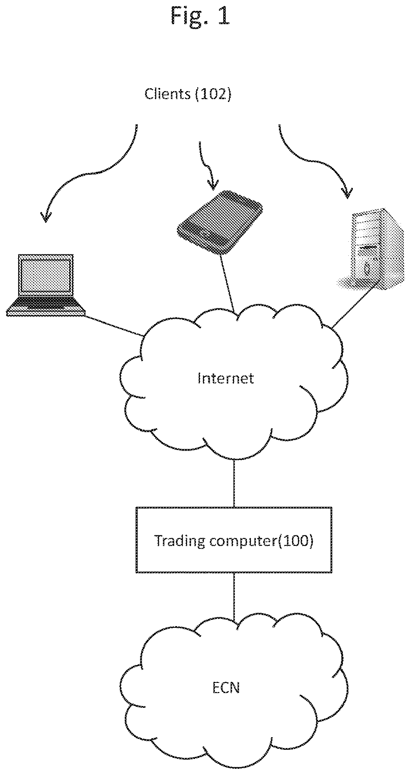

Bearing this in mind, attention is drawn to **Fig. 1,** illustrating a non-limiting example of a generalized network environment in which a mirror trading system operates in accordance with certain embodiments of the disclosed subject matter.

According to some examples of the presently disclosed subject matter, the mirror trading system can include a trading computer (100) operatively coupled to one or more trading client devices (102), e.g. via the Internet. Trading computer (100) receives trading instructions, including mirror trading instructions, from traders registered with the trading system and operating client devices (102). Trading computer (100) opens and/or closes trading positions, including mirror trading positions, on behalf of traders in accordance with the received trading instructions by communicating trading orders to a trading exchange or trading network, such as the illustrated electronic communication network (ECN), for execution. Trading computer (100) can also receive trade confirmations from the ECN, and transfer trade confirmations to the client devices (102). It is to be noted that in certain embodiments, trading computer (100) can open and close trading position without communicating with an ECN. For example, trading computer (100) can itself act as the ECN.

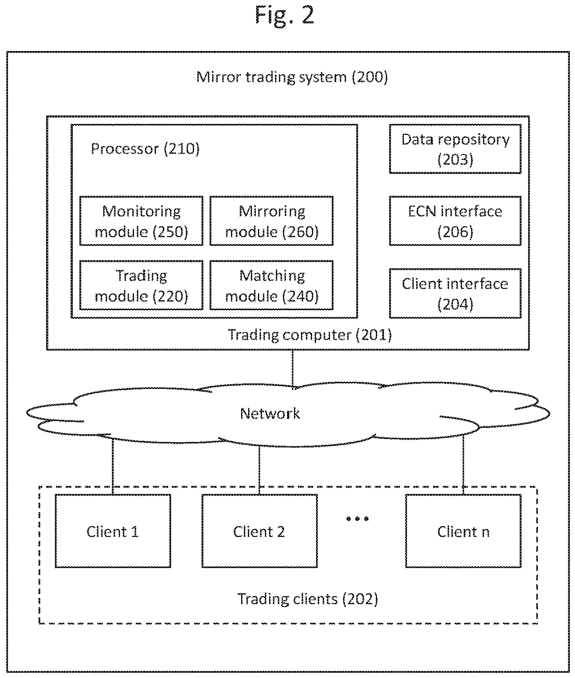

**Fig. 2** illustrates a generalized functional diagram of a mirror trading system in accordance with certain embodiments of the presently disclosed subject matter. In certain embodiments, mirror trading system (200) can comprise a trading computer (201) (e.g. a trading server) operatively coupled to one or more trading clients (202) over a data communication network, such as a wired network, wireless network, or combined wired and wireless network (including, e.g. a cloud environment such as the Internet). Trading computer (201) can comprise or be coupled to one or more processors (210). The one or more processors (210) can be, e.g., a processing unit, a microprocessor, a microcontroller or any other computing device or module, including multiple and/or parallel and/or distributed processing units, which are adapted to independently or cooperatively process data for controlling relevant computer (201) resources and for enabling operations related to computer (201) resources.

In certain embodiments, computer (201) can further comprise a client interface (204) (e.g. a network interface card or any other suitable device) for enabling computer (201) components to communicate with clients (202). Client interface (204) may include a network interface card or other suitable device for enabling communication with client devices. In certain embodiments, client interface (204) can be configured to receive trading instructions from one or more clients (202), including, e.g., criteria for mirroring trading positions of one or more copied traders and/or one or more liquidation triggers, etc. In certain embodiments, client interface (204) can be configured to transfer the received trading instructions to other components of the system, including, e.g., processor (210) and/or data repository (203).

In certain embodiments, computer (201) can further comprise an exchange interface (206) for enabling computer (201) components to communicate trading orders to trading exchanges or ECNs in those embodiments where computer (201) communicates with a trading exchange or ECN.

In certain embodiments, computer (201) can comprise (or be otherwise associated with) one or more memories, such as the illustrated data repository (203), configured to store data including, inter alia, data related to a trading network comprising a plurality of traders. By way of non-limiting example, data repository (203) can be configured to store data informative of traders and their respective trading accounts and portfolios (and the contents thereof), and trading instructions received from a trader. In certain embodiments, data repository (203) can store data indicative of objects (including, e.g., trading positions in respect of financial instruments), and other values (including, e.g., thresholds, liquidation triggers, etc.), as will further be detailed below.

In certain embodiments, the processor (210) can include (or be otherwise associated with) one or more of the following modules: trading module (220), matching module (240), monitoring module (250), and mirroring module (260).

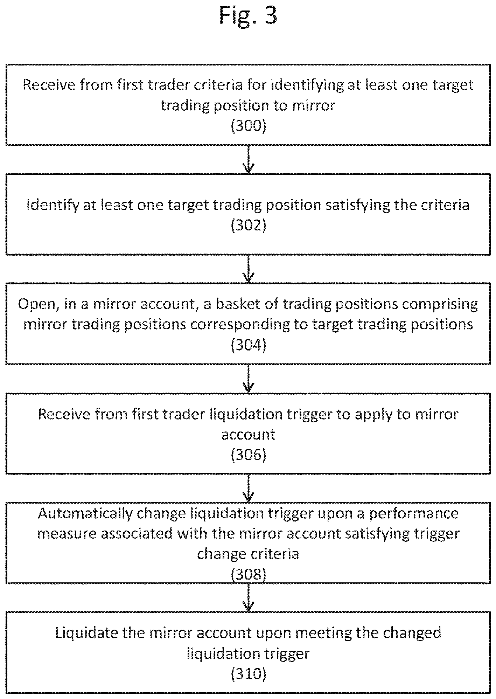

In certain embodiments, the trading module (220) can be configured to obtain (e.g. from one or more other components of system (200)) data indicative of one or more trading orders to generate and execute, or optionally to transfer to an exchange or ECN for execution (e.g. via exchange interface (206)). In certain embodiments, the trading module (220) can be configured to automatically open and/or close one or more trading positions, as further detailed below with reference to **Fig. 3,** illustrating a generalized flow chart of a sequence of operations carried out for facilitating mirror trading of financial instruments in a trading network. In certain embodiments the trading module (220) can generate one or more trading orders for automatically liquidating a basket of trading positions, as further detailed below with reference to **Fig. 3,** illustrating a generalized flow chart of a sequence of operations carried out for facilitating mirror trading of financial instruments in a trading network.

In certain embodiments, the matching module (240) can be configured to obtain (e.g. from one or more other components of system (200)) data indicative of criteria received from a copying trader for identifying a target trading position of a copied trader to mirror for the copying trader, and identifying a target trading position satisfying the criteria, as will further be detailed with reference to **Fig. 3,** illustrating a generalized flow chart of a sequence of operations carried out for facilitating mirror trading of financial instruments in a trading network.

In certain embodiments, the mirroring module (260) can be configured to obtain (e.g. from one or more other components of system (200)) data indicative of a target trading position, and to generate data indicative of a mirror trading position that corresponds to the target trading position.

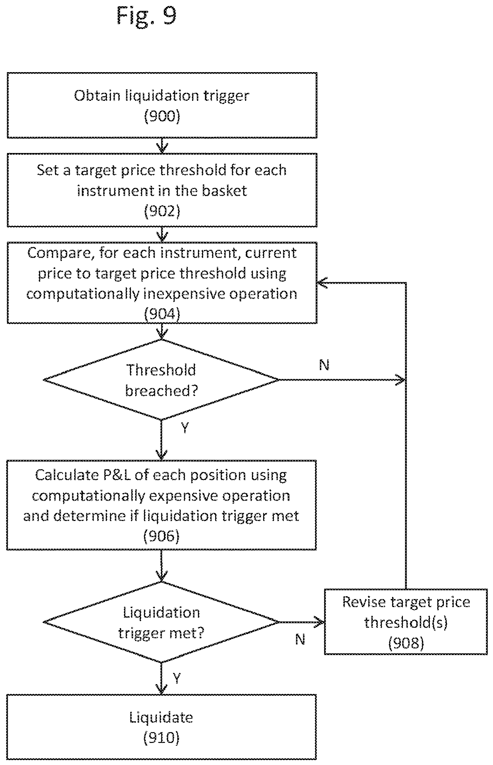

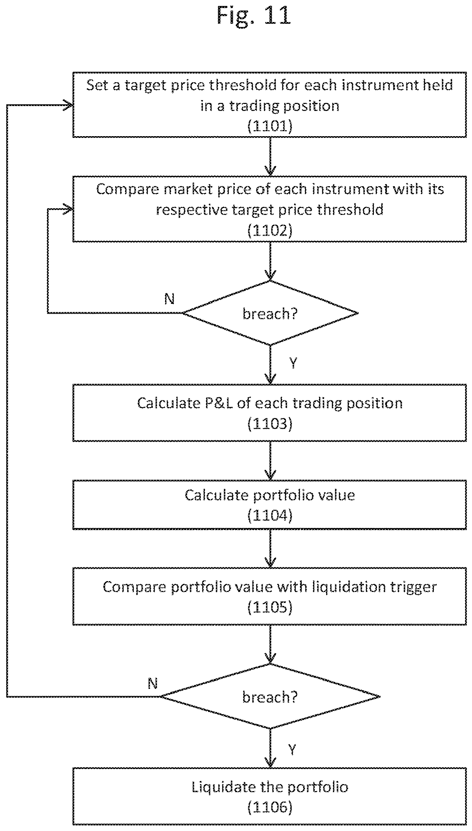

In certain embodiments, the monitoring module (250) can be configured to monitor a trading portfolio, e.g. a mirror trading portfolio, and to generate data indicative of a performance measure of the trading portfolio. In certain embodiments, the monitoring module (250) can be configured to compare a given performance measure to a given liquidation trigger and/or to change the liquidation trigger. In certain embodiments, the monitoring module (250) can set, revise and/or compare one or more target price thresholds, as will further be detailed below with reference to **Figs. 9** and **11.**

Having described the system, attention is now drawn to **Fig. 3,** illustrating a generalized flow chart of an example of a sequence of operations carried out for facilitating mirror trading of financial instruments in a trading network comprising a plurality of traders, in accordance with certain embodiments of the presently disclosed subject matter.

Referring now to **Fig. 3,** according to some examples of the presently disclosed subject matter, system (200) can be configured to facilitate mirror trading of financial instruments in a trading network by automatically liquidating a mirror portfolio in response to a changed liquidation trigger being met. System (200) can receive (300) from a copying trader criteria for identifying at least one target trading position opened by at least one copied trader, in respect of at least one financial instrument, to mirror for the copying trader in a mirror portfolio associated with the copying trader. For example, the received criteria can be received at client interface (204) and transferred to data repository (203). System (200) can then obtain the criteria from data repository (203).

In certain embodiments, the criteria for identifying at least one target trading position opened by at least one copied trader can include criteria for identifying at least two target trading positions opened by a respective at least two different copied traders, each in respect of at least one financial instrument, to mirror for the copying trader.

In certain embodiments, the criteria can include parameters for opening one or more regular (i.e. non-mirror) trading positions for the copied trader in the mirror portfolio, using trading funds allotted for that purpose. For example, the parameters can include such things as a description of a financial instrument, a position type, an investment amount, a leverage amount, etc.

In certain embodiments, the criteria can include information sufficient to discern the copied trader(s) from other traders in the trading network. For example, the criteria can be a username (or other identifying details) of a given trader that identifies the given trader in the trading network (e.g. "guru4"). In certain embodiments, the criteria can also include other criteria for identifying target trading positions to mirror. By way of non-limiting example, in certain embodiments, the copying trader may want to mirror all trading positions of trader "guru2", or all trading positions of traders "guru2" and "guru4", or certain trading positions of "guru2", or certain trading positions of "guru2" and all trading positions of "guru4", etc. Therefore, the criteria can include information sufficient to discern specific target trading positions, e.g. specific instruments(s) (e.g. "shares of XYZ Corp.", "oil", etc.), specific instrument type(s) (e.g. stocks, options, commodities, currencies, etc.), specific position type(s) (e.g. buys, short sells, etc.), specific timeframes (including, e.g., specific date(s) or date range(s) when the target trading position is opened, etc.) and the like.

In certain embodiments, the copying trader may want to mirror trading positions of the copied trader(s) already opened by the copied trader (i.e. in the past). In certain embodiments, the copying trader may want to mirror only trading positions not yet opened by the copied trader(s) (i.e. future trading positions). In certain embodiments, the copying trader may want to mirror past and future trading positions of a given one or more copied trader. Therefore, in certain embodiments, the criteria obtained from the copying trader can also include information indicative of whether the target trading positions include only trading positions already opened by the copied trader(s), future trading positions not yet opened by the copied trader(s), or both. By way of non-limiting example, copying trader Andre can input to the mirror trading system instructions to mirror all future trades of Bob in Oil and Gold. To that end, Andre transfers $500 to a mirror trading portfolio for mirroring Bob's future Oil and Gold trades.

In certain embodiments, system (200) can be configured (e.g. using matching module (240)) to identify (302) at least one target trading position opened by at least one copied trader that satisfies the criteria. For example, the mirror trading system can detect that Bob opened two trading positions, one in Oil and the other in Gold. Bob used 20% of his trading funds to buy Oil, and a further 10% to sell short Gold. Based on the criteria received from Andre, the mirror trading system can identify Bob's trading positions in Oil and Gold as target trading positions to mirror for Andre. As used herein, a trading position opened "by" a given trader includes a trading position opened on behalf of the given trader, for example a trading position opened for the given trader automatically by system (200) in accordance with trading instructions (including, e.g. mirror trading instructions) received from the given trader.

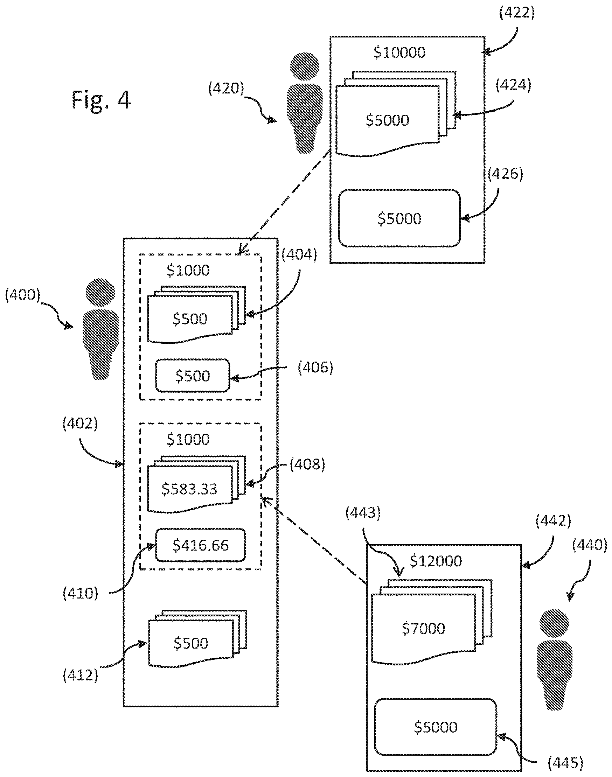

In certain embodiments, system (200) can be configured (e.g. using trading module (220)) to open (304), in a mirror trading portfolio associated with the copying trader, a basket of trading positions comprising one or more mirror trading positions, each mirror position corresponding to an identified target trading position, as will further be detailed with reference to **Fig. 4,** schematically illustrating a basket of trading positions, in accordance with certain embodiments of the presently disclosed subject matter. For example, the mirror trading system can open, in Andre's mirror portfolio (using the $500 Andre transferred in the purpose) a basket of trading positions comprising a purchase in Oil using $100 (500 x 20%), and a short sale of Gold using $50 (500 x 10%), both positions mirrored from Bob using a proportional amount of trading funds.

In certain embodiments, prior to opening the one or more mirror positions, system (200) can be configured (e.g. using mirroring module (260)) to generate, for each identified target trading position, a corresponding mirror trading position to open for the copying trader, e.g. by calculating the proportional mirror trade based on the allotted funds, as detailed above. For example, the mirror trading system can calculate the amount of Andre's trading funds to be used in the Oil purchase and Gold sale.

In certain embodiments, the basket of trading positions can include one or more identified non-mirror trading positions in accordance with received trading instructions, as detailed above.

In certain embodiments, system (200) can receive (306) from the copying trader one or more liquidation triggers to apply to the mirror portfolio which, if met, results in system (200) automatically liquidating the mirror portfolio, by liquidating (i.e. closing) all trading positions in the basket of trading positions. For example, the received one or more liquidation triggers can be received at client interface (204) and transferred to data repository (203). System (200) can then obtain the one or more liquidation triggers from data repository (203).

By way of non-limiting example, a liquidation trigger can be met, e.g., upon the portfolio's value breaching a predetermined threshold value, or a change in the portfolio's value breaching a predetermined threshold change in value. In certain embodiments, the change in value can be, e.g., an absolute change in value (e.g. +$100, -$50, etc.) or a relative change in value, e.g. relative to an initial value, that being the value before the basket of trading positions were opened (e.g. +10%, -5%, etc.). In certain embodiments, a liquidation trigger can be met, e.g., upon the value of one or more trading positions in the basket of trading changing by a predetermined amount (including, e.g. a fixed amount or a relative (i.e. percentage) amount). In certain embodiments, the predetermined amount can be recalculated (e.g. in a similar manner to the initial calculation) if trading positions are closed (or new trading positions are opened).

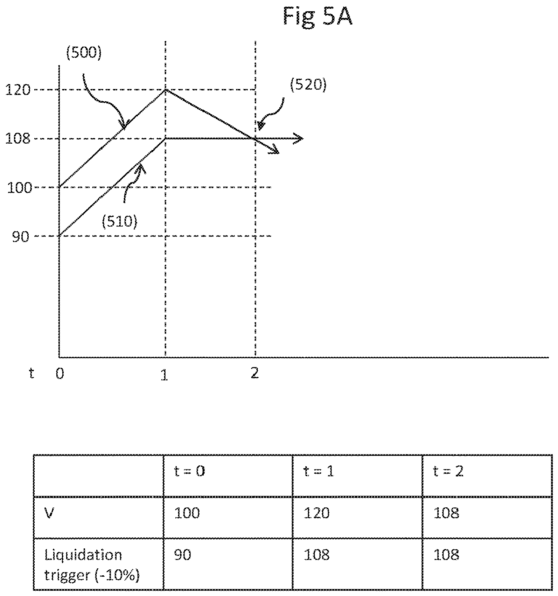

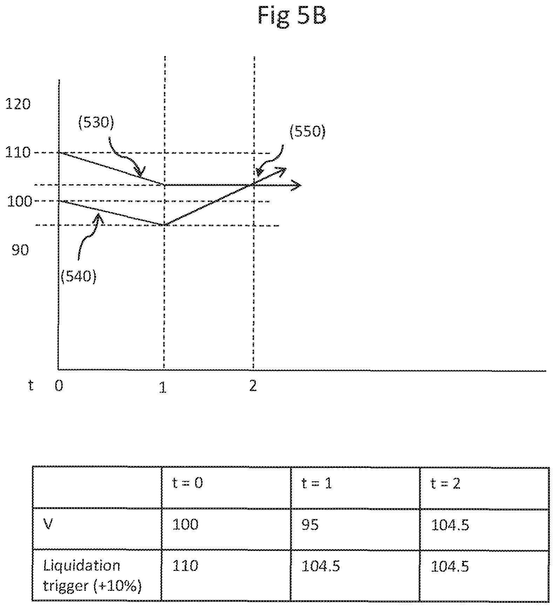

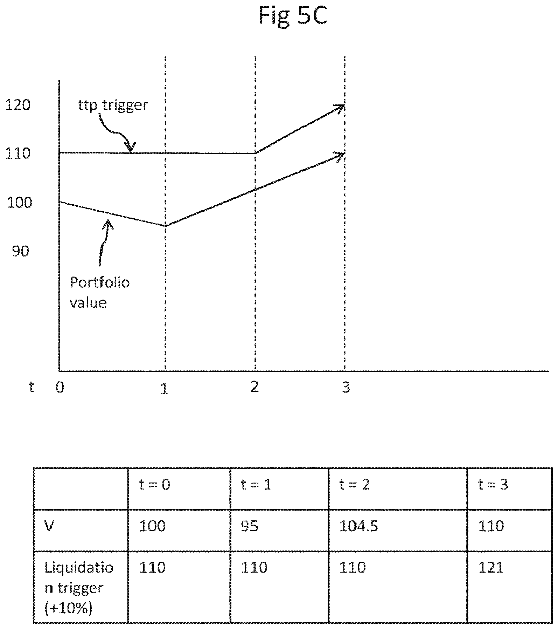

In certain embodiments, the liquidation trigger can be, e.g. a stop loss, a trailing stop loss, a take profit, or a trailing take profit trigger, as further detailed below with reference to **Figs. 5A** (stop loss) and **Fig. 5B** (take profit) and **Fig. 5C** (take profit). For example, Andre can input to the mirror trading system a trailing stop loss of 15% for the mirror portfolio, thereby instructing the mirror trading system to liquidate the mirror portfolio once he loses $75 (500 x 15%).

In certain embodiments, as will be further detailed below with reference to **Fig. 9** and **Fig. 11,** system (200) can set (e.g. using monitoring module (250)) one or more price target thresholds for one or more instruments held in the basket of trading positions, in accordance with the received one or more liquidation triggers.

In certain embodiments, system (200) can (e.g. using monitoring module (250)) monitor a performance measure indicative of performance of the mirror portfolio, e.g. a portfolio value, a change in the portfolio value (including, e.g., absolute or relative) from a prior portfolio value, such as the initial value, etc.

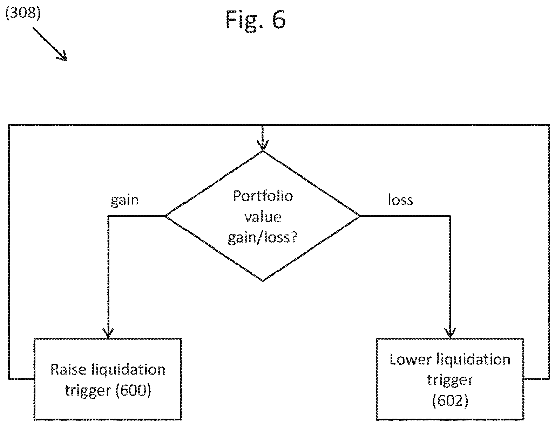

In certain embodiments, system (200) can (e.g. using monitoring module (250)) change (308) at least one liquidation trigger upon the performance measure of the mirror portfolio satisfying one or more trigger change criteria, as will further be detailed below with reference to **Fig. 6.** For example, Andre's mirror position in Oil goes up from $100 to $220, while his position in Gold goes down from $50 to $30. As a result, his portfolio gains $100 (120-20) and rises in value from $500 to $600. Accordingly, the mirror trading system can raise the trailing stop loss, e.g. to liquidate once he loses 15% of $600 ($90) or another amount, e.g., based on predetermined trigger change criteria.

In certain embodiments, as will be further detailed below with reference to **Fig. 9** and **Fig. 11,** system (200) can revise (e.g. using monitoring module (250)) one or more price target thresholds for one or more instruments held in the basket of trading positions, in accordance with the changed one or more liquidation triggers.

In certain embodiments, system (200) can (e.g. using trading module (220)) liquidate (310) the mirror portfolio upon the changed liquidation trigger being met, by liquidating the basket of trading positions. For example, in Andre's mirror portfolio Oil stays at $220, while Gold goes to $-60 (minus 60, being a short position), for a portfolio value of $510 (i.e. $350 (cash) + $220 (Oil) - $60 (Gold)). The changed liquidation trigger (being $510, as indicated above) is met, so the mirror trading system can liquidate the mirror portfolio by closing Andre's positions in Oil and Gold. In certain embodiments, system (200) can determine whether the changed liquidation trigger is met using a method for reducing the computational complexity required for the task, as will further be detailed below with reference to **Fig. 9** and **11.**

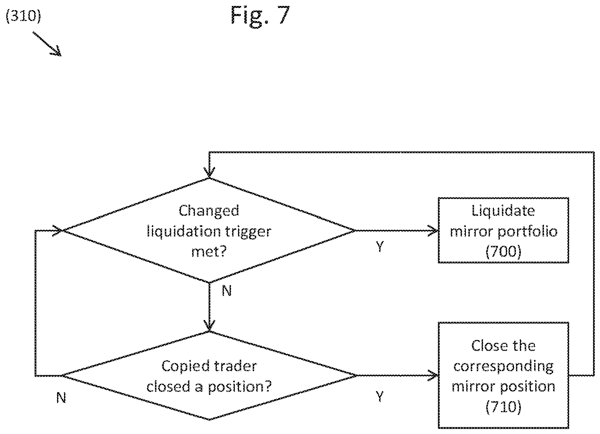

In certain embodiments whether a liquidation trigger is met or not met, system (200) can (e.g. using monitoring module (250)) continuously monitor one or more trading positions corresponding to a respective one or more mirror trading positions in the basket, and close a mirror trading position (e.g. without liquidating the basket) in response to detecting the corresponding trading position being closed, as will further be detailed with reference to **Fig. 7.** For example, had Andre's mirror portfolio instead risen to $700, and Bob closes his position in Oil, the mirror trading system can automatically close Andre's mirror position in Oil.

In certain embodiments, as will be further detailed below with reference to **Fig. 9** and **Fig. 11,** system (200) can revise (e.g. using monitoring module (250)) one or more price target thresholds for one or more instruments held in the basket of trading positions, in accordance with the received one or more liquidation triggers.

Referring now to **Fig. 4,** an example (non-limiting) of a mirror portfolio comprising a basket of trading positions is provided. **Fig. 4** schematically illustrates a basket of trading positions in a mirror trading portfolio in accordance with certain embodiments. Copying trader "A" (400) transfers $1000 from his regular portfolio to his mirror portfolio (402) to mirror trading positions (424) of copied trader "B" (420). Unbeknownst to trader A (400), trader B's (420) trading portfolio (422) has a portfolio value of $10,000 of which $5000 is invested in the target trading positions (424) which trader A wants to mirror, and $5000 held in cash (426). Since trader A has allocated $1000 for mirroring B's trading positions (424), the mirror trading system automatically opens, in A's mirror portfolio (402), a basket of mirror trading positions (404) corresponding to B's trading positions (424) using half of A's allotted trading funds for mirroring B, so that the 50/50 split between the funds invested in the trading position and the funds held in cash is maintained. The remainder of the allotted funds are held in cash (406) in A's mirror portfolio (402). In certain embodiments, the cash portion of the allotted funds can be "frozen" (i.e. unavailable for A to use on other trades), for reasons of margin maintenance, or to replicate copied trader's investment returns in the mirror account, etc. It should be noted that in certain embodiments, the copying trader can choose to mirror only future trading positions opened by trader B, in which case a mirror trading position can be opened for the copying trader in the same proportion. For example, assume trader A chooses to mirror future trades made by trader B in OIL, and has allotted $10,000 for that purpose. Trader B has an existing portfolio having a portfolio value of $100,000 (including cash). Trader B invests $4000 in a trading position in OIL. The system can automatically open a mirror position in OIL for trader A using $400 of trader A's allotted $10,000 (100,000/4000 = 10000/400).

Optionally, trader A (400) can concurrently mirror trader "C" (440) in A's mirror trading portfolio (402) using specifically allotted mirror trading funds different from the mirror trading funds allotted to B. In **Fig. 4,** trader A (400) now transfers an additional $1000 for mirroring trades of trader C (440). Trader C's (440) trading portfolio (442) has a portfolio value of $12,000 of which $7000 is invested in the trading positions (443) which trader A wants to mirror. The remaining $5000 is held by trader C (440) in cash (445). Since trader A has allocated $1000 for mirroring C's trading positions (443), the mirror trading system automatically adds to A's basket of trading positions (404) mirror trading positions (408) corresponding to C's trading positions (443) using 7/12 of A's allotted $1000 for mirroring C (=$583.33). The remainder is held in cash (410) in A's mirror portfolio (402), so that the split between the funds invested in the trading position and the funds held in cash is maintained. A's basket of trading positions now consists of mirror positions (404) and mirror positions (408) As noted above, the same proportion can also be maintained in the event that the copying trader chooses to mirror only future trading position

In certain embodiments, as detailed above, system (200) can enable trader A (400) to open one or more regular (i.e. non-mirror) trading positions (412) in his mirror portfolio (402) using trading funds allotted for that purpose, and to add the non-mirror trading position(s) to A's basket of trading positions, so that A's basket now comprises trading positions (404), (408) and (412). In addition to A's basket of trading positions, A's mirror portfolio (402) also contains cash components (406) and (410).

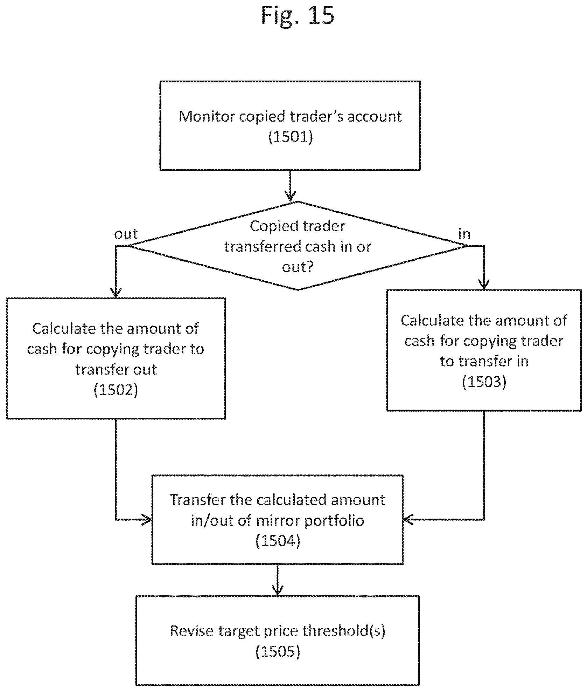

In certain embodiments, in the event that trader B and/or trader C withdraw some of their cash, or deposit additional cash, the mirror trading system can facilitate a corresponding change to be made to A's cash position, as will be further detailed below with reference to **Fig. 15.**

In order to better understand the disclosed subject matter, there is now provided further details of the liquidation trigger, in accordance with certain embodiments. As detailed above, in certain embodiments, the liquidation trigger can be, e.g. a stop loss, a trailing stop loss, a take profit, or a trailing take profit trigger. Stop loss and take profit triggers are known in the art. A stop loss trigger can be set at a price below (or above, e.g., in the case of short sale) the current price of an instrument and is designed to limit an investor's loss on a position by automatically closing the position when the price reaches the trigger price. A take profit trigger can be set at a price above (or below, e.g., in the case of a short sale) the current price and is designed to automatically lock in a profit when the price reaches the trigger price.

Trailing stop loss and trailing take profit triggers are known in the art, and are, respectively, a stop loss and take profit in which the trigger price (i.e. the price at which to close the position) automatically adjusts according to the price of the instrument. For example, the trigger price can trail (in the case of a trailing stop loss) or lead (in the case of a trailing take profit) the current price (e.g. by a fixed percentage or fixed dollar amount) so long as the current price is moving in the right direction (i.e. the direction which makes a trading profit). A trailing stop loss can be used, for example to protect gains by enabling a trade to remain open and continue to profit as long as the price is moving in the right direction, while automatically closing the trade if the price changes direction by a specified percentage or dollar amount. A trailing take profit can be used, for example, to set a closing price higher than the current price (in the case of a long position, or a lower price in the case of a short position) which is continuously adjusted upwards (in the case of with a long position, or downward in the case of a short position) in lockstep with the current price of the instrument (as illustrated in **Fig. 5C** below). This implementation of the trailing take profit can be used to lock in gains, e.g. in the event of a sudden price movement. A trailing take profit can also be used, for example, to automatically lower the trader's expected gain on the trade in the event the price moves in the wrong direction before reversing and moving in the right direction (as illustrated in **Fig. 5B** below).

**Fig. 5A** illustrates a non-limiting example of a trailing stop loss applied to a mirror portfolio comprising a basket of trading positions, where the trader has specified a trailing stop loss of-10% (i.e. trigger is activated when the portfolio value falls 10%). At time t = 0, the mirror portfolio value (500) is $100. Therefore, the trailing stop loss trigger (510) is automatically set at an initial level of $90 (100 - 10%). At time t =1, the portfolio value (500) has risen to $120 for a gain of 20%. Therefore, the trailing stop loss is automatically raised 20% from $90 to $108 so that the trailing stop loss remains 10% lower than the portfolio value. At time t = 2, the portfolio value (520) falls to $108, at which point the mirror trading system automatically liquidates the portfolio for breaching the changed liquidation trigger. It should be noted that in some cases the trailing stop loss can be specified in absolute dollar value loss instead of a percentage loss. For example, in the above scenario the trader can specify a trailing stop loss of -$10 (corresponding to a portfolio value of $90). At t = 1, when the portfolio value has reached $120, the trailing stop loss can be automatically raised to $110 ($120 - $10), triggering liquidation as soon as the portfolio value falls to $110.

**Fig. 5B** illustrates a non-limiting example of a trailing take profit applied to a mirror portfolio comprising a basket of trading positions and optionally cash, where the trader has specified a trailing take profit of+10% (i.e. trigger is activated when the portfolio value rises 10%). In this example, the trailing take profit is lowered when the value of the mirror portfolio declines in value. At time t = 0, the mirror portfolio value (530) is $100. Therefore, the trailing take profit (540) is automatically set at an initial level of $110 (100 + 10%). At time t =1, the portfolio value (530) falls to $95 for a loss of 5%. Therefore, the trailing take profit is automatically lowered from $110 to $104.5 (110 - 5%) so that the trailing take profit remains 10% higher than the portfolio value. At time t = 2, the portfolio value (550) rises to $104.5, at which point the mirror trading system automatically liquidates the portfolio for breaching the changed liquidation trigger. Again it should be noted that in some cases the trailing take profit can be specified in absolute dollar value gain instead of a percentage gain. For example, in the above scenario the trader can specify a trailing take profit of +$10 (corresponding to a portfolio value of $110). At t = 1, when the portfolio value is $95, the trailing take profit can be automatically lowered to $105 ($95 + $10), triggering liquidation as soon as the portfolio value reaches $105.

**Fig. 5C** illustrates a second example of a trailing take profit using the same initial condition as in Fig. 5B. In this example, the trailing take profit trigger is only raised and not lowered. At time t = 1, when the portfolio value has fallen to $95 for a loss of 5%, the trailing take profit remains unchanged at $110. At time t =2, when the portfolio value rises to $104.5, the portfolio is not liquidated since the trailing take profit of $110 has not been met. At time t = 3, the portfolio value rises to $110, causing the trailing take profit to rise to $121 ($110 + 10%). It should be noted that in the example illustrated in **Fig. 5C,** the trailing take profit order is only executed in the event of a sudden jump in price to at or above the trigger price.

It should be noted that in certain embodiments, if the trader inputs a liquidation trigger as a relative value (i.e. a percentage), the system can automatically convert the relative value to a fixed value for comparing to the portfolio value. In some cases, the trader can input the liquidation trigger as a fixed value (e.g. $100, $90, 25 pips, etc.). In certain embodiments, the liquidation trigger can be automatically changed such that the difference between the portfolio value and the liquidation trigger (either in terms of percent or fixed value) remains constant based on the relative or fixed difference. By way of non-limiting example of a fixed value trigger change, if the portfolio value is initially $100 and a liquidation trigger is input at $90 (or, e.g., -$10), and thereafter the portfolio value rises to $120, the system can automatically change the liquidation trigger to $110, e.g. in the case of a trailing stop loss liquidation trigger. By way of a further non-limiting example, if the portfolio value is initially $100 and a liquidation trigger is input as -10%, the system can assign a fixed value liquidation trigger of -$10, being -10% of the current portfolio value. Thereafter, if the portfolio value rises to $120, the system can automatically change the liquidation trigger to $110 ($120-$10) in keeping with the system-assigned fixed value liquidation trigger. It is to be noted that there are many other possibilities for liquidation triggers, and the invention is not bound by the examples of fixed value triggers and relative value triggers provided above.

**Fig. 6** illustrates a generalized flow chart of changing a liquidation trigger in accordance with certain embodiments. System (200) can (e.g. using monitoring module (250)), determine (including, e.g. repeatingly) a gain or a loss in performance measure of the mirror portfolio comprising a basket of trading positions. In certain embodiments, upon the system determining a gain in the performance measure of at least a predetermined amount, the system can automatically raise the liquidation trigger (600). In certain embodiments, upon the system determining a loss in the performance measure of at least a predetermined amount, the system can automatically lower the liquidation trigger (602). It should be noted that in certain embodiments, the system can also lower the liquidation trigger in response to a predetermined gain in the performance measure, and raise the liquidation trigger in response to a loss in the performance measure.

In certain embodiments, the system can change the liquidation trigger in accordance with predetermined trigger change criteria, as will be further detailed. For example, the trigger change criteria can specify one or more predetermined rules for changing the liquidation trigger. For example, the trigger change criteria can specify that the liquidation trigger is to be changed in predetermined increments (e.g. $1, $5, etc.), in a predetermined direction (e.g. increase only, decrease only, increase and/or decrease), in response to specific performance measure landmarks (e.g. $10 gain, 5% loss, etc.) and the like. In certain embodiments, the rules can be predetermined by the copying trader. In certain embodiments the rules can be predetermined by the system. In certain embodiments, the system (200) can automatically raise the liquidation trigger in response to determining (e.g. using monitoring module (250)) a mirror portfolio value increase of a predetermined threshold.

Some non-limiting examples of changing the liquidation trigger in accordance with trigger change criteria will now be provided. As a first example, an initial mirror portfolio value is $100, with an initial liquidation trigger set at a loss of 10%, corresponding to value of $90. The trigger change criteria can specify, inter alia, that the liquidation trigger is to be raised upon the mirror portfolio value breaching a predetermined threshold of $110, and is to be raised in equal proportion to the gain in the portfolio value. The mirror portfolio performs well and its value increases to $110 (+10%), breaching the trigger change threshold. In response, the liquidation trigger is raising from $90 to $99 (+10%).

As a second example, the initial mirror portfolio value is $100, with an initial liquidation trigger set at 10% gain corresponding to a value of $110. The trigger change criteria can specify, inter alia, that the liquidation trigger is to be lowered upon the mirror portfolio value breaching a predetermined threshold of $95, and lowered in equal proportion to the decline in the portfolio value. The mirror portfolio performs poorly and its value decreases to $95 (-5%), breaching the trigger change threshold. In response, the liquidation trigger is lowered from $110 to $104.5 (-5%).

In certain embodiments, as detailed above, system (200) can repeatingly change the liquidation trigger upon satisfying one or more trigger change criteria. For example, the liquidation trigger can be automatically changed by initially either raising or lowering the liquidation trigger, and subsequently changed again by either raising or lowering the liquidation trigger. In certain embodiments, the trigger change criteria which must be met for the first liquidation trigger change can be the same or different trigger change criteria which must be met for the subsequent liquidation trigger change. By way of non-limiting example, the initial mirror portfolio value is $100. The initial liquidation trigger is set for 10% loss in value corresponding to a value of $90. The mirror portfolio performs well and its value increases to $110, satisfying a first trigger change criteria, and the system raises the liquidation trigger from $90 to $99 (+10%). The portfolio value then performs poorly and its value decreases from $110 to $105 (~ -4.5%), satisfying a second trigger change criteria and the system lowers the liquidation trigger from $99 to $94.50 (~ -4.5%).

In certain embodiments, as will be further detailed below with reference to **Fig. 9** and **Fig. 11,** system (200) can revise (e.g. using monitoring module (250)) one or more price target thresholds for one or more instruments held in the basket of trading positions, in accordance with the changed liquidation trigger.

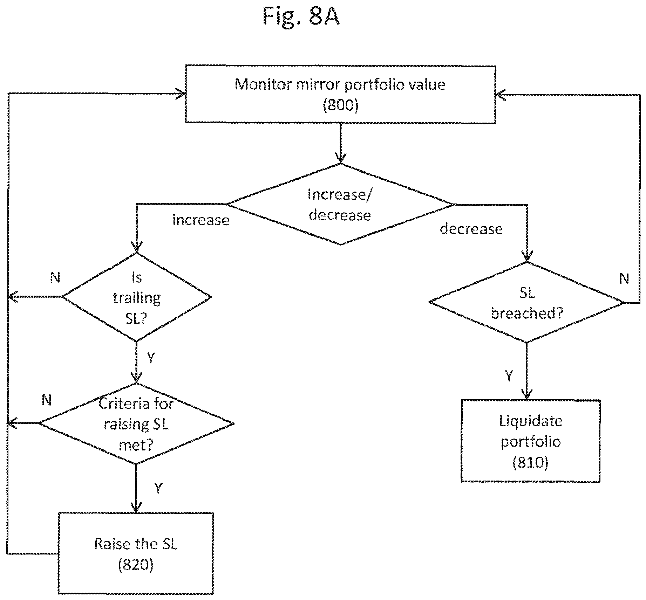

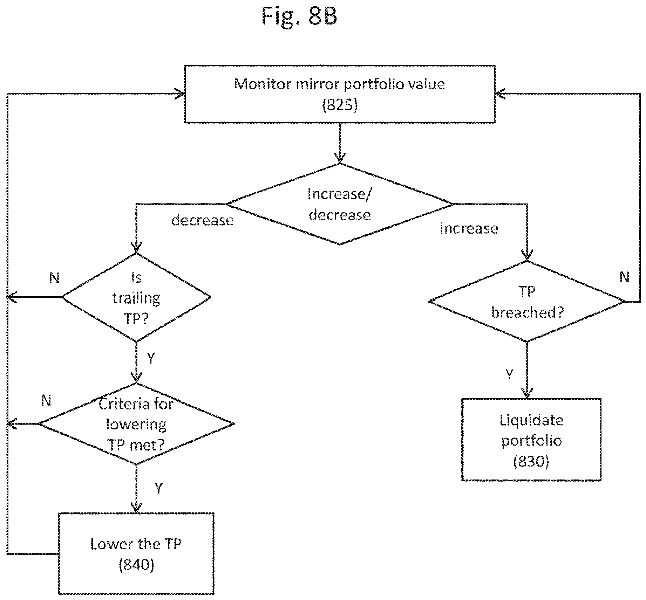

There is now provided further details of liquidating (310) the portfolio, in accordance with certain embodiments. Reference is made to **Fig. 7,** illustrating a generalized flow chart of monitoring a basket of trading positions and liquidating the basket or closing a position, in accordance with certain embodiments. In certain embodiments, system (200) can (e.g. using monitoring module (250)) determine, repeatedly, if a liquidation trigger in respect of a mirror portfolio is met (including a changed liquidation trigger), as will further be detailed with reference to **Figs. 9** and **11.** Upon the system determining that a liquidation trigger is met, the system can further be configured (e.g. using trading module (220)) to liquidate the mirror portfolio (700), e.g. as detailed below with reference to **Fig. 8A** (detailing a stop loss trigger) and **Fig. 8B** (detailing a take profit trigger). Upon determining that no liquidation triggers are met, the system can further be configured (e.g. using monitoring module (250)) to determine if a trading position corresponding to a mirror trading position in the basket of trading positions was closed (e.g. by the copied trader), in which case the system can automatically close the corresponding mirror trading position (710). It is to be noted that monitoring module (250) can also be configured to identify one or more new target trading positions to mirror for the copying trader in the mirror portfolio, and add one or more new mirror trading positions to the basket of trading positions.

Referring now to **Figs. 8A-8B,** there is provided further details of liquidation in the case of a stop loss trigger and a take profit trigger. **Fig. 8A** illustrates a generalized flow chart of monitoring a mirror portfolio value in the case of a stop loss liquidation trigger, and liquidating the mirror portfolio or changing the liquidation trigger, in accordance with certain embodiments. System (200) can be configured (e.g. using monitoring module (250)) to monitor (800) the mirror portfolio value, as will further be detailed below with reference to **Fig. 9.** Upon determining a decrease in portfolio value, system (200) determines whether the stop loss liquidation trigger is breached. If the stop loss liquidation trigger is breached, the system automatically liquidates (810) the mirror portfolio, otherwise the system continues monitoring the portfolio value. Upon determining an increase in portfolio value, the system determines, in the case that the stop loss trigger is a trailing stop loss trigger, if the criteria for raising the liquidation trigger is met, in which case the system automatically raises (820) the stop loss liquidation trigger. Otherwise, if the stop loss trigger is not a trailing stop loss trigger or the trigger change criteria have not been met, the system continues monitoring the portfolio value.

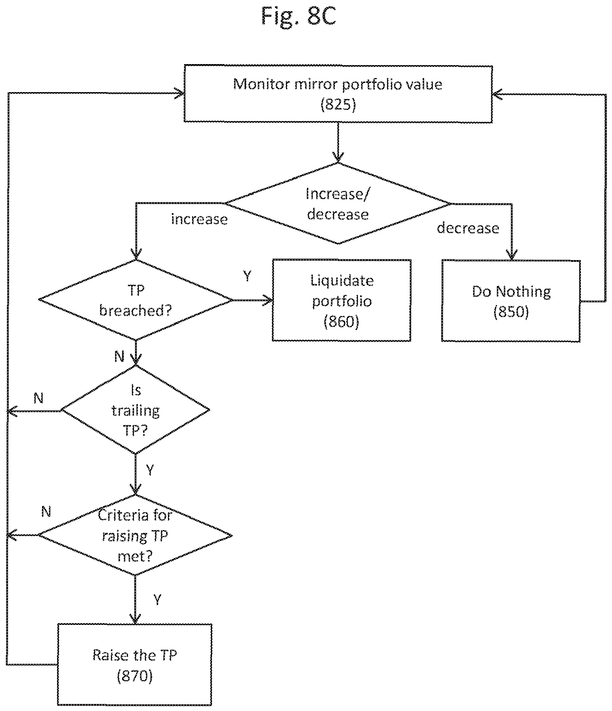

**Fig. 8B** illustrates a generalized flow chart of monitoring a mirror portfolio value in the case of a take profit liquidation trigger and liquidating the mirror portfolio or changing the liquidation trigger, in accordance with certain embodiments. System (200) can be configured (e.g. using monitoring module (250)) to monitor (825) the mirror portfolio value, as will further be detailed below with reference to **Fig. 9** and **11.** Upon determining an increase in portfolio value, system (200) further determines whether the take profit liquidation trigger is breached. If the take profit liquidation trigger is breached, the system automatically liquidates (830) the mirror portfolio, otherwise the system continues monitoring the portfolio value. Upon determining a decrease in portfolio value, the system determines, if the take profit trigger is a trailing take profit trigger, if the criteria for lowering the liquidation trigger is met, in which case the system automatically lowers (840) the take profit liquidation trigger. Otherwise, the system continues monitoring the portfolio value. It is to be noted that in the example provided in **Fig. 8B,** is demonstrative of a trailing take profit trigger that is lowered upon the portfolio value declining. However, as noted above with respect to **Fig. 5C,** in some cases the trailing take profit is raised when the portfolio value increases and is not lowered when the portfolio value declines. In such a case, the liquidation trigger can be raised upon the system determining an increase in portfolio value, and kept unchanged upon the system determining a decrease in portfolio value. This variant is illustrated in **Fig. 8C,** in which if the system determines that the mirror portfolio value has decreased, no action is taken (850). If the system determines that the value increased, if the take profit trigger is breached, the portfolio is liquidated (860). If the take profit trigger is not breached, the system checks whether the take profit is a trailing take profit trigger, and if so, whether the criteria for raising the trigger are met, in which case the trigger is raised (870).

In certain embodiments, system (200) can (e.g. using monitoring module (250) determine if a liquidation trigger is breached in respect of a portfolio of trading positions while reducing the computationally complexity ordinarily required for the task, as will be detailed with reference to **Fig. 9,** illustrating a generalized flow chart of determining if a liquidation trigger is breached, in accordance with certain embodiments. Referring now to **Fig. 9,** in certain embodiments, system (200) can (e.g. using monitoring module (250)) obtain (900) (e.g. from a memory) a liquidation trigger (including, e.g. a changed liquidation trigger) in respect of a mirror portfolio comprising a basket of trading positions. System (200) can (e.g. using monitoring module (250)) set (902) a target price threshold for each instrument held (i.e. traded) in a trading position in the basket of trading positions (examples for setting target price thresholds are detailed below). System (200) can (e.g. using monitoring module (250)) compare (904), for each instrument in the basket, the given instrument's price with its respective target price threshold, thereby performing a computationally inexpensive operation as will further be detailed below. In certain embodiments, the comparing (904) is performed for a given instrument each time the current price of the given instrument is updated (which can be multiple times per second), thus the computationally inexpensive operation is performed repetitively.

Upon determining that a target price threshold in respect of any instrument is breached, system (200) can (e.g. using monitoring module (250)) calculate (906) the mirror portfolio value using a series of computationally expensive operations, as will be detailed below, and thereafter determine if the mirror portfolio value breaches the liquidation trigger.

If, upon comparing (904) each instrument's current price with its respective target price threshold, the system determines that no target price threshold is breached, system (200) can skip the computationally expensive operations required to calculating the mirror portfolio value (since the liquidation trigger will not be breached) and can revert to comparing (904) each time an instrument price is updated.

Upon determining that the mirror portfolio value breaches the liquidation trigger, system (200) can (e.g. using trading module (220)) liquidate (908) the mirror portfolio. However, if upon calculating (906) the portfolio value using the series of computationally expensive operations, system (200) determines that the liquidation trigger is not breached, system (200) can revise (908) one or more target price thresholds such that no target price thresholds are breached in respect of the current prices of the respective instruments (examples for setting target price thresholds are detailed below), and revert to comparing (904) each time an instrument price is updated.

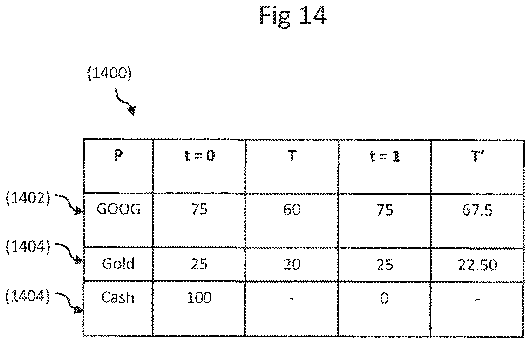

In certain embodiments, system (200) can also revise one or more target price thresholds in response to other events, e.g. a change in the cash component of the portfolio, as will be further detailed below with reference to **Figs. 14** and **15,** or a change in the liquidation trigger, or a new trading position opened or an existing trading position closed.

The following example (referred to hereafter as the "TPT Example") illustrates how target price thresholds can be set according to certain embodiments of the disclosed subject matter. Assume the mirror portfolio has a current value of $1000, of which $500 is held in cash and $500 is invested in the following three open trading positions:

1. Sell 100,000 Units of EURUSD (open rate is 1.1000)
2. Buy 500 units of AAPL (open rate is 100.00)
3. Sell 1000 units of OIL (open rate is 50)

Further assume that the trader has specified a stop loss liquidation trigger of 50% of the mirror portfolio value, i.e. liquidate the mirror portfolio upon the portfolio value breaching $500.

To calculate the target price thresholds of EURUSD, AAPL, and OIL, first calculate the value in USD of all open trading positions:

$$\text{Value of all open trades in USD} = 100{,}000 * 1.1 + 500*100 + 1000*50 = \$210{,}000 \text{ USD}$$

Next, assign each trading position a pro rata share of the total value, and multiply each position's pro rata share of the total by the liquidation value (i.e. the portfolio value which is required to liquidate the portfolio) to arrive at the position value which would require the portfolio to be liquidated (assuming no change in the other trading positions): The EURUSD position is assigned 110,000 / 210000 = 0.5238. Multiple 0.5238 * $500 (the Stop Loss % * Value of the Mirror account in USD) = $261.90

Next, calculate the rate change in EURUSD which is required for the trading position to lose $261.90. The result is a rate change to approximately 1.10262. That is, for the EURUSD position to lose $261.90, the EURUSD rate should reach to about 1.10262. Therefore, the target price threshold for EURUSD is set to 1.10262.

The AAPL position is assigned 50,000 / 210000 = 0.2380. Multiplying by $500 (the Stop Loss % * Value of the Mirror account in USD) yields $119. For the AAPL position to lose $119 requires a rate change in AAPL (from the current rate) to about $99.76. Therefore, the target price threshold for AAPL is set to $99.76.

The OIL position is assigned 50,000 / 210000 = 0.2380. Multiplying by $500 (the Stop Loss % * Value of the Mirror account in USD) yields $119. For the OIL position to lose $119 requires a rate change in OIL (from the current rate) to about $50.12. Therefore, the target price threshold for OIL is set to $50.12.

Another aspect of the presently disclosed subject matter relates to reducing the computational complexity required for a processor to perform repetitive processing of a plurality of objects in each of a plurality of repetitions, to determine if a certain condition is met in order to take an action, where the processing of the plurality of objects in a given repetition requires the processor to first process each object using a computationally expensive operation.

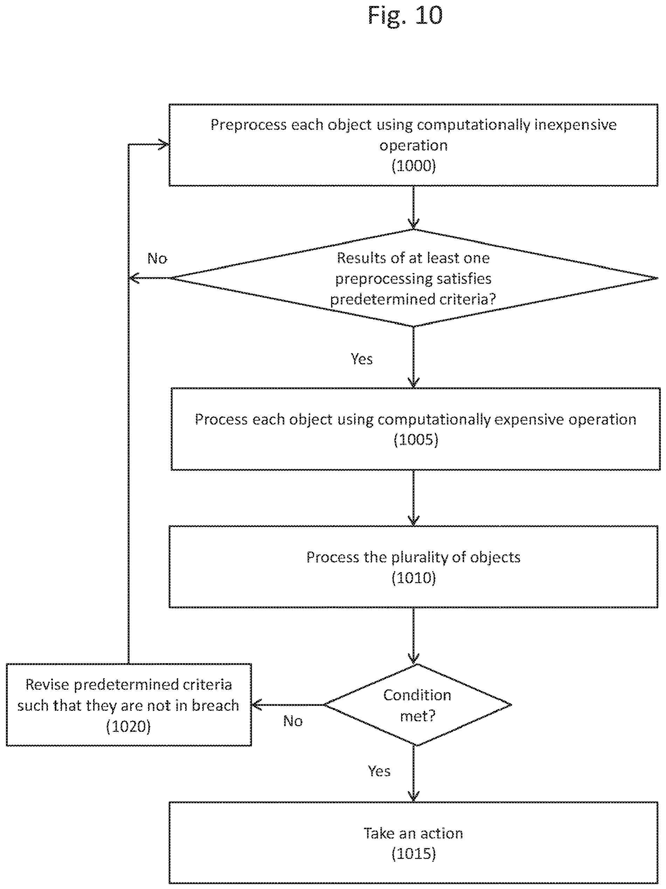

**Fig. 10** illustrates a generalized flow chart of reducing the computational complexity required for a processor to perform a task related to repetitively processing a plurality of objects in each repetition out of a plurality of repetitions and determining, if a condition is met in respect of the plurality of objects in any given repetition, to take an action, in accordance with certain embodiments.

In certain embodiments, system (200) can (e.g. using monitoring module (250)), in each repetition of the plurality of repetitions, prior to processing each object using the computationally expensive operation, pre-process (1000) each object using a computationally inexpensive operation, and can determine if the results of at least one preprocessing in respect of at least one object satisfies a predetermined criteria. In certain embodiments, each object in the plurality of objects can be obtained from a computerized memory (e.g. data repository (203)) prior to processing the object. In certain embodiments, processing an object using a computationally expensive operation can include, e.g, processing a trading position in respect of a financial instrument in order to calculate a position P&L associated with the trading position, as will further be detailed below with reference to **Fig. 11,** illustrating a generalized flow chart of reducing the computationally complexity required for a processor to determine if a mirror portfolio value breaches a liquidation trigger.

In certain embodiments, pre-processing an object using a computationally inexpensive operation can include, e.g., comparing, for a given trading position in respect of a given financial instrument, a current market price of the instrument to a target price threshold, as will further be detailed below with reference to **Fig. 11,** illustrating a generalized flow chart of reducing the computationally complexity required for a processor to calculate a mirror portfolio value.

In certain embodiments, only upon determining that the results of at least one preprocessing in respect of at least one object satisfies a predetermined criteria, system (200) can (e.g. using monitoring module (250)) thereafter process (1005), in the given repetition, each object using the computationally expensive operation. Otherwise, system (200) can continue to next repetition of preprocessing (1000) each object using the computationally inexpensive operation, thereby reducing the number of computationally expensive operations performed in one or more repetitions.

Upon having processed (1005) each object in the plurality of objects using the computationally expensive operation, system (200) can thereafter process (1010) the plurality of objects in order to determine if the condition for taking an action is met. Upon determining that the condition is met, system (200) can take the action (1015), and otherwise system (200) can avoid taking the action. In certain embodiments, processing the plurality of objects in order to determine if the condition is met can include, e.g. processing a plurality of trading positions in a portfolio to calculate a portfolio value (e.g. by summing the P&L of each trading position and adding the invested amount and cash, as detailed above) and thereafter determining if the portfolio value breaches a liquidation trigger, in which case the system can liquidate the portfolio.

In certain embodiments, if the condition for taking an action is not met, system (200) can (e.g. using monitoring module (250)) revise (1020) one or more of the predetermined criteria, e.g. based on a current state of one or more objects, such that no predetermined criteria will be satisfied in the next repetition (see the TPT Example detailed above for setting target price thresholds). In certain embodiments, revising one or more predetermined criteria can include, e.g. setting one or more target price thresholds in respect of one or more instruments, as further detailed below with reference to **Fig. 11,** illustrating a generalized flow chart of reducing the computationally complexity required for a processor to determine if a mirror portfolio value breaches a liquidation trigger.

As detailed above, by first comparing one or more current market prices of traded financial instruments in a portfolio with respective target price thresholds prior to calculating a portfolio value, one or more computationally expensive operations can thereby be saved, resulting in reduced computationally complexity.

For example, in certain embodiments, determining the P&L of any given trading position can be a computationally expensive operation requiring the processor to, e.g., determine an initial price of the financial instrument (e.g. the price at which the trading position was opened), determine a current price of the financial instrument, determine the number of units traded in the trading position, and multiply the difference between the current price and the initial price by the number of units to derive the P&L of the trading position. In addition, in certain types of trading positions, an additional step of converting the trade currency to the portfolio currency is applied. For example, for a trading position in EUR/JPY, the P&L of the position is first calculated as detailed above, and then a conversion rate is applied to convert the resulting P&L (in Japanese currency) to, e.g. U.S. dollars. For other types of trading positions, the P&L calculation can be even more complicated. For example, an outright "forward" position also requires the processor to obtain a current interest rate (updated 24/7) to calculate the P&L. Option positions also require obtaining interest rate updates and, additionally, standard deviation (i.e. volatility) in order to calculate the P&L of the position.

Based on the above, a simple trading position can require five (5) logical steps, as detailed above, which can require, in some cases, approximately 80 - 120 assembler instructions, or approximately 100 assembler instructions. In certain embodiments, a semi-sophisticated position can require eight (8) logical steps, or, in some cases, approximately 110 - 150 assembler instructions, or, in some cases, approximately 130 assembler instructions. In certain embodiments, a sophisticated position can require fifteen (15) logical steps, or, in some cases, approximately 230 - 270 assembler instructions, or, in some cases, approximately 250 assembler instructions. In certain embodiments, these instructions have to be executed for each price update of each instrument in each position of each trading portfolio in a trading system, such as the presently disclosed mirror trading system.

In certain embodiments, comparing a given instrument's current market price to a target price threshold can be a computationally inexpensive operation, requiring e.g., as little as three to five (3-5) assembler instructions.

There follows now a non-limiting example detailing how the disclosed method can be put into practice, e.g. in a trading system such as the mirror trading system disclosed in the present application, in order to reduce the computationally complexity required for a processor to determine if a liquidation trigger in respect of a portfolio comprising a basket of trading positions is breached.

**Fig. 11** illustrates a generalized flow chart of reducing the computationally complexity required for a processor to determine if a mirror portfolio value breaches a liquidation trigger, the mirror portfolio comprising a basket of trading positions, and to liquidate the portfolio if the value breaches a liquidation trigger, in accordance with certain embodiments. System (200) can (e.g. using monitoring module (250)) set (1100) a target price threshold for each of a plurality of instruments held in a respective plurality of trading positions comprised in the basket of trading positions (see the TPT Example detailed above for setting target price thresholds). System (200) can (e.g. using monitoring module (250)) compare (1102) each instrument's current market price with its respective target price threshold (a computationally inexpensive operation, as detailed above) and determine if the target price threshold in respect of any instrument is breached. Upon determining at least one breach, system (200) can (e.g. using monitoring module (250)) then calculate (1103) the P&L of each position in the basket (a computationally expensive operation), as detailed above, and thereafter can calculate (1104) the portfolio value, as detailed above. Otherwise, if no target price thresholds are breached, system (200) can avoid calculating the portfolio value (since the liquidation trigger will not be met), thereby reducing the computational complexity by not having to calculate each position's P&L each time the current price of the instrument held in the given position is updated.

Upon calculating the portfolio value, system (200) can (e.g. using monitoring module (250)) compare (1105) the portfolio value to one or more liquidation triggers and determine if a liquidation trigger is met. If a liquidation trigger is met, system (200) can (e.g. using trading module (220)) liquidate (1106) the portfolio. Otherwise, system (200) can set (1101) one or more target price thresholds (i.e. revised target price thresholds (see the TPT Example detailed above for setting target price thresholds)) and continue the comparing (1102), thereby reducing the need to calculate a portfolio value (a computationally expensive operation) in one or more repetitions (i.e. of receiving current price updates).

Having described the general process, there is now provided further details of setting target price thresholds. In certain embodiments, the system can set target price thresholds in respect of the given instruments based on various factors. By way of non-limiting example, one factor can be, e.g. the volatility of the instrument during a given time period (since it may desirous to set a target price threshold that is not likely to breached in the relatively near future, i.e. a few seconds, minutes or days as the case may be, in response to the "normal" price fluctuations of the given instrument). Another factor can be, e.g. the size of the position (number of units multiplied by unit price) relative to the size of the portfolio (see the TPT Example detailed above for setting target price thresholds), since the larger the given position in the portfolio, the more sensitive the portfolio value is to price fluctuation in the instrument associated with the given position.

In certain embodiments, target price thresholds can be set for each instrument held in a trading position in the basket of trading positions in a portfolio such that if all target price thresholds are breached simultaneously, the portfolio value will breach a liquidation trigger. For example, given a portfolio consisting of positions in instruments $i$, $i = 1... n$, target price thresholds $T_i$, can be set for instruments $i$ such that the following equation holds true:

$$\sum_{i=1}^{n}((T_i - Open\,Rates(i)) * U_i * conversion\,rate * direction\,sign) + Cash <= V_L$$

where *OpenRates(i)* is the price of i at which the trading position in i was opened, $U_i$ is the number of units of *i* held in a trading position, *conversion rate* is the value for converting the currency of the trading position to a common coin (e.g. USD), *direction sign* = 1 on long base asset deals and (-1) on short base asset deals, and $V_L$ is the portfolio value that will breach the liquidation trigger.

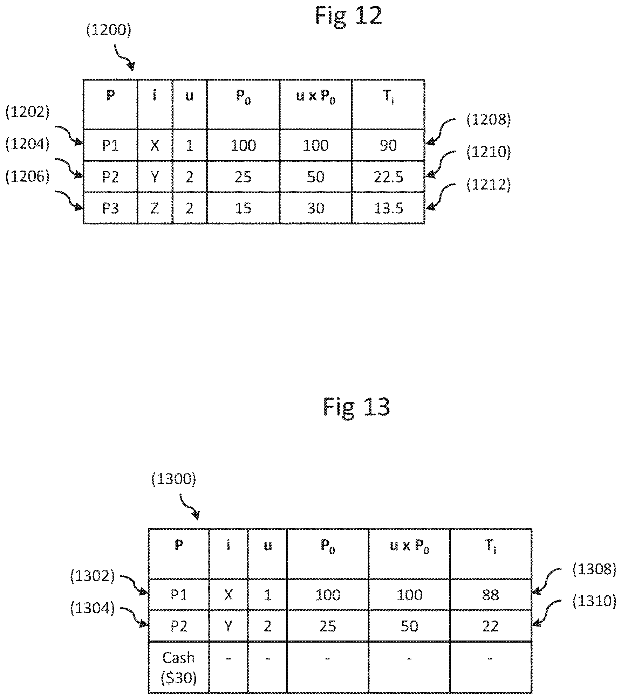

**Fig. 12** illustrates a first non-limiting example of setting target price thresholds, in accordance with certain embodiments of the presently disclosed subject matter. Table (1200) shows the composition of a mirror portfolio having investments totalling $180 and no cash. The investments consist of trading positions *P1, P2* and *P3,* as follows:

*P1* (1202) consisting of one (1) unit *(u)* of instrument *(i)* "X" at an initial price *($p_0$)* of $100 per unit;
*P2* (1204) consisting of two (2) units of "Y" at an initial price of $25 per unit; and
*P3* (1206) consisting of two (2) units of "Z" at an initial price of $15 per unit, for an initial portfolio value $V_P$ of $180 (i.e. (1 × $100) + (2 × $25) + (2 × $15)). A stop loss trigger is set for - 10%, translating to a portfolio value $V_L$ of $162 (i.e. $180 - (180 × 0.10)). Therefore, initial target price thresholds can be set for X, Y and Z, such that if all thresholds are simultaneously breached, $V_P = V_L$ = $162. Note that this example applies to non-leveraged deals and is provided as another example to the TPT Example which also covers leveraged deals.

Table (1200) shows possible target price thresholds (7) of *X ($T_X$)* (1208) set to $90, of Y *($T_Y$)* (1210) set to $22.50, and of Z *($T_Z$)*_ (1212) set to $13.5, since (1 × 90) + (2 × 22.50) + (2 × 13.50) = 162, thereby satisfying the constraint that when all target price thresholds are breached $V_P = V_L$ = $162.

It will be appreciated that in the example provided there are a range of possible values for $T_X$, $T_Y$ and $T_Z$ that will satisfy the constraint $V_P = V_L$. Therefore, further constraints may be applied to set a given threshold. For example, in certain embodiments, a given instrument's price target price threshold *T* can be set as follows. First, calculate the difference *D* between the value of the invested portion of the portfolio ($V_P$) and expected value at liquidation $V_L$ (i.e. $D = |V_P - V_L|$). Then apportion this difference *D* between the trading positions in the portfolio *pro rata,* e.g. based on position size (i.e. units x price/unit). For example, referring to **Fig. 12,** note *thatD* = 18 (i.e. $180 - $162). Note also that since the liquidation trigger is lower than the current portfolio value (i.e. $V_P > V_L$), each target price threshold is lower than the current instrument price by a *pro rata* portion based on the position size, as follows:

1. One unit of X accounts for $100 out of $180 of the portfolio (P1 + P2 + P3 = 180); therefore, $T_X$ can be set to the current price ($100) less $10 (i.e. 18 × (100 ÷ 180) ÷ 1), for a $T_X$ of $90 ($100-$10);
2. Two units of Y accounts for $50 out of $180 (PI + P2 + P3 = 180); therefore, $T_Y$ *can* be set to the current price ($25) less $2.50 (i.e. 18 × (50 ÷ 180) ÷ 2) for a $T_Y$ of $22.50 ($25-$2.50); and
3. Z's position accounts for $30 out of $180 (PI + P2 + P3 = 180); therefore, $T_Z$ can be set to the current price ($15) less $1.50 (i.e. 18 × (30 ÷ 180) ÷ 2) for a $T_Z$ of $13.50 ($15-$1.50).

**Fig. 13** illustrates a second non-limiting example of setting target price thresholds, in accordance with certain embodiments of the presently disclosed subject matter. Table (1300) shows a mirror portfolio having investments totalling $150 and $30 cash, including trading positions:

*P1* (1302) consisting of one (1) unit (*u*) of instrument (*I*) X at an initial price ($p_0$) of $100 per unit; and
*P2* (1303) consisting of two (2) units of Y at an initial price of $25 per unit.

Therefore, *P1* + *P2* + Cash = $V_P$ = $150. Once again, a stop loss trigger is set for -10%, translating to a portfolio value $V_L$ of $162 (i.e. $180 - (180 × 0.10)). However because the cash portion ($30) is fixed, to satisfy $V_P = V_L$ we need to define a new variable $V_{IP}$ as the value of the invested portion of the portfolio (PI + P2) and find target price threshold *T* that satisfy $V_{IP} + 30 = V_L$. Therefore, initial target price thresholds can be set for X and Y such that if all thresholds are simultaneously breached, the combined value of the investments $V_{IP}$ will equal $132 (i.e. $162 - $30). It is to be noted that this example applies to non-leveraged deals. For leveraged deals, the TPT Example detailed previously can be used instead. Table (1300) shows possible target price thresholds *(7)* as $T_X$(1308) set to $88, and $T_Y$(1310) set to $22, since (1 × 88) + (2 × 22) = 132, thereby satisfying the above constraint and guaranteeing that when both $T_X$ and $T_Y$ are breached, $V_P = V_L$ = $162.

In addition, each of $T_X$ and $T_Y$ *are* set lower than the current price X and Y, respectively, by a *pro rata* amount based on position size, e.g. as follows:

1. One unit of X accounts for $100 out of $150 (PI + P2 = 150); therefore, X's price target threshold is set at $12 (18 × (100 ÷ 150) ÷ 1) lower than the current price of X for a target price threshold of $88 ($100-$12);
2. Two units of Y account for $50 out of $150 (P1 + P2 = 150); therefore, Y's price target threshold is set at $3 (18 × (50 ÷ 150) ÷ 2) lower than the current price of Y for a target price threshold of $22 ($25-$22);

In certain embodiments, the difference *D* can be divided amongst the instruments in other way, e.g. according to each instrument's volatility during a specific time period.

In certain embodiments, revising one or more target price thresholds can be performed in the same manner as setting initial price target thresholds by setting $V_P$ to the current portfolio value (and setting $V_{IP} = V_P$ - Cash, where applicable), or in any other manner. In certain embodiments, revised target price thresholds may be set such that no price target threshold is breached based on the current price of the given instrument.

It should be noted that in certain embodiments, if the composition of the portfolio changes (including, e.g. opening and/or closing trading positions (for example as a result of mirror trading), or adding or withdrawing cash as will be detailed below, etc.) or the liquidation trigger is changed, the target price thresholds may need to be reset in accordance with the current state of the portfolio and/or current liquidation trigger. Therefore it is to be noted that in certain embodiments, monitoring module (250) can further be configured to monitor the portfolio and, upon detecting certain predefined events occurring in the portfolio (including, e.g. a trading position in the portfolio being closed, a new trading position being opened in the portfolio, cash being withdrawn, cash being added, a liquidation trigger being changed, etc.) automatically revise one or more target price thresholds in accordance with the current state of the portfolio.

In certain embodiments, if cash is transferred in or out of the portfolio (including, e.g., in response to a copied trader transferring cash in or out as detailed above), the system can revise the target price thresholds accordingly.

By way of non-limiting example, **Fig. 14** illustrates a table (1400) showing a portfolio at time t = 0 and then again at time t =1. At time = 0, the illustrated portfolio comprises a $75 position in Google shares (GOOG) (1402) (one unit), a $25 position in Gold (1404) (one unit) and $100 cash (1406) for a portfolio value of $200 ($75 + $25 + $100). The trader input a liquidation trigger of -10%, which the system can translate to a portfolio value of $180. Therefore, the combined investment in GOOG and Gold has to lose $20 for the portfolio value to meet the liquidation trigger of $180. The $20 can be apportioned between GOOG and Gold as detailed above with reference to Figs. 12 and 13, such that $T_{GOOG}$ is set at $60 while $T_{GOLD}$ is set at $20.

It is to be noted that this example applies to non-leveraged deals. For leveraged deals, the TPT Example detailed previously can be used instead. At time t = 1, the $100 cash is transferred out, resulting in a portfolio value now of $100 of which $75 is in GOOG and $25 is in Gold. Therefore, the -10% liquidation trigger is translated to a portfolio value of $90. As such, the combined investment in GOOG and Gold now has to lose only $10 to meet the liquidation trigger. This $10 is apportioned between GOOG and Gold as detailed above with reference to **Fig. 12** (no cash) and **Fig. 13** (cash), such that $T_{GOOG}$ is revised to $67.50 while $T_{GOLD}$ is revised to $22.50. It should be noted that had the trader input a fixed value liquidation trigger, there would be no need to revise the target price thresholds. In some cases, the system can also prevent the trader from withdrawing an amount of money that will create a breach of the liquidation trigger.

Referring now to **Fig. 15,** there is illustrated a generalized flow chart of transferring cash between a given trader's regular portfolio and the given trader's mirror portfolio, in accordance with certain embodiments. System (200) can (e.g. using monitoring module (250)) monitor (1501) a trading portfolio of a copied trader to determine if the copied trader transfers cash in or out of the copied trader's portfolio.

Upon determining that cash was transferred out of the copied trader's portfolio, system (200) can calculate (1502) a corresponding amount of cash that the copying trader should transfer out of the copying trader's mirror portfolio in order to keep "mirroring" the copied trader using the same proportion of invested funds. Conversely, upon determining that cash was transferred into the copied trader's portfolio, system (200) can calculate (1503) a corresponding amount of cash that the copying trader should transfer into the copying trader's mirror portfolio.

In certain embodiments, system (200) can also transfer (1504) the calculated cash amount between the copying trader's regular portfolio and the copying trader's mirror portfolio. In certain embodiments, system (200) can first request permission from the copying trader before transferring the calculated amount.

Upon making the transfer, system (200) can revise (1505) one or more target price thresholds in respect of one or more instruments held in a trading position in the copying trader's mirror portfolio.

It is to be noted that the invention is not bound to the specific method of setting and/or revising price target thresholds, as provided above by way of non-limiting example.

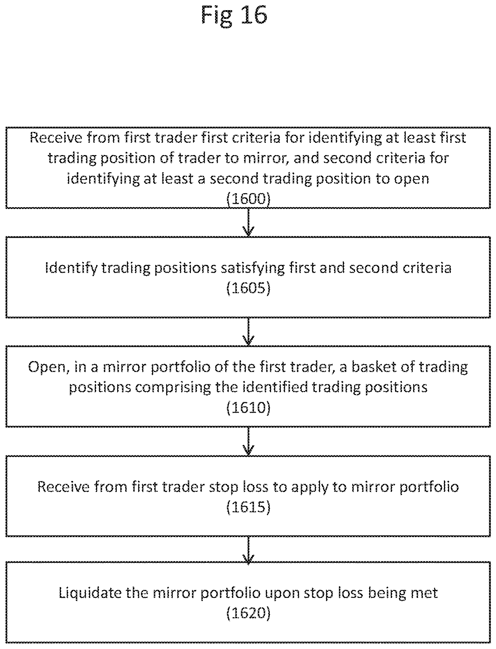

Reference is now made to **Fig. 16,** where there is provided an additional example of a sequence of operations that may be performed by a mirror trading system in order to facilitating mirror trading of financial instruments in a trading network.

**Fig. 16** illustrates a generalized flow chart of facilitating mirror trading of financial instruments in a trading network by automatically liquidating a mirror portfolio in response to a liquidation trigger being met, in accordance with certain other embodiments. System (200) can receive (1600), from a copying trader, first criteria for identifying at least one trading position opened by a first copied trader, in respect of at least one financial instrument, to mirror for the copying trader in a mirror portfolio associated with the copying trader, and second criteria for identifying at least one second trading position. The second trading position can be a target trading position opened by a second copied trader (different from the first copied trader) to mirror for the copying trader, or the second trading position can be a regular (i.e. non-mirror) trading position. The first and second criteria can be received at client interface (204) and transferred to data repository (203). System (200) can then obtain the first and second criteria from data repository (203).

In certain embodiments, the first criteria can include, e.g. information sufficient to discern the first copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 16.**

In the case that the second trading position is a target trading position opened by a second copied trader (different from the first copied trader), the second criteria can include, e.g., information sufficient to discern the second copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 16.**

In the case that the second trading position is a regular trading position, the second criteria can include, e.g. information sufficient to discern a given trading position to open for the copying trader, for example as detailed above with reference to **Fig. 3,** illustrating a generalized flow chart of a sequence of operations carried out for facilitating mirror trading of financial instruments in a trading network. The description (and examples) of criteria sufficient to discern a given trading position to open for the copying trader provided above with reference to **Fig. 3** applies, mutatis mutandis, to **Fig. 16.**

In certain embodiments, system (200) can (e.g. using matching module (240)) identify (1605) at least one trading position opened by the first copied trader that satisfies the first criteria, and at least one trading position satisfying the second criteria, as detailed above with reference to **Fig. 3,** illustrating a generalized flow chart of a sequence of operations carried out for facilitating mirror trading of financial instruments in a trading network. The description (and examples) provided above with reference to **Fig. 3** applies, mutatis mutandis, to **Fig. 16.**

In certain embodiments, system (200) can (e.g. using trading module (220)) open (1610), in a mirror trading portfolio associated with the copying trader, a basket of trading positions comprising the identified trading positions, as detailed above with reference to **Fig. 3,** illustrating a generalized flow chart of a sequence of operations carried out for facilitating mirror trading of financial instruments in a trading network. The description (and examples) provided above with reference to **Fig. 3** applies, mutatis mutandis, to **Fig. 16.**

In certain embodiments, system (200) can receive (1615) from the copying trader (e.g. via client interface (204)) a stop loss trigger to apply to the mirror portfolio which, if met, results in system (200) automatically liquidating the mirror portfolio, by liquidating (i.e. closing out) all trading positions in the basket of trading positions, as further detailed above with reference to **Fig. 3,** illustrating a generalized flow chart of a sequence of operations carried out for facilitating mirror trading of financial instruments in a trading network. The description (and examples) provided above with reference to **Fig. 3** applies, mutatis mutandis, to **Fig. 16.**

In certain embodiments, system (200) can further be configured (e.g. using trading module (220)) to automatically liquidate (1620) the mirror portfolio upon the stop loss trigger being met, by liquidating the basket of trading positions, as detailed above with reference to **Fig. 3,** illustrating a generalized flow chart of a sequence of operations carried out for facilitating mirror trading of financial instruments in a trading network. The description (and examples) provided above with reference to **Fig. 3** applies, mutatis mutandis, to **Fig. 16.**

In certain embodiments, liquidating (1620) includes, e.g. using a method for reducing the computational complexity required for determining if the stop loss trigger is met, as detailed above with reference to **Figs. 9** and **11,** and which likewise apply, mutatis mutandis, to **Fig. 16.**

In certain embodiments, upon the stop loss trigger not being met, system (200) can (e.g. using monitoring module (250)) monitor one or more trading positions corresponding to a respective one or more mirror trading positions in the basket, and can automatically close a mirror trading position (e.g. without liquidating the basket) in response to detecting the corresponding trading position being closed, as further detailed above with reference to **Figs. 3** and **7** and which likewise apply here, mutatis mutandis.

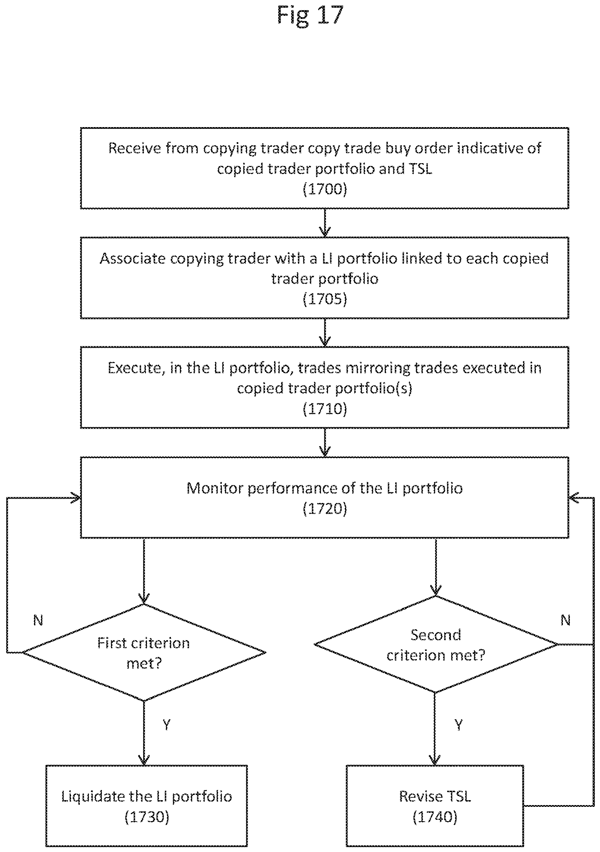

Referring now to **Fig. 17,** there is illustrated another example (non-limiting) of a sequence of operations for facilitating copy trading of financial instruments, in accordance with certain embodiments of the presently disclosed subject matter.

In certain embodiments, system (200) can receive (e.g. via client interface (204)) from a copying trader a copy trading buy order. The copy trading buy order can include an indication of, e.g. at least one copied trader’s portfolio associated with a copied trader that the copying trader is desirous of copying, and a trailing stop loss value. In certain embodiments, the copy trading buy order can further include, e.g. an indication of a portfolio associated with the copying trader to link to the copied trader's portfolio.

In certain embodiments, system (200) can (e.g. in data repository (203)) associate (1705) the first trader with a linked investment (LI) portfolio linked to each copied trader's portfolio. In certain embodiments, system (200) can (e.g. using trading module (220)) execute (1710) in the LI portfolio, one or more trades in respect of one or more instruments in accordance with the copy trading buy order, the one or more trades mirroring one or more trades executed in one or more copied trader portfolio.

In certain embodiments, system (200) can (e.g. using monitoring module (250), monitor (1720) the performance of the LI portfolio, and can (e.g. using trading module (220)) liquidate (1730) the LI portfolio upon the performance meeting a first criteria, and revise (1740) the TSL value upon the performance meeting a second criteria. In certain embodiments, the first criteria can be met upon the monitored performance being indicative of the LI portfolio value meeting the trailing stop loss. In certain embodiments, the second criteria can be met upon the monitored performance being indicative of the LI portfolio value increasing/decreasing to at least a predetermined threshold amount.

It is noted that the description and examples which were discussed above and with reference to **Figs. 3-16** likewise apply to the description of **Fig. 17** mutatis mutandis.

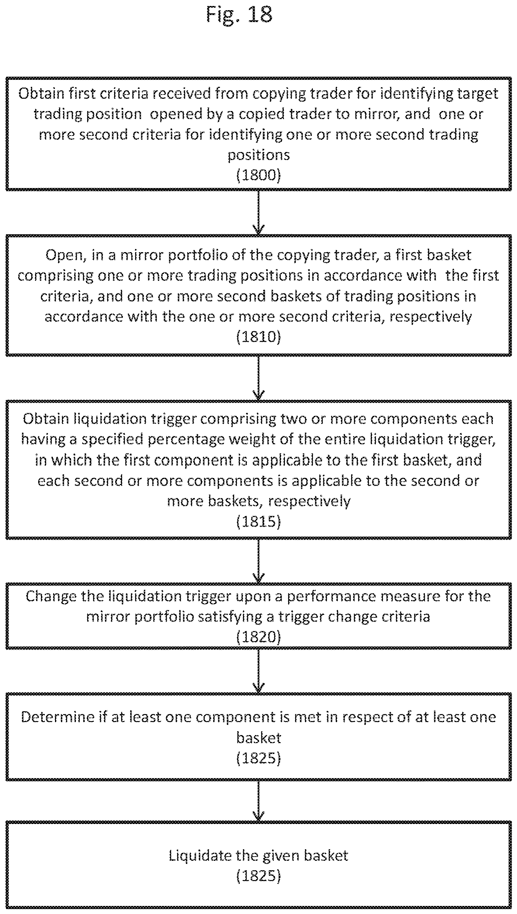

In certain embodiments, the liquidation trigger can be comprised of two or more (i.e. several) weighted components, each component applicable to a different basket of trading positions, thereby allowing a specific basket(s) of trading positions to be liquidated (while other baskets are not liquidated) under certain conditions, as will further be detailed below with reference to **Fig. 18.**

Reference is now made to **Fig. 18,** where there is provided an additional example of a sequence of operations that may be performed by a mirror trading system in order to facilitate mirror trading of financial instruments in a trading network.

**Fig. 18** illustrates a generalized flow chart of facilitating mirror trading of financial instruments in a trading network by automatically liquidating a mirror portfolio in response to a liquidation trigger being met, in accordance with certain other embodiments. System (200) can obtain (1800) (e.g. from data repository (203)) first criteria received from a copying trader for identifying at least one first target trading position opened by a first copied trader in respect of at least one instrument to mirror for the copying trader in a mirror portfolio associated with the copying trader. The system can further obtain one or more second criteria (as used herein, a second "second criteria" is referred to as "third criteria", a third "second criteria" is referred to as "fourth criteria", etc.) received from the copying trader, each one or more second criteria for identifying at least one second trading position in respect of an instrument. Each second trading position can be a target trading position opened by a second copied trader (since there can be multiple second criteria, each one for identifying at least one target trading position opened by a different copied trader, copied traders after the first two are referred to herein as "third copied trader", "fourth copied trader", etc. as the case may be), or a regular (i.e. non-mirror) trading position.

By way of non-limiting example, a copying trader "Andrew" deposits $1000 in a mirror account. Andrew specifies, using first criteria, details for identifying specific target trading positions made by and/or that will be made by a first copied trader "Bill". Andrew also specifies, using second criteria, details for identifying specific target trading positions made by and/or that will be made by a second copied trader "Charlie". Using third criteria, Andrew specifies details for identifying specific target trading positions made and/or that will be made by a third copied trader "Dillon". Note that in the above example, it could also be the case that the second criteria and/or third criteria could instead have been used by Andrew to specify details for identifying regular, non-mirrored trading positions, e.g. BUY 10 units of EURUSD.

In certain embodiments, the first criteria can include, e.g. information sufficient to discern the first copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 18.**

In the case that a second trading position(s) is a target trading position opened by a second copied trader, the second criteria can include, e.g., information sufficient to discern the second copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 18.**

In the case that a second trading position is a regular trading position, the second criteria can include, e.g. information sufficient to discern a given trading position to open for the copying trader, for example as detailed above with reference to **Fig. 3,** illustrating a generalized flow chart of a sequence of operations carried out for facilitating mirror trading of financial instruments in a trading network. The description (and examples) of criteria sufficient to discern a given trading position to open for the copying trader provided above with reference to **Fig. 3** applies, mutatis mutandis, to **Fig. 18.**

In certain embodiments, system (200) can (e.g. using trading module (220)) automatically open (1810), in a mirror trading portfolio associated with the copying trader, a first basket of trading positions comprising one or more trading positions in accordance with the first criteria, and one or more second baskets of trading positions, each second basket associated with a respective second criteria and comprising one or more trading positions in accordance with the associated second criteria. The system can identify trading positions in accordance with the obtained criteria, e.g. using matching module (240), as detailed above with reference to **Fig. 3,** illustrating a generalized flow chart of a sequence of operations carried out for facilitating mirror trading of financial instruments in a trading network. The description (and examples) of identifying trading positions to open and of opening a basket of trading positions as provided above with reference to **Fig. 3** applies, mutatis mutandis, to **Fig. 18.**

In certain embodiments, system (200) can obtain (1815) from a memory (e.g. data repository (203), a liquidation trigger comprising two or more components, each component having a specified percentage weight in respect of the entire liquidation trigger, in which the first component is applicable to the first basket and each second or more components are applicable to the second or more baskets respectively (i.e. for a mirror portfolio comprising, e.g. four baskets of trading positions, the liquidation trigger is comprised of four components: the first component applicable to the first basket, the second component to the second basket, the third component to the third basket and the fourth component to the fourth basket). In certain embodiments, the percentage weight of each component is received from the copying trader, e.g. at client interface (204) and transferred to data repository (203). The description (and examples) of liquidation triggers as provided above with reference to **Fig. 3** applies, mutatis mutandis to **Fig. 18.**

By way of non-limiting example, in the case of two baskets, the liquidation trigger can have a first component applicable to the first basket and having a weight of 75% of the entire liquidation trigger, and a second component applicable to the second basket and having a weight of 25% of the entire liquidation trigger. As another example, in the case of three baskets, the liquidation trigger can have a first component applicable to the first basket and having a weight of 33.3% of the entire liquidation trigger, and a second component applicable to the second basket and having a weight of 33.3% of the entire liquidation trigger, and a third component applicable to the third basket and having a weight of 33.3% of the entire liquidation trigger. It should be noted that the weights of the separate components can be the same or different from one another.

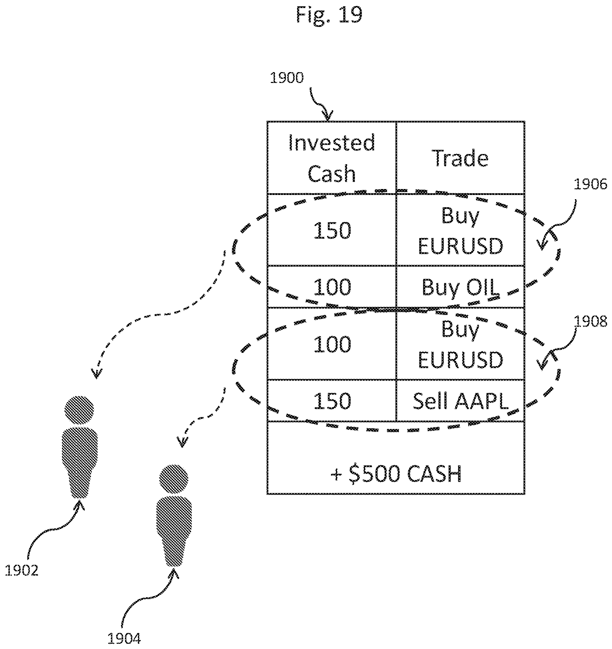

An example will now be provided of a mirror portfolio in accordance with certain embodiments of the disclosed subject matter. Referring now to **Fig. 19,** copying trader Andrew deposits $1000 in his mirror portfolio (1900) and specifies, using first criteria, target trading positions of Bill (1902) to mirror. Andrew also specifies, using second criteria, target trading positions of Charlie (1904) to mirror. In response, the system opens, in Andrew's mirror portfolio, a first basket (1906) of trading positions comprising two mirror trades corresponding to Bill's trades and which Andrew has invested $150 and $100 respectively, and a second basket (1908) of trading positions comprising mirror trades that correspond to Charlie's trades and in which Andrew has invested $100 and $150 respectively. Thus, of the initial $1000 deposited by Andrew, $500 is invested in trading positions ($150 + $100 corresponding to Bill, and $100 + $150 corresponding to Charlie) and $500 is held in cash ($1000 initial deposit - $500 invested). Of the invested $500, $250 ($150 + $100) is invested in trades mirroring Bill (1902) and $250 ($100 + $150) is invested in trades mirroring Charlie (1904).

Continuing with the above example, Andrew specifies a liquidation trigger of -50% indicating his desire for the mirror portfolio to be liquidated upon a loss of $500 ($1000 X 50%). Andrew specifies that the $500 loss should be split 50/50 between the trades corresponding to Bill (1902) and the trades corresponding to Charlie (1904). That is, Andrew specifies that the first basket (1906) corresponding to Bill's trades should bear 50% of the entire liquidation trigger and therefore be liquidated upon losing $250 (even if the mirror portfolio as a whole loses less than $500). Likewise, Andrew specifies that the second basket (1908) corresponding to Charlie's trades should bear 50% of the entire liquidation trigger and therefore be liquidated upon losing $250 (even if the mirror portfolio as a whole loses less than $500).

Andrew can alternatively specify that the liquidation trigger ($500 loss) should be weighted unequally between the first basket (1906) and second basket (1908). For example Andrew can specify that the first basket (1906) corresponding to Bill (1902) should be weighted 75% and the second basket (1908) corresponding to Charlie (1904) be weighted at 25% (Andrew considers Charlie to be a novice investor and is less tolerant of losses on account of Charlie). In this case, Andrew's basket (1906) corresponding to Bill (1902) would be automatically liquidated upon losing $375 ($500 X 75%) while Andrew's basket (1908) corresponding to Charlie (1904) would be automatically liquidated upon losing $125 ($500 X 25%).

Returning now to **Fig. 18,** in certain embodiments, system (200) can (e.g. using monitoring module (250)) automatically change (1820) the liquidation trigger upon a performance measure for the mirror portfolio satisfying a trigger change criteria, in which case the specified percentage weights are also applicable to the changed liquidation trigger. By way of non-limiting example, if Andrew's mirror portfolio (1900) increases in value to $1200 (an increase of 20%), the liquidation trigger value can automatically be increased 20%, thereby liquidating the portfolio upon losing $600 ($500 + 20%) instead of $500. In the case that basket (1906) (corresponding to Bill (1902)) is weighted at 75% and basket (1908) (corresponding to Charlie (1904)) is weighted at 25%, upon the liquidation trigger being changed to -$600, Andrew's basket (1906) would be automatically liquidated upon losing $450 ($600 X 75%) while Andrew's basket (1908) would be automatically liquidated upon losing $150 ($600 X 25%).

The description (and examples) of automatically changing a liquidation trigger upon a performance measure for the mirror portfolio satisfying a trigger change criteria as provided above with reference to **Fig. 3** applies, mutatis mutandis to **Fig. 18.**

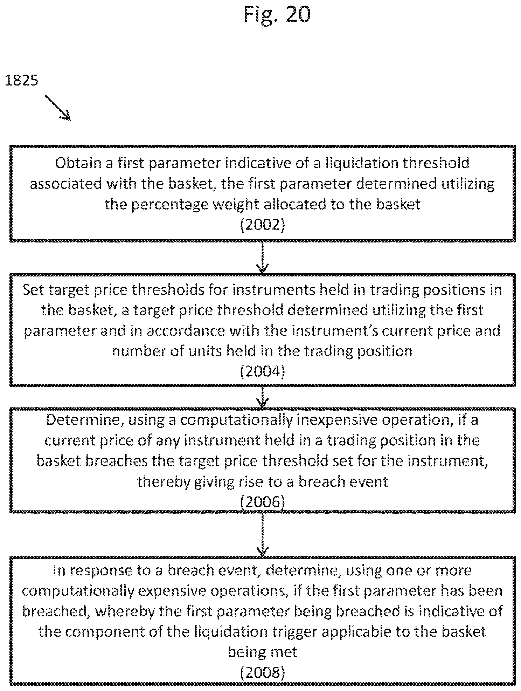

In certain embodiments, system (200) can further be configured (e.g. using monitoring module (250)) to determine (1825) if at least one component of the changed liquidation trigger is met in respect of at least one basket of trading positions applicable thereto. In certain embodiments, the system can be configured to use a method of reducing the computationally complexity required to determine if a component of a liquidation trigger is met, as will further be detailed below with reference to **Fig. 20.**

Upon determining that a given component of the changed liquidation trigger is met in respect of a given basket of trading positions applicable thereto, system (200) can further be configured (e.g. using trading module (220)) to liquidate (1830) the given basket of trading positions. By way of non-limiting example, using the specified percentage weights from the previous example, the system can be configured to automatically liquidate Andrew's basket (1906) (corresponding to Bill (1902)) upon it losing $450 (irrespective of what happens in basket (1908) (corresponding to Charlie (1904)). Likewise, the system can be configured to automatically liquidate Andrew's basket (1908) (corresponding to Charlie (1904)) upon it losing $150 (irrespective of what happens in basket (1906)).

The description (and examples) of automatically liquidating a mirror portfolio upon a liquidation trigger being met as provided above with reference to **Fig. 3** applies, mutatis mutandis to **Fig. 18.**

In certain embodiments, upon liquidating a basket of trading positions, the system can optionally re-allocate the percentage weights of the remaining components of the liquidation trigger (including changed liquidation trigger) applicable to the remaining baskets of trading positions. In certain embodiments, the system can re-allocate the percentage weights proportionally as between the remaining components so as to maintain the same weight ratio between those remaining components as had existed prior to the liquidation. For example, suppose Andrew mirrors trades made by Bob, Charlie and Dillon and specified a liquidation trigger having the following percentage weights applicable to the baskets corresponding to the respective traders: 25% to Bob, 25% to Charlie and 50% to Dillon. Further suppose that the basket corresponding to Charlie is liquidated. Note that the original weights assigned to Bob and Dillon were in the ratio of 1:2 (i.e. Bob 25% to Dillon 50%). Therefore, once the basket corresponding to Charlie is liquidated, the system can be configured to re-allocate the weights applicable to Bob and Dillon as 33.33% to Bob and 66.66% to Dillon, thereby maintaining the ratio of 1:2 with respect to Bob and Dillon.

Referring now to **Fig. 20,** there is provided a generalized flow chart of reducing the computational complexity required for the processor to determining if a component of a liquidation trigger is met in respect of the applicable basket. In certain embodiments, system (200) can be configured to obtain (2002) a first parameter indicative of a liquidation threshold associated with the basket, where the first parameter is determined utilizing the percentage weight of the component. For example, if Andrew specifies a liquidation trigger of -$500 with 25% allocated to Bob and 75% allocated to Charlie, the first parameter can be indicative of a liquidation threshold of -$125 (-$500 X .25) in the case of Bob, and -$375 (-$500 X .75) in the case of Charlie.

In certain embodiments, the first parameter indicative of a liquidation threshold can correspond to a maximum allowable gain/loss in the associated basket (e.g. loss of $125, gain of $125, etc.), in which case the first parameter is breached when a current gain/loss in the associated basket is equal to or greater than the maximum allowable gain/loss. The maximum allowable gain/loss in the associated basket can be calculated in accordance with the weight percentage of the liquidation trigger applicable to the associated basket.

In certain embodiments (e.g. in the case of a stop loss or trailing stop loss liquidation trigger), the first parameter indicative of a liquidation threshold can correspond to a floor value for the associated basket (e.g. a floor value of $125 when the current value is $250), in which case the first parameter is breached when a current value of the basket is equal to or lower than the floor value (e.g. the current value of the basket breaches the floor value of $125, corresponding to a loss of $125 as per the applicable weighted component of the liquidation trigger).

In certain embodiments (e.g. in the case of a take profit or trailing take profit liquidation trigger), the first parameter indicative of a liquidation threshold can correspond to a ceiling value for the associated basket (e.g. a ceiling value of $375 when the current value is $250), in which case the first parameter is breached when a current value of the basket is equal to or higher than the ceiling value (e.g. the current value of the basket breaches the ceiling value of $375, corresponding to a gain of $125 as per the applicable weighted component of the liquidation trigger).

It should be noted that the current value $V_B$ for a given basket of trading positions can be calculated according to the formula:

$$V_B = \sum_{i=1}^{n} c_i + \sum_{i=1}^{n} P\&L_i$$

where $c_i$ is the amount the trader has invested in the i-th trading position in the basket, and $P\&L_i$ is the P&L of the i-th trading position in the basket.

In certain embodiments, system (200) can further be configured to set (2004) one or more target price thresholds in respect of one or more instruments held in a respective one or more trading positions in the basket. In certain embodiments, the target price threshold for a given instrument is determined utilizing the first parameter, or a derivative thereof (e.g. a value calculated based on the first parameter), and in accordance with a current price and number of units of the given instrument. In certain embodiments, target price thresholds are set in respect of each instrument held in a trading position in the basket such that upon all target price thresholds being breached, the current value of the basket will breach the first parameter. For example, if the first parameter is indicative of a loss of $125 (using the example above) in the basket corresponding to Bill, then target price thresholds can be set for each instrument in the basket corresponding to Bill such that if all target price thresholds are breached, the basket corresponding to Bill will have lost $125. The description (and examples) of setting one or more target price thresholds as provided above with reference to **Figs. 9, 12-14** applies, mutatis mutandis to **Fig. 20.**

In certain embodiments, system (200) can further be configured to determine (2006), using a computationally inexpensive operation, if a current price of any instrument held in a trading position in the basket and in respect of which a target price threshold was set breaches the target price threshold set in respect of said instrument thereby giving rise to a breach event. The description (and examples) of using a computationally inexpensive operation in order to determine if a current price of any instrument breaches a target price threshold set in respect of the instrument as provided above with reference to **Figs. 9-11** applies, mutatis mutandis to **Fig. 20.**

In certain embodiments, in response to a breach event, system (200) can further be configured to determine (2008) using one or more computationally expensive operations, if the first parameter has been breached. If the first parameter has been breached, it is thus indicative of the component of the changed liquidation trigger being met, whereas if the first parameter has not been breached, it is thus indicative of the component of the changed liquidation trigger not being met. The description (and examples) of using one or more computationally expensive operations in order to determine if a threshold is breached as provided above with reference to **Figs. 9-11** applies, mutatis mutandis to **Fig. 20.**

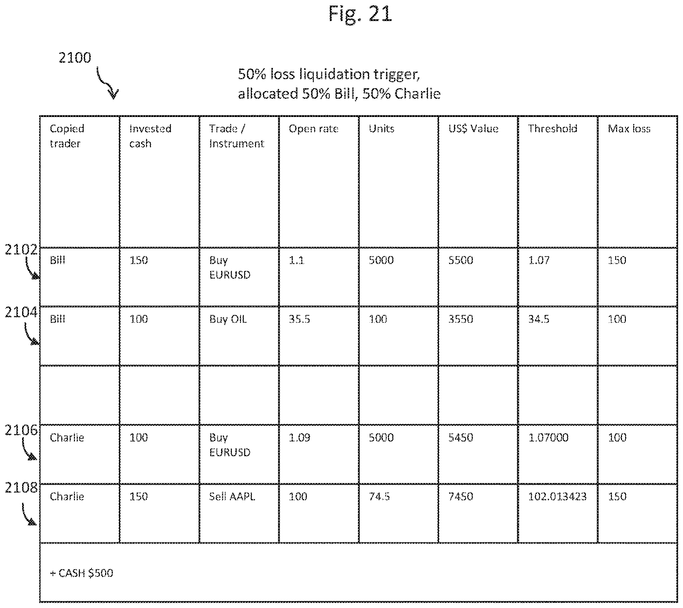

By way of non-limiting example, referring now to **Fig. 21,** there is illustrated Andrew's mirror portfolio (2100). Andrew's portfolio consists of two baskets of trading positions. The first basket corresponds to trades of Bill and includes two mirror trades: a first mirror trade (2102) in which $150 is invested to buy 5000 units of EURUSD, at a unit price of $1.10, for a total trade value of $5500; and a second mirror trade (2104) in which $100 is invested to buy 100 units of Oil, at $35.5 per unit, for a total trade value of $3550. The second basket corresponds to trades of Charlie and includes two mirror trades: a first mirror trade (2106) in which $100 is invested to buy 5000 units of EURUSD at $1.09 per unit, for a total trade value of $5000; and a second mirror trade (2108) in which $150 is invested to sell 100 units of AAPL at $74.50 each unit, for a total trade value of $7450. Andrew's mirror portfolio also contains $500 cash which is not invested.

Andrew specifies a stop loss liquidation trigger of -50% which translates to a loss of $500 in Andrew's mirror portfolio. Andrew specifies that the component of the liquidation trigger corresponding to the first basket (i.e. Bill) should be weighted 50% and the component of the liquidation trigger corresponding to the second basket (i.e. Charlie) should also be weighted 50%. In this case, utilizing the respective weights of the -$500 liquidation trigger, the system calculates the amount of loss which is required to liquidate the first and second basket, respectively. In this case, the first basket should be liquidated upon losing $250 ($500 X 50%) and the second basket should be liquidated upon losing $250 ($500 X 50%). Therefore, the first parameter is determined to be -$250 in respect of the first basket and -$250 in respect of the second basket. Thus, in respect of the first basket, a target price threshold of $1.07 can be set for EURUSD and a target price threshold of $34.50 can be set for Oil. Upon the unit price of EURUSD dropping from $1.10 to $1.07 and the unit price of Oil dropping from $35.50 to $34.50, the first basket will have lost $250 in value thus breaching the first parameter. Similarly, in respect of the second basket, a target price threshold of $1.07 can be set for EURUSD and a target price threshold of $102.013428 can be set for AAPL. Upon the unit price of EURUSD dropping from $1.09 to $1.07 and the unit price of AAPL rising from $74.50 to $102.013428, the second basket will have lost $250 in value thus breaching the first parameter.

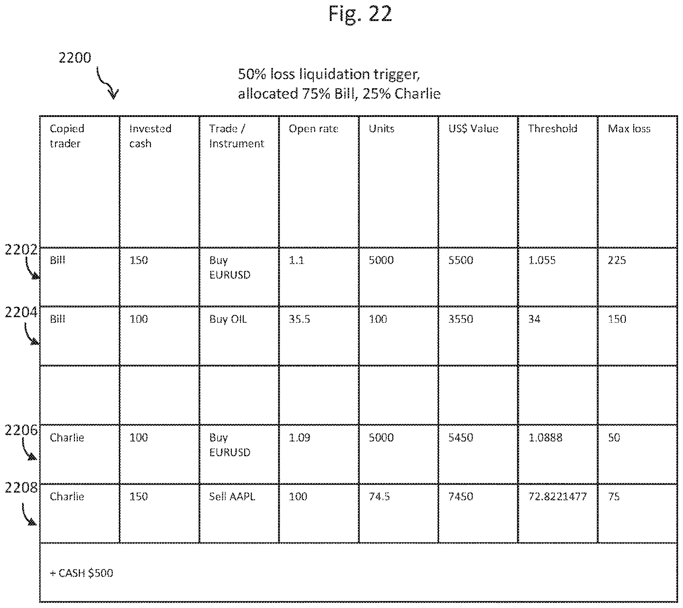

**Fig. 22** illustrates the case of non-equal weighted components of a liquidation trigger. Andrew's mirror portfolio (2200) contains the same baskets of trading positions as in **Fig. 21,** however this time Andrew specifies that the component of the liquidation trigger corresponding to the first basket (i.e. Bill) should be weighted 75% and the component of the liquidation trigger corresponding to the second basket (i.e. Charlie) should be weighted 25%. This translates to a loss of $375 in the first basket, and a loss of $125 in the second basket. Accordingly, the first parameter can be set at a floor value of -$125 ($250-$375) for the first basket and a floor value of $125 ($250-$125) for the second basket. Utilizing these respective first parameters, the system can set, e.g., in respect of EURUSD held in trading position (2202) a target price threshold of $1.055 and in respect of Oil held in trading position (2204) a target price threshold of $34. Upon EURUSD reaching $1.055 and Oil reaching $34, the first basket will have a value of -$125, thus breaching the first parameter set in respect of the first basket. Likewise, the system can also set, e.g., in respect of EURUSD held in trading position (2206) a target price threshold of $1.0888 and in respect of AAPL held in trading position (2208) a target price threshold of $72.8221477. Upon EURUSD reaching $1.0888 and AAPL reaching $72.8221477, the second basket will have a value of $125, thus breaching the first parameter set in respect of the second basket.

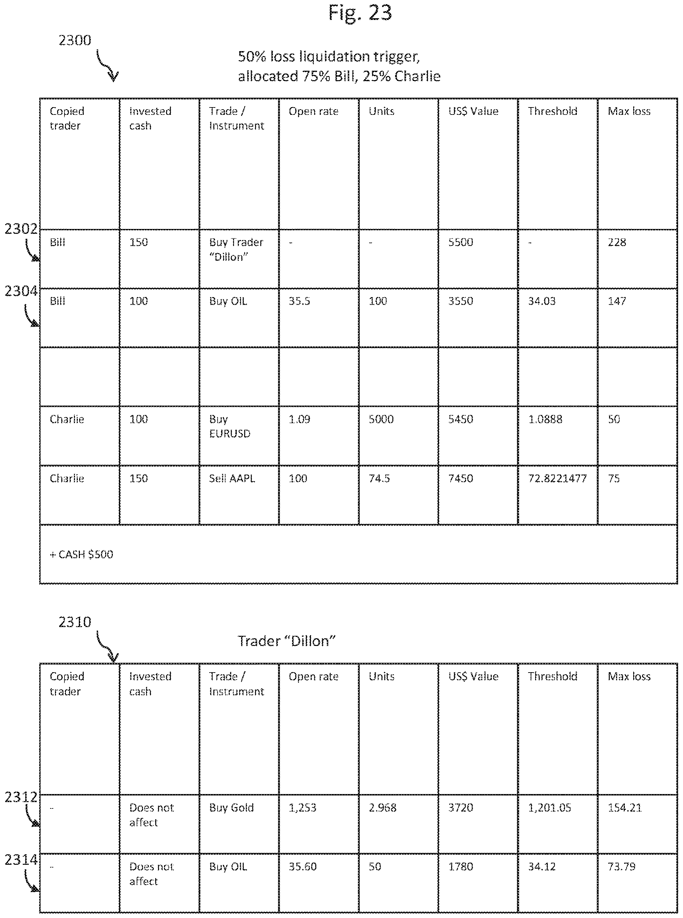

In certain embodiments, the copying trader can mirror a copied trader and "buy" or "sell" the copied trader as though it were an asset. In this case, the target price thresholds must take into account the trades made by the copied trader. **Fig. 23** illustrates this case. Andrew's mirror portfolio (2300) contains two baskets of trading positions. Andrew again specifies a liquidation trigger of a loss of -50% in which the component applicable to the first basket (i.e. Bill) should be weighted 75% and the component applicable to the second basket (i.e. Charlie) should be weighted 25%. The first basket comprises two trading positions mirrored from Bill in which a first trading position (2302) invests $150 "on" trader Dillon (i.e. to mirror all trades made by Dillon) for a value of $5500, and a second trading position (2304) in which $100 is invested to buy 100 units of Oil, at $35.5 per unit, for a total trade value of $3550. The second basket is identical to that of **Fig. 22.** In this case, in order to set the target price thresholds for the instruments held in the first basket, the trades of Dillon must be taken into account. Dillon's trades are indicated in table (2310) and include a first trade (2312) in which 2.968 units of Gold are bought at $1,253 per unit for a trade value of $3720, and a second trade (2314) in which 50 units of Oil are bought at $35.60 per unit for a trade value of $1780. As a result, in order to set target price thresholds which, when breached, translates to a loss of $375 in the first basket, the system can consider the first basket of as comprised of trading positions (2304), (2312) and (2314) in Gold (2.968 units), Oil (50 units) and Oil (100 units), respectively. Therefore, the system can set a target price threshold for Gold of $1,201.05 in respect of trading position (2312), a target price threshold for Oil of $34.12 in respect of trading position (2314), and a target price threshold for Oil of $34.03 in respect of trading position (2304). In the event all target price thresholds are breached, the first basket will have lost $375 thereby breaching the applicable component of the liquidation trigger.

In certain embodiments, the target price thresholds set in respect of one or more instruments in a given basket can be revised automatically upon one or more of: i) a new trading position being opened in the given basket, ii) a trading position in the given basket being closed at a profit, iii) a transfer-in of trading funds to the mirror portfolio, iv) a transfer-out of trading funds from the mirror portfolio, and v) a breach event having occurred where the first parameter applicable to the given basket has not been breached. The description (and examples) of revising one or more target price thresholds as provided above with reference to **Figs. 10, 12-15** applies, mutatis mutandis to **Fig. 20.**

In certain embodiments, upon a component of the liquidation trigger applicable to a given basket of trading positions, not being met, system (200) can (e.g. using monitoring module (250)) monitor one or more trading positions of a copied trader in respect of which a corresponding mirror trading positions was opened for the copying trader, and the system can automatically close the corresponding mirror trading position (e.g. without liquidating the basket) in response to the monitored trading position of the copied trader being closed, as further detailed above with reference to **Figs. 3** and **7** and which likewise apply here mutatis, mutandis.

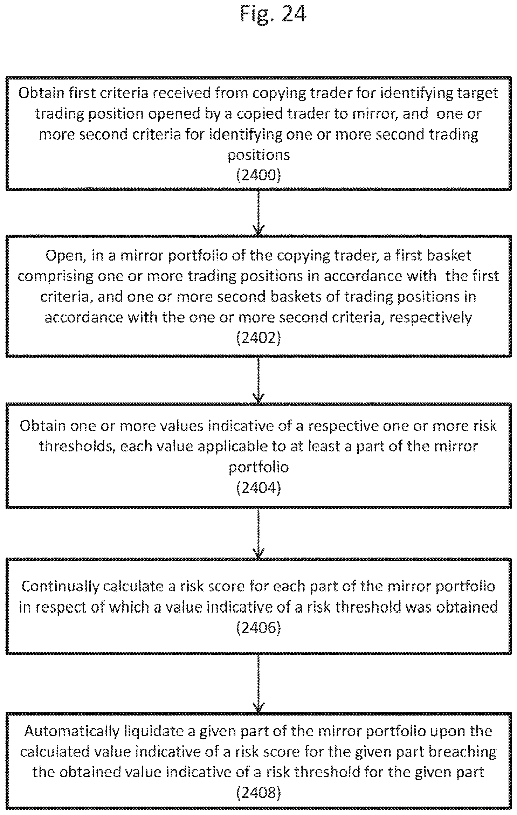

Reference is now made to **Fig. 24,** where there is provided an additional example of a sequence of operations that may be performed by a mirror trading system in order to facilitate mirror trading of financial instruments in a trading network.

**Fig. 24** illustrates a generalized flow chart of facilitating mirror trading of financial instruments in a trading network by automatically liquidating at least part of a mirror portfolio in response to a value indicative of a risk score breaching a predetermined risk threshold, in accordance with certain embodiments.

System (200) can be configured to obtain (2400), e.g. from data repository (203), first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, the at least one trading position being either a non-mirror trading position or a target trading position opened by a second copied trader.

In certain embodiments, the first criteria can include, e.g. information sufficient to discern the first copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 24.**

In the case that a trading position specified by a second criteria is a target trading position opened by a second copied trader, the second criteria can include, e.g., information sufficient to discern the second copied trader from other traders in the trading network, as detailed above with reference to **Fig. 3,** illustrating a generalized flow chart of a sequence of operations carried out for facilitating mirror trading of financial instruments in a trading network. The description (and examples) of criteria sufficient to discern a copied trader, as provided above with reference to **Fig. 3** applies, mutatis mutandis, to **Fig. 24.**

In the case that a trading position specified by the second criteria is a regular trading position, the second criteria can include, e.g. information sufficient to discern a given trading position to open for the copying trader, for example as detailed above with reference to **Fig. 3,** illustrating a generalized flow chart of a sequence of operations carried out for facilitating mirror trading of financial instruments in a trading network. The description (and examples) of criteria sufficient to discern a given trading position to open for the copying trader provided above with reference to **Fig. 3** applies, mutatis mutandis, to **Fig. 24.**

System (200) can, e.g. using trading module (220), further be configured to automatically open (2402), in the mirror portfolio, a first basket of trading positions comprising one or more trading positions in accordance with the first criteria, and one or more second baskets of trading positions, each second basket associated with a respective second criteria and comprising one or more trading positions in accordance with the associated second criteria. The system can identify trading positions to open in accordance with the obtained criteria, e.g. using matching module (240), as detailed above with reference to **Fig. 3,** illustrating a generalized flow chart of a sequence of operations carried out for facilitating mirror trading of financial instruments in a trading network. The description (and examples) of identifying trading positions to open in accordance with obtained criteria and opening a basket of trading positions provided above with reference to **Fig. 3** applies, mutatis mutandis, to **Fig. 24.**

System (200) can further be configured to obtain (2404), e.g. from data repository (203), one or more values indicative of a respective one or more risk thresholds, each obtained value applicable to at least a part of the mirror portfolio. In certain embodiments, the one or more values can be determined by the copying trader. In certain other embodiments, the one or more values can be determined by the system. In certain embodiments, the one or more values can be selected from a predefined list of values (e.g. whole numbers between 1-10). In certain embodiments, the higher the value, the higher is the risk threshold (corresponding to a greater risk tolerance).

In certain embodiments, the at least a part of the mirror portfolio can be the entire mirror portfolio. In certain embodiments, the at least a part of the mirror portfolio can be one or more baskets of trading positions comprised in the mirror portfolio. In certain embodiments, the at least a part of the mirror portfolio can be one or more trading positions comprised in a basket of trading positions in the mirror portfolio.

In certain embodiments, a value indicative of a risk threshold is obtained in respect of each of one or more baskets of trading positions, where each basket is associated with a different copied trader and where a given basket comprises one or more mirror trading positions corresponding to target trading positions opened by the copied trader associated with the given basket, and where the obtained value for one of baskets is different from the obtained value for another one of the baskets. By way of non-limiting example, referring to **Fig. 19,** Andrew can specify that basket (1906) corresponding to Bill (1902) should be assigned a risk threshold of "7" while basket (1908) corresponding to Charlie (1904) should be assigned a risk threshold of "9". This might reflect Andrew’s belief that Charlie is a better trader than Bill.

System (200) can further be configured, e.g. using monitoring module (250), for each given at least part of the mirror portfolio in respect of which a value indicative of a risk threshold was obtained, continually calculate (2406) a value indicative of a risk score associated with the given at least part of the mirror portfolio. "Continually" as used herein, includes continuously, periodically (after predetermined intervals) or in response to one or more predefined triggers. In certain embodiments, the value indicative of a risk score for a given part of the mirror portfolio can be recalculated each time a new trading position is opened in the given part of the portfolio.

In certain embodiments, the value indicative of a risk score for a given part of the mirror portfolio can be calculated in accordance with the volatility of the instruments held in trading positions in the given part of the mirror portfolio. For example, since the more volatile the instruments the greater is the risk, the value can be calculated in a manner so that the value is reflective of the risk. For example, assuming that a first instrument has a first volatility over a given period of time (e.g. an hour, a day, a week, etc.), and a second instrument has a second volatility, higher than the first volatility, over the same given period of time (e.g. an hour, a day, a week, etc.), the risk score associated with the second instrument will be higher than the risk score associated with the first instrument and vice versa. In certain embodiments, the value indicative of a risk score for a given part of the mirror portfolio can be calculated in accordance with the amount of leverage applicable to the given part of the mirror portfolio. For example, since the more leveraged the portfolio the greater is the risk, the value can be calculated in a manner so that the value is reflective of the risk. For example, assuming that a first instrument is associated with a first leverage, and a second instrument is associated with a second leverage higher than the first leverage, the risk score associated with the second instrument will be higher than the risk score associated with the first instrument and vice versa. A non-limiting example of a method for calculating a value indicative of a risk score is detailed below.

System (200) can further be configured, e.g. using trading module (220), to automatically liquidate (2408) the given part of the mirror portfolio upon the calculated value indicative of a risk score breaching the obtained value indicative of a risk threshold in respect of the given part of the mirror portfolio. By way of non-limiting example, referring again to **Fig. 19,** suppose the system calculates a value indicative of a risk score of "6" for basket (1906) and "7" for basket (1908). As both of these values are less than or equal to the risk thresholds assigned to the respective baskets, neither basket is liquidated. Suppose further that Bill (1902) opens a new trading position which, when mirrored in Andrew’s mirror portfolio (1900) causes the risk score associated with basket (1906) corresponding to Bill (1902) to reach "9". Since the risk score associated with basket (1906) now breaches the value indicative of risk threshold ("7") assigned to basket (1906), basket (1906) is automatically liquidated.

In certain embodiments, the risk score applicable to a given part of the mirror portfolio can be derived as follows. First, an assets covariance matrix *COV* is generated indicative of the linear correlation of a risk measure (e.g. volatility) between the instruments in the part of the mirror portfolio. In certain embodiments the linear correlation can be calculated using the Pearson Correlation Coefficient (a measure of the linear correlation between two variables x and y, giving a value between +1 and -1).. By way of non-limiting example, the variable can be the standard deviation of a given instrument's hourly rate change, over some historical period (e.g. 14 weeks). For example, suppose the standard deviation of the EURUSD hourly rate change over the past 14 weeks is 0.167%, and the standard deviation of the USDJPY hourly rate change over the past 14 weeks is 0.088%, the Pearson Correlation Coefficient r between instrument's EURUSD and USDJPY over 14 weeks ($n$ = 14) is given by the formula

$$r = \frac{n(\sum xy) - (\sum x)(\sum y)}{\sqrt{[n\sum x^2 - (\sum x)^2][n\sum y^2 - (\sum y)^2]}}$$

and results in $r$ = -0.6.

Next, a weights vector *W* is generated indicative of the respective weights of each instrument (e.g. using position size of the instrument relative to the whole part of the mirror portfolio) held in a trading position in the part of the portfolio. For example, suppose the part of the portfolio has the following two trading positions:

1. $5000 invested in a long position in EURUSD at leverage 100, for a value of $500,000;
2. $2000 invested in a short position in EURUSD at leverage 400, for a value of -$800,000;
3. $5000 invested in a short position in USDJPY at leverage 100, for a value of -$500,000.

In the above example, the net EURUSD position is -$300,000 which corresponds to -300% of the part of the portfolio, while the net USDJPY position corresponds to -500% of the part of the portfolio. Therefore, the weights vector looks like this {0,0,...0,-3,0,0,...,0,-5,0,...,0}.

Next, the weights vector *Wand* assets covariance matrix *COV* are multiplied, for example, using the general equation for $n$ instruments:

$$W^t XW = \sum_{i=1}^{n}\sum_{j=1}^{n} W_i W_j COV_{ij} ,$$

where X = $COV_{ij}$.

Finally, the resulting value indicative of portfolio risk (e.g. as measured by volatility) can be converted into an integer indicative of a score, e.g. in the range of 1-10. For example, a resulting value between 0 - 0.5% volatility can be given a score of 1, a value between 0.5% - 1.2% can be given a score of 2, etc.

It is noted that the teachings of the presently disclosed subject matter are not bound by the mirror trading system described with reference to **Figs. 1-2.** Equivalent and/or modified functionality can be consolidated or divided in another manner and can be implemented in any appropriate combination of software, firmware and hardware and executed on a suitable device. The network in which the mirror trading system operates can be a standalone network, or integrated, fully or partly, with other networks. Each component of the mirror trading system can be a standalone component, or integrated, fully or partly, with other components. Those skilled in the art will also readily appreciate that one or more of the data repositories can be consolidated or divided in other manner; databases can be shared with other systems or be provided by other systems, including third party equipment.

It is further noted that the teachings of the presently disclosed subject matter are not bound by the flow charts illustrated in **Figs. 3, 6-11, 15-18, 20** and **24**; the illustrated operations can occur out of the illustrated order. It is also noted that whilst the flow charts are described with reference to elements of system (200), this is by no means binding, and the operations can be performed by elements other than those described herein.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, a suitably programmed computer. Likewise, the invention contemplates a computer program being readable by a computer for executing the method of the invention. The invention further contemplates a machine-readable memory tangibly embodying a program of instructions executable by the machine for executing the method of the invention.

Those skilled in the art will readily appreciate that various modifications and changes can be applied to the embodiments of the invention as hereinbefore described without departing from its scope, defined in and by the appended claims.

The invention may also be understood with reference to the following numbered clauses:

Clause 1. A method of facilitating mirror trading of financial instruments in a trading network comprising a plurality of traders, the method comprising, by a processor operatively coupled to a memory:

obtaining, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;
obtaining, from the memory, a liquidation trigger comprising two or more components, each component having a specified percentage weight in respect of the entire liquidation trigger, wherein a first component is applicable to the first basket and a second or more components are applicable to the second or more baskets; and
automatically changing the liquidation trigger upon a performance measure for the mirror portfolio satisfying a trigger change criteria, wherein the specified percentage weights are also applicable to said changed liquidation trigger.

Clause 2. The method of clause 1, further comprising:

determining if at least one component of the changed liquidation trigger is met in respect of at least one basket of trading positions applicable thereto, and
upon determining that a given component of the changed liquidation trigger is met in respect of a given basket of trading positions applicable thereto, liquidating the given basket of trading positions.

Clause 3. The method of clause 2, further comprising, upon liquidating the given basket of trading positions, re-allocating the percentage weights of the remaining components of the changed liquidation trigger applicable to the remaining baskets of trading positions.

Clause 4. The method of clause 2, further comprising:

determining if any of a second or more components of the changed liquidation trigger is met in respect of any of a respective second or more baskets of trading positions applicable thereto, and
upon determining that a given second or more component of the changed liquidation trigger is met in respect of a given second or more baskets of trading positions applicable thereto, liquidating the given second or more baskets of trading positions.

Clause 5. The method of clause 4, further comprising, upon liquidating the given second or more baskets of trading positions, re-allocating the percentage weights of the remaining components of the changed liquidation trigger applicable to the remaining baskets of trading positions.

Clause 6. The method of clause 2, wherein determining if a component of the changed liquidation trigger is met in respect of a basket to which the component is applicable comprises, by the processor:

obtaining a first parameter indicative of a liquidation threshold associated with the basket, wherein the first parameter is determined utilizing the percentage weight of the component;
setting one or more target price thresholds in respect of one or more instruments held in a respective one or more trading positions in the basket, wherein a target price threshold for a given instrument is determined utilizing the first parameter or a derivative thereof and in accordance with a current price and number of units of the given instrument;
determining, using a computationally inexpensive operation, if a current price of any instrument held in a trading position in the basket and in respect of which a target price threshold was set breaches the target price threshold set in respect of said instrument thereby giving rise to a breach event;
determining, in response to the breach event and using one or more computationally expensive operations, if the first parameter has been breached,
wherein said first parameter having been breached is thereby indicative of the component of the changed liquidation trigger being met, and wherein said first parameter not having been breached is thereby indicative of the component of the changed liquidation trigger not having been met.

Clause 7. The method of clause 6, wherein said first parameter corresponds to a maximum allowable gain/loss in the associated basket, and said first parameter is breached when a current gain/loss in said basket is equal to or greater than said maximum allowable gain/loss.

Clause 8. The method of clause 6, wherein said first parameter corresponds to a floor value for the associated basket, and said first parameter is breached when a current value of said basket is equal to or lower than said floor value.

Clause 9. The method of clause 6, wherein said first parameter corresponds to a ceiling value for the associated basket, and said first parameter is breached when a current value of said basket is equal to or higher than said ceiling value.

Clause 10. The method of clause 6, further comprising: revising one or more of the target price thresholds upon any one or more of:

i) a new trading position being opened in the given basket;
ii) a trading position in the given basket being closed;
iii) a transfer-in of cash to the mirror portfolio;
iv) a transfer-out of cash from the mirror portfolio;
v) a breach event having occurred and wherein said first parameter has not been breached; and
vi) the liquidation trigger being changed.

Clause 11. The method of clause 1, wherein the first criteria includes at least an indication of the first copied trader, said indication sufficient to discern the first copied trader from other traders in the trading network.

Clause 12. The method of clause 1, wherein the first criteria further includes an indication of one or more of: a specific target trading position, a specific instrument, a specific instrument type, a specific position types, and a specific timeframe.

Clause 13. The method of clause 1, wherein the first criteria further includes an indication that the at least one first target trading position is one of: a previously opened target trading position and a not yet opened target trading position.

Clause 14. The method of clause 2, further comprising, upon no component of the changed liquidation trigger being met, automatically closing at least one trading position in the mirror portfolio in response to the corresponding target trading position being closed.

Clause 15. The method of clause 1, wherein automatically changing the liquidation trigger comprises at least one of: raising the liquidation trigger and lowering the liquidation trigger.

Clause 16. The method of clause 1, wherein automatically changing the liquidation trigger comprises automatically changing the liquidation trigger according to one or more predetermined rules.

Clause 17. The method of clause 1, wherein automatically changing the liquidation trigger comprises changing the liquidation trigger in predetermined increments.

Clause 18. The method of clause 1, wherein automatically changing the liquidation trigger comprises repeatingly changing the liquidation trigger.

Clause 19. The method of clause 1, wherein the performance measure satisfies the one or more trigger change criteria upon the performance measure being indicative of one or more of: i) a value of the portfolio breaching a predetermined threshold value, ii) a change in a value of the portfolio breaching a predetermined threshold change.

Clause 20. The method of clause 19, wherein the change is one of: an absolute change, and a relative change relative to a prior value.

Clause 21. The method of clause 2, wherein a component of the changed liquidation triggers is met in respect of the basket of trading positions applicable thereto upon at least one of the basket value and a change in the basket value breaching a predetermined threshold value.

Clause 22. The method of clause 2, wherein a component of the liquidation trigger is met in respect of the basket of trading positions applicable thereto upon a value of one or more trading positions in the basket changing by a predetermined amount.

Clause 23. The method of clause 1, wherein the liquidation trigger includes a stop loss.

Clause 24. The method of clause 1, wherein the liquidation trigger includes a take profit.

Clause 25. The method of clause 1, wherein the liquidation trigger includes a trailing stop loss.

Clause 26. The method of clause 1, wherein the liquidation trigger includes a trailing take profit.

Clause 27. The method of clause 6, wherein the one or more target price thresholds are set such that if all target price thresholds in respect of the instruments held in trading positions in the basket are breached, the first parameter will be breached.

Clause 28. The method of clause 6, wherein the target price threshold for a given instrument is set in accordance with the current price of the given instrument and further in accordance with at least one of: the size of the trading position in which the given instrument is held, and the given instrument's volatility.

Clause 29. The method of clause 10, wherein revising one or more of the target price thresholds comprises revising the one or more target price thresholds in accordance with the current prices of the respective instruments such that no target price thresholds are breached.

Clause 30. The method of clause 6, wherein the computationally inexpensive operation comprises, for a given instrument, obtaining the current price of the instrument, comparing the current price to its respective target price threshold, and determining if the current price breaches the target price threshold.

Clause 31. The method of clause 6, wherein the one or more computationally expensive operations comprises, for each trading position *P* in the basket in respect of an instrument, calculating a P&L of *P* using the formula

$$P\&L_P = (p_c - p_0) \times u$$

where $p_c$ is the current price of the instrument per unit, $p_0$ is the initial price per unit, and *u* is the number of units traded in *P.*

Clause 32. The method of clause 8, wherein the current value $V_B$ of the basket is calculated using the formula

$$V_B = \sum_{i=1}^{n} c_i + \sum_{i=1}^{n} P\&L_i$$

where $c_i$ is the amount the trader has invested in the i-th trading position in the basket, and $P\&L_i$ is the P&L of the *i*-th trading position in the basket.

Clause 33. A system for facilitating mirror trading of financial instruments in a trading network comprising a plurality of traders, the system comprising a processor operatively coupled to a memory and configured to:

obtain, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically open, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;
obtain, from the memory, a liquidation trigger comprising two or more components, each component having a specified percentage weight in respect of the entire liquidation trigger, wherein a first component is applicable to the first basket and a second or more components are applicable to the second or more baskets; and
automatically change the liquidation trigger upon a performance measure for the mirror portfolio satisfying a trigger change criteria, wherein the specified percentage weights are also applicable to said changed liquidation trigger.

Clause 34. The system of clause 33, further comprising:

determining if at least one component of the changed liquidation trigger is met in respect of at least one basket of trading positions applicable thereto, and
upon determining that a given component of the changed liquidation trigger is met in respect of a given basket of trading positions applicable thereto, liquidating the given basket of trading positions.

Clause 35. The system of clause 34, wherein said processor is further configured to, upon liquidating the given basket of trading positions, re-allocate the percentage weights of the remaining components of the changed liquidation trigger applicable to the remaining baskets of trading positions.

Clause 36. The system of clause 34, wherein said processor is further configured to:

determine if any of a second or more components of the changed liquidation trigger is met in respect of any of a respective second or more baskets of trading positions applicable thereto, and
upon determining that a given second or more component of the changed liquidation trigger is met in respect of a given second or more baskets of trading positions applicable thereto, liquidate the given second or more baskets of trading positions.

Clause 37. The system of clause 36, wherein said processor is further configured to, upon liquidating the given second or more baskets of trading positions, re-allocate the percentage weights of the remaining components of the changed liquidation trigger applicable to the remaining baskets of trading positions.

Clause 38. The system of clause 34, wherein said processor being configured to determine if a component of the changed liquidation trigger is met in respect of a basket to which the component is applicable comprises, said processor being configured to:

obtain a first parameter indicative of a liquidation threshold associated with the basket, wherein the first parameter is determined utilizing the percentage weight of the component;
set one or more target price thresholds in respect of one or more instruments held in a respective one or more trading positions in the basket, wherein a target price threshold for a given instrument is determined utilizing the first parameter or a derivative thereof and in accordance with a current price and number of units of the given instrument;
determine, using a computationally inexpensive operation, if a current price of any instrument held in a trading position in the basket and in respect of which a target price threshold was set breaches the target price threshold set in respect of said instrument thereby giving rise to a breach event;
determine, in response to the breach event and using one or more computationally expensive operations, if the first parameter has been breached,

wherein said first parameter having been breached is thereby indicative of the component of the changed liquidation trigger being met, and wherein said first parameter not having been breached is thereby indicative of the component of the changed liquidation trigger not having been met.

Clause 39. The system of clause 38, wherein said first parameter corresponds to a maximum allowable gain/loss in the associated basket, and said first parameter is breached when a current gain/loss in said basket is equal to or greater than said maximum allowable gain/loss.

Clause 40. The system of clause 38, wherein said first parameter corresponds to a floor value for the associated basket, and said first parameter is breached when a current value of said basket is equal to or lower than said floor value.

Clause 41. The system of clause 38, wherein said first parameter corresponds to a ceiling value for the associated basket, and said first parameter is breached when a current value of said basket is equal to or higher than said ceiling value.

Clause 42. The system of clause 38, wherein said processor is further configured to revise one or more of the target price thresholds upon any one or more of:

i) a new trading position being opened in the given basket;
ii) a trading position in the given basket being closed;
iii) a transfer-in of cash to the mirror portfolio;
iv) a transfer-out of cash from the mirror portfolio;
v) a breach event having occurred and wherein said first parameter has not been breached; and
vi) the liquidation trigger being changed.

Clause 43. The system of clause 33, wherein the first criteria includes at least an indication of the first copied trader, said indication sufficient to discern the first copied trader from other traders in the trading network.

Clause 44. The system of clause 33, wherein the first criteria further includes an indication of one or more of: a specific target trading position, a specific instrument, a specific instrument type, a specific position types, and a specific timeframe.

Clause 45. The system of clause 33, wherein the first criteria further includes an indication that the at least one first target trading position is one of: a previously opened target trading position and a not yet opened target trading position.

Clause 46. The system of clause 34, wherein said processor is further configured to, upon no component of the changed liquidation trigger being met, automatically close at least one trading position in the mirror portfolio in response to the corresponding target trading position being closed.

Clause 47. The system of clause 33, wherein automatically changing the liquidation trigger comprises at least one of: raising the liquidation trigger and lowering the liquidation trigger.

Clause 48. The system of clause 33, wherein automatically changing the liquidation trigger comprises automatically changing the liquidation trigger according to one or more predetermined rules.

Clause 49. The system of clause 33, wherein automatically changing the liquidation trigger comprises changing the liquidation trigger in predetermined increments.

Clause 50. The system of clause 33, wherein automatically changing the liquidation trigger comprises repeatingly changing the liquidation trigger.

Clause 51. The system of clause 33, wherein the performance measure satisfies the one or more trigger change criteria upon the performance measure being indicative of one or more of: i) a value of the portfolio breaching a predetermined threshold value, ii) a change in a value of the portfolio breaching a predetermined threshold change.

Clause 52. The system of clause 51, wherein the change is one of: an absolute change, and a relative change relative to a prior value.

Clause 53. The system of clause 34, wherein a component of the changed liquidation triggers is met in respect of the basket of trading positions applicable thereto upon at least one of the basket value and a change in the basket value breaching a predetermined threshold value.

Clause 54. The system of clause 34, wherein a component of the liquidation trigger is met in respect of the basket of trading positions applicable thereto upon a value of one or more trading positions in the basket changing by a predetermined amount.

Clause 55. The system of clause 33, wherein the liquidation trigger includes a stop loss.

Clause 56. The system of clause 33, wherein the liquidation trigger includes a take profit.

Clause 57. The system of clause 33, wherein the liquidation trigger includes a trailing stop loss.

Clause 58. The system of clause 33, wherein the liquidation trigger includes a trailing take profit.

Clause 59. The system of clause 38, wherein the one or more target price thresholds are set such that if all target price thresholds in respect of the instruments held in trading positions in the basket are breached, the first parameter will be breached.

Clause 60. The system of clause 38, wherein the target price threshold for a given instrument is set in accordance with the current price of the given instrument and further in accordance with at least one of: the size of the trading position in which the given instrument is held, and the given instrument's volatility.

Clause 61. The system of clause 38, wherein revising one or more of the target price thresholds comprises revising the one or more target price thresholds in accordance with the current prices of the respective instruments such that no target price thresholds are breached.

Clause 62. The system of clause 38, wherein the computationally inexpensive operation comprises, for a given instrument, obtaining the current price of the instrument, comparing the current price to its respective target price threshold, and determining if the current price breaches the target price threshold.

Clause 63. The system of clause 38, wherein the one or more computationally expensive operations comprises, for each trading position *P* in the basket in respect of an instrument, calculating a P&L of *P* using the formula

$$P\&L_P = (p_c - p_0) \times u$$

where $p_c$ is the current price of the instrument per unit, $p_0$ is the initial price per unit, and $u$ is the number of units traded in *P*.

Clause 64. The system of clause 40, wherein the current value $V_B$ of the basket is calculated using the formula

$$V_B = \sum_{i=1}^{n} c_i + \sum_{i=1}^{n} P\&L_i$$

where $c_i$ is the amount the trader has invested in the i-th trading position in the basket, and $P\&L_i$ is the P&L of the *i*-th trading position in the basket.

Clause 65. A non-transitory storage medium comprising instructions embodied therein, that when executed by a processor comprised in a computer, cause the processor to perform a method of facilitating mirror trading of financial instruments in a trading network comprising a plurality of traders, the method comprising:

obtaining, from the memory, first criteria received from a copying trader for identifying at least one first target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;
obtaining, from the memory, a liquidation trigger comprising two or more components, each component having a specified percentage weight in respect of the entire liquidation trigger, wherein a first component is applicable to the first basket and a second or more components are applicable to the second or more baskets; and
automatically changing the liquidation trigger upon a performance measure for the mirror portfolio satisfying a trigger change criteria, wherein the specified percentage weights are also applicable to said changed liquidation trigger.

Clause 66. The medium of clause 65, wherein the method further comprises:

determining if at least one component of the changed liquidation trigger is met in respect of at least one basket of trading positions applicable thereto, and
upon determining that a given component of the changed liquidation trigger is met in respect of a given basket of trading positions applicable thereto, liquidating the given basket of trading positions.

Clause 67. The medium of clause 66, further comprising, upon liquidating the given basket of trading positions, re-allocating the percentage weights of the remaining components of the changed liquidation trigger applicable to the remaining baskets of trading positions.

Clause 68. The medium of clause 66, wherein the method further comprises:

determining if any of a second or more components of the changed liquidation trigger is met in respect of any of a respective second or more baskets of trading positions applicable thereto, and
upon determining that a given second or more component of the changed liquidation trigger is met in respect of a given second or more baskets of trading positions applicable thereto, liquidating the given second or more baskets of trading positions.

Clause 69. The medium of clause 68, wherein the method further comprises, upon liquidating the given second or more baskets of trading positions, re-allocating the percentage weights of the remaining components of the changed liquidation trigger applicable to the remaining baskets of trading positions.

Clause 70. The medium of clause 66, wherein determining if a component of the changed liquidation trigger is met in respect of a basket to which the component is applicable comprises:

obtaining a first parameter indicative of a liquidation threshold associated with the basket, wherein the first parameter is determined utilizing the percentage weight of the component;
setting one or more target price thresholds in respect of one or more instruments held in a respective one or more trading positions in the basket, wherein a target price threshold for a given instrument is determined utilizing the first parameter or a derivative thereof and in accordance with a current price and number of units of the given instrument;
determining, using a computationally inexpensive operation, if a current price of any instrument held in a trading position in the basket and in respect of which a target price threshold was set breaches the target price threshold set in respect of said instrument thereby giving rise to a breach event;
determining, in response to the breach event and using one or more computationally expensive operations, if the first parameter has been breached,
wherein said first parameter having been breached is thereby indicative of the component of the changed liquidation trigger being met, and wherein said first parameter not having been breached is thereby indicative of the component of the changed liquidation trigger not having been met.

Clause 71. The medium of clause 70, wherein said first parameter corresponds to a maximum allowable gain/loss in the associated basket, and said first parameter is breached when a current gain/loss in said basket is equal to or greater than said maximum allowable gain/loss.

Clause 72. The medium of clause 70, wherein said first parameter corresponds to a floor value for the associated basket, and said first parameter is breached when a current value of said basket is equal to or lower than said floor value.

Clause 73. The medium of clause 70, wherein said first parameter corresponds to a ceiling value for the associated basket, and said first parameter is breached when a current value of said basket is equal to or higher than said ceiling value.

Clause 74. The medium of clause 70, wherein the method further comprises revising one or more of the target price thresholds upon any one or more of:

i) a new trading position being opened in the given basket;
ii) a trading position in the given basket being closed;
iii) a transfer-in of cash to the mirror portfolio;
iv) a transfer-out of cash from the mirror portfolio;
v) a breach event having occurred and wherein said first parameter has not been breached; and
vi) the liquidation trigger being changed.

Clause 75. The medium of clause 65, wherein the first criteria includes at least an indication of the first copied trader, said indication sufficient to discern the first copied trader from other traders in the trading network.

Clause 76. The medium of clause 65, wherein the first criteria further includes an indication of one or more of: a specific target trading position, a specific instrument, a specific instrument type, a specific position types, and a specific timeframe.

Clause 77. The medium of clause 65, wherein the first criteria further includes an indication that the at least one first target trading position is one of: a previously opened target trading position and a not yet opened target trading position.

Clause 78. The medium of clause 66, wherein the method further comprises, upon no component of the changed liquidation trigger being met, automatically closing at least one trading position in the mirror portfolio in response to the corresponding target trading position being closed.

Clause 79. The medium of clause 65, wherein automatically changing the liquidation trigger comprises at least one of: raising the liquidation trigger and lowering the liquidation trigger.

Clause 80. The medium of clause 65, wherein automatically changing the liquidation trigger comprises automatically changing the liquidation trigger according to one or more predetermined rules.

Clause 81. The medium of clause 65, wherein automatically changing the liquidation trigger comprises changing the liquidation trigger in predetermined increments.

Clause 82. The medium of clause 65, wherein automatically changing the liquidation trigger comprises repeatingly changing the liquidation trigger.

Clause 83. The medium of clause 65, wherein the performance measure satisfies the one or more trigger change criteria upon the performance measure being indicative of one or more of: i) a value of the portfolio breaching a predetermined threshold value, ii) a change in a value of the portfolio breaching a predetermined threshold change.

Clause 84. The medium of clause 83, wherein the change is one of: an absolute change, and a relative change relative to a prior value.

Clause 85. The medium of clause 66, wherein a component of the changed liquidation triggers is met in respect of the basket of trading positions applicable thereto upon at least one of the basket value and a change in the basket value breaching a predetermined threshold value.

Clause 86. The medium of clause 66, wherein a component of the liquidation trigger is met in respect of the basket of trading positions applicable thereto upon a value of one or more trading positions in the basket changing by a predetermined amount.

Clause 87. The medium of clause 65, wherein the liquidation trigger includes a stop loss.

Clause 88. The medium of clause 65, wherein the liquidation trigger includes a take profit.

Clause 89. The medium of clause 65, wherein the liquidation trigger includes a trailing stop loss.

Clause 90. The medium of clause 65, wherein the liquidation trigger includes a trailing take profit.

Clause 91. The medium of clause 70, wherein the one or more target price thresholds are set such that if all target price thresholds in respect of the instruments held in trading positions in the basket are breached, the first parameter will be breached.

Clause 92. The medium of clause 70, wherein the target price threshold for a given instrument is set in accordance with the current price of the given instrument and further in accordance with at least one of: the size of the trading position in which the given instrument is held, and the given instrument's volatility.

Clause 93. The medium of clause 74, wherein revising one or more of the target price thresholds comprises revising the one or more target price thresholds in accordance with the current prices of the respective instruments such that no target price thresholds are breached.

Clause 94. The medium of clause 70, wherein the computationally inexpensive operation comprises, for a given instrument, obtaining the current price of the instrument, comparing the current price to its respective target price threshold, and determining if the current price breaches the target price threshold.

Clause 95. The medium of clause 70, wherein the one or more computationally expensive operations comprises, for each trading position *P* in the basket in respect of an instrument, calculating a P&L of *P* using the formula

$$P\&L_P = (p_c - p_0) \times u$$

where $p_c$ is the current price of the instrument per unit, $p_0$ is the initial price per unit, and $u$ is the number of units traded in *P.*

Clause 96. The medium of clause 72, wherein the current value $V_B$ of the basket is calculated using the formula

$$V_B = \sum_{i=1}^{n} c_i + \sum_{i=1}^{n} P\&L_i$$

where $c_i$ is the amount the trader has invested in the i-th trading position in the basket, and $P\&L_i$ is the P&L of the *i*-th trading position in the basket.

Clause 97. A method of facilitating mirror trading of financial instruments in a trading network comprising a plurality of traders, the method comprising, by a processor operatively coupled to a memory:

obtaining, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;

obtaining, from the memory, one or more values indicative of a respective one or more risk thresholds, each obtained value applicable to at least a part of the mirror portfolio;

for each given at least part of the mirror portfolio in respect of which a value indicative of a risk threshold was obtained, continually calculating a value indicative of a risk score associated with the given at least part of the mirror portfolio; and

automatically liquidating the given part of the mirror portfolio upon the calculated value indicative of a risk score breaching the obtained value indicative of a risk threshold in respect of the given part of the mirror portfolio.

Clause 98. The method of clause 97, wherein said at least a part of the mirror portfolio is selected from the entire mirror portfolio, one or baskets of trading positions, and one or more trading positions comprised in a basket of trading positions.

Clause 99. The method of clause 97, wherein a value indicative of a risk threshold is obtained in respect of each of one or more baskets of trading positions, wherein each basket of the one or more baskets is associated with a different copied trader and a given basket comprises one or more mirror trading positions corresponding to target trading positions opened by the copied trader associated with the given basket, and wherein the obtained value for one of the one or more baskets is different from the obtained value for another one of the one or more baskets.

Clause 100. The method of clause 97, wherein the risk score associated with a given at least part of the mirror portfolio is calculated in accordance with one or more of:

i) a volatility of one or more instruments held in one or more trading positions in the given at least part of the mirror portfolio,

ii) a leverage associated with one or more trading positions in the given at least part of the mirror portfolio.

Clause 101. The method of clause 97, wherein the risk score is derived by multiplying a vector *W* indicative of a position weight of each instrument in the at least part of the mirror portfolio relative to the whole at least part of the mirror portfolio by a covariance matrix *COV* indicative of a linear correlation in a risk measure between the instruments in the at least part of the mirror portfolio according to the formula

$$W^t X W = \sum_{i=1}^{n} \sum_{j=1}^{n} W_i W_j COV_{ij}$$

where $X = COV_{ij}$, and $n$ is the number of instruments in the at least part of the mirror portfolio.

Clause 102. The method of clause 97, wherein the first criteria includes at least an indication of the first copied trader, said indication sufficient to discern the first copied trader from other traders in the trading network.

Clause 103. The method of clause 97, wherein the first criteria further includes an indication of one or more of: a specific target trading position, a specific instrument, a specific instrument type, a specific position types, and a specific timeframe.

Clause 104. The method of clause 97, wherein the first criteria further includes an indication that the at least one first target trading position is one of: a previously opened target trading position and a not yet opened target trading position.

Clause 105. The method of clause 97, further comprising, by the processor, automatically closing at least one trading position in the mirror portfolio in response to the corresponding target trading position being closed.

Clause 106. A system for facilitating mirror trading of financial instruments in a trading network comprising a plurality of traders, the system comprising a processor operatively coupled to a memory and configured to:

obtain, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically open, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;
obtain, from the memory, one or more values indicative of a respective one or more risk thresholds, each obtained value applicable to at least a part of the mirror portfolio'
for each given at least part of the mirror portfolio in respect of which a value indicative of a risk threshold was obtained, continually calculate a value indicative of a risk score associated with the given at least part of the mirror portfolio; and
automatically liquidate the given part of the mirror portfolio upon the calculated value indicative of a risk score breaching the obtained value indicative of a risk threshold in respect of the given part of the mirror portfolio.

Clause 107. The system of clause 106, wherein said at least a part of the mirror portfolio is selected from the entire mirror portfolio, one or baskets of trading positions, and one or more trading positions comprised in a basket of trading positions.

Clause 108. The system of clause 106, wherein a value indicative of a risk threshold is obtained in respect of each of one or more baskets of trading positions, wherein each basket of the one or more baskets is associated with a different copied trader and a given basket comprises one or more mirror trading positions corresponding to target trading positions opened by the copied trader associated with the given basket, and wherein the obtained value for one of the one or more baskets is different from the obtained value for another one of the one or more baskets.

Clause 109. The system of clause 106, wherein the risk score associated with a given at least part of the mirror portfolio is calculated in accordance with one or more of:

i) a volatility of one or more instruments held in one or more trading positions in the given at least part of the mirror portfolio,
ii) a leverage associated with one or more trading positions in the given at least part of the mirror portfolio.

Clause 110. The system of clause 106, wherein the risk score is derived by multiplying a vector *W* indicative of a position weight of each instrument in the at least part of the mirror portfolio relative to the whole at least part of the mirror portfolio by a covariance matrix *COV* indicative of a linear correlation in a risk measure between the instruments in the at least part of the mirror portfolio according to the formula

$$W^tXW = \sum_{i=1}^{n}\sum_{j=1}^{n} W_i W_j COV_{ij}$$

where $X = COV_{ij}$. and *n* is the number of instruments in the at least part of the mirror portfolio.

Clause 111. The system of clause 106, wherein the first criteria includes at least an indication of the first copied trader, said indication sufficient to discern the first copied trader from other traders in the trading network.

Clause 112. The system of clause 106, wherein the first criteria further includes an indication of one or more of: a specific target trading position, a specific instrument, a specific instrument type, a specific position types, and a specific timeframe.

Clause 113. The system of clause 106, wherein the first criteria further includes an indication that the at least one first target trading position is one of: a previously opened target trading position and a not yet opened target trading position.

Clause 114. The system of clause 106, wherein the processor is further configured to automatically close at least one trading position in the mirror portfolio in response to the corresponding target trading position being closed.

Clause 115. A non-transitory storage medium comprising instructions embodied therein, that when executed by a processor comprised in a computer, cause the processor to perform a method of facilitating mirror trading of financial instruments in a trading network comprising a plurality of traders, the method comprising:

obtaining, from the memory, first criteria received from a copying trader for identifying at least one target trading position opened by a first copied trader in respect of at least one instrument to mirror for the copying trader in a mirror portfolio associated with the copying trader, and one or more second criteria received from the copying trader, each second criteria for identifying at least one trading position in respect of at least one instrument, said at least one trading position being either a non-mirror trading position or a target trading position opened by a second copied trader;
automatically opening, in the mirror portfolio, a first basket of trading positions comprising one or more trading positions in accordance with said first criteria, and one or more second baskets of trading positions, each second basket associated with a respective second criteria and comprising one or more trading positions in accordance with the associated second criteria;
obtaining, from the memory, one or more values indicative of a respective one or more risk thresholds, each obtained value applicable to at least a part of the mirror portfolio;
for each given at least part of the mirror portfolio in respect of which a value indicative of a risk threshold was obtained, continually calculating a value indicative of a risk score associated with the given at least part of the mirror portfolio; and
automatically liquidating the given part of the mirror portfolio upon the calculated value indicative of a risk score breaching the obtained value indicative of a risk threshold in respect of the given part of the mirror portfolio.

Clause 116. The medium of clause 115, wherein said at least a part of the mirror portfolio is selected from the entire mirror portfolio, one or baskets of trading positions, and one or more trading positions comprised in a basket of trading positions.

Clause 117. The medium of clause 115, wherein a value indicative of a risk threshold is obtained in respect of each of one or more baskets of trading positions, wherein each basket of the one or more baskets is associated with a different copied trader and a given basket comprises one or more mirror trading positions corresponding to target trading positions opened by the copied trader associated with the given basket, and wherein the obtained value for one of the one or more baskets is different from the obtained value for another one of the one or more baskets.

Clause 118. The medium of clause 115, wherein the risk score associated with a given at least part of the mirror portfolio is calculated in accordance with one or more of:

i) a volatility of one or more instruments held in one or more trading positions in the given at least part of the mirror portfolio,
ii) a leverage associated with one or more trading positions in the given at least part of the mirror portfolio.

Clause 119. The medium of clause 115, wherein the risk score is derived by multiplying a vector *W* indicative of a position weight of each instrument in the at least part of the mirror portfolio relative to the whole at least part of the mirror portfolio by a covariance matrix *COV* indicative of a linear correlation in a risk measure between the instruments in the at least part of the mirror portfolio according to the formula

$$W^t X W = \sum_{i=1}^{n} \sum_{j=1}^{n} W_i W_j COV_{ij}$$

where $X = COV_{ij}$. and $n$ is the number of instruments in the at least part of the mirror portfolio.

Clause 120. The medium of clause 115, wherein the first criteria includes at least an indication of the first copied trader, said indication sufficient to discern the first copied trader from other traders in the trading network.

Clause 121. The medium of clause 115, wherein the first criteria further includes an indication of one or more of: a specific target trading position, a specific instrument, a specific instrument type, a specific position types, and a specific timeframe.

Clause 122. The medium of clause 115, wherein the first criteria further includes an indication that the at least one first target trading position is one of: a previously opened target trading position and a not yet opened target trading position.

Clause 123. The medium of clause 115, wherein the method further comprises automatically closing at least one trading position in the mirror portfolio in response to the corresponding target trading position being closed.

**Claims**

1. A method of facilitating mirror trading of financial instruments in a trading network comprising a plurality of traders, the method comprising, by a processor operatively coupled to a memory:

   obtaining first criteria of a copying trader, the first criteria identifying at least one first target trading position opened by a first copied trader with respect to at least one instrument, and one or more second criteria of the copying trader, each second criteria identifying at least one trading position with respect to at least one instrument, the at least one trading position being either a non-mirror trading position or a target trading position opened by a second copied trader;
   opening, in a mirror portfolio, a first basket of trading positions, the basket comprising one or more trading positions in accordance with the first criteria, and one or more second baskets of trading positions, each second basket associated with respective second criteria and comprising one or more trading positions in accordance with the associated second criteria;
   obtaining a liquidation trigger comprising two or more components, each component having a percentage weight with respect to the entire liquidation trigger, wherein a first component is applicable to the first basket and a second or more components are applicable to the second or more baskets; and
   adjusting the liquidation trigger responsive to a performance measure of the mirror portfolio satisfying trigger change criteria, wherein the adjusted liquidation trigger comprises the two or more components.

2. The method of claim 1, further comprising:
   determining whether at least one component of the adjusted liquidation trigger is met with respect to at least one basket of trading positions applicable thereto, and upon determining that a given component of the changed liquidation trigger is met in respect of a given basket of trading positions applicable thereto, liquidating the given basket of trading positions.

3. The method of claim 2, further comprising, subsequent to liquidating the given basket of trading positions:
   re-allocating the percentage weights of the remaining components of the changed liquidation trigger applicable to the remaining baskets of trading positions.

4. The method of claim 2, further comprising:

   determining whether any of a second or more components of the changed liquidation trigger is met in respect of any of a respective second or more baskets of trading positions applicable thereto, and
   responsive to determining that a given second or more component of the changed liquidation trigger is met in respect of a given second or more baskets of trading positions applicable thereto, liquidating the given second or more baskets of trading positions.

5. The method of claim 4, further comprising, subsequent to liquidating the given second or more baskets of trading positions:
   re-allocating the percentage weights of the remaining components of the adjusted liquidation trigger applicable to the remaining baskets of trading positions.

6. The method of claim 2, wherein determining if a component of the changed liquidation trigger is met in respect of a basket to which the component is applicable comprises, by the processor: obtaining a first parameter indicative of a liquidation threshold associated with the basket, wherein the first parameter is determined utilizing the percentage weight of the component; setting one or more target price thresholds in respect of one or more instruments held in a respective one or more trading positions in the basket, wherein a target price threshold for a given instrument is determined utilizing the first parameter or a derivative thereof and in accordance with a current price and number of units of the given instrument;

determining, using a computationally inexpensive operation, if a current price of any instrument held in a trading position in the basket and in respect of which a target price threshold was set breaches the target price threshold set in respect of said instrument thereby giving rise to a breach event;
determining, in response to the breach event and using one or more computationally expensive operations, if the first parameter has been breached,
wherein said first parameter having been breached is thereby indicative of the component of the changed liquidation trigger being met, and wherein said first parameter not having been breached is thereby indicative of the component of the changed liquidation trigger not having been met.

**7.** The method of claim 1, wherein the first criteria further includes an indication of one or more of: a specific target trading position, a specific instrument, a specific instrument type, a specific position types, and a specific timeframe.

**8.** The method of claim 1, wherein adjusting the liquidation trigger comprises at least one of a group comprising raising the liquidation trigger, and lowering the liquidation trigger.

**9.** The method of claim 1, wherein the performance measure satisfies the one or more trigger change criteria upon the performance measure being indicative of one or more of: i) a value of the portfolio breaching a predetermined threshold value, ii) a change in a value of the portfolio breaching a predetermined threshold change.

**10.** The method of claim 1, wherein the liquidation trigger includes at least one of a group consisting of: a stop loss, a take profit, a trailing stop loss, and a trailing take profit.

**11.** The method of claim 6, wherein the computationally inexpensive operation comprises, for a given instrument, obtaining the current price of the instrument, comparing the current price to its respective target price threshold, and determining if the current price breaches the target price threshold.

**12.** The method of claim 6, wherein the one or more computationally expensive operations comprises, for each trading position P in the basket in respect of an instrument, calculating a P&L of P using the formula

$$P\&L_P = (p_c - p_0) \times u$$

where $p_c$ is the current price of the instrument per unit, po is the initial price per unit, and u is the number of units traded in P.

**13.** The method of claim 8, wherein the current value VB of the basket is calculated using the formula

$$V_B = \sum_{i=1}^{n} c_i + \sum_{i=1}^{n} P\&L_i$$

where $c_i$ is the amount the trader has invested in the i-th trading position in the basket, and P&L, is the P&L of the i-th trading position in the basket.

**14.** A target identification system comprising a processing and memory circuitry, and configured facilitate mirror trading of financial instruments in a trading network comprising a plurality of traders, in accordance with any one of Claims 1-13.

**15.** A non-transitory computer readable medium comprising instructions that, when executed by a computer, cause the computer to perform a method of facilitating mirror trading of financial instruments in a trading network comprising a plurality of traders in accordance with any one of Claims 1 - 13.

Fig. 1

Clients (102)
Internet
Trading computer(100)
ECN

Fig. 2

Mirror trading system (200)
Processor (210)
Data repository (203)
Monitoring module (250)
Mirroring module (260)
ECN interface (206)
Trading module (220)
Matching module (240)
Client interface (204)
Trading computer (201)
Network
Client 1
Client 2
Client n
Trading clients (202)

Fig. 3
Receive from first trader criteria for identifying at least one target trading position to mirror
(300)
Identify at least one target trading position satisfying the criteria
(302)
Open, in a mirror account, a basket of trading positions comprising mirror trading positions corresponding to target trading positions
(304)
Receive from first trader liquidation trigger to apply to mirror account
(306)
Automatically change liquidation trigger upon a performance measure associated with the mirror account satisfying trigger change criteria
(308)
Liquidate the mirror account upon meeting the changed liquidation trigger
(310)

Fig. 4
(422)
$10000
(420)
(424)
$5000
(426)
$5000
(404)
$1000
(400)
$500
$500
(406)
(402)
$1000
(408)
$583.33
(443)
(442)
$416.66
(440)
$12000
(410)
$7000
$500
(412)
$5000
(445)

Fig 5A

(500)
(520)
(510)
120
108
100
90
t
0
1
2

| | t = 0 | t = 1 | t = 2 |
|---|---|---|---|
| V | 100 | 120 | 108 |
| Liquidation trigger (-10%) | 90 | 108 | 108 |

Fig 5B

120
110
100
90
(530)
(550)
(540)
t
0
1
2

| | t = 0 | t = 1 | t = 2 |
|---|---|---|---|
| V | 100 | 95 | 104.5 |
| Liquidation trigger (+10%) | 110 | 104.5 | 104.5 |

Fig 5C
120
110
100
90
ttp trigger
Portfolio value
t
0
1
2
3

| | t = 0 | t = 1 | t = 2 | t = 3 |
|---|---|---|---|---|
| V | 100 | 95 | 104.5 | 110 |
| Liquidation trigger (+10%) | 110 | 110 | 110 | 121 |

(308)
Fig. 6
Portfolio value gain/loss?
gain
loss
Raise liquidation trigger (600)
Lower liquidation trigger (602)

Fig. 7

(310)

Changed liquidation trigger met?
Y
Liquidate mirror portfolio (700)
N
Copied trader closed a position?
N
Y
Close the corresponding mirror position (710)

Fig. 8A

Monitor mirror portfolio value
(800)
Increase/
decrease
increase
decrease
N
Is
trailing
SL?
Y
N
Criteria for
raising SL
met?
Y
Raise the SL
(820)
N
SL
breached?
Y
Liquidate
portfolio
(810)

Fig. 8B

Monitor mirror portfolio value
(825)
Increase/
decrease
decrease
increase
N
Is
trailing
TP?
Y
N
Criteria for
lowering
TP met?
Y
Lower the TP
(840)
N
TP
breached?
Y
Liquidate
portfolio
(830)

Fig. 8C

Monitor mirror portfolio value
(825)
Increase/
decrease
increase
decrease
TP
breached?
Y
Liquidate
portfolio
(860)
Do Nothing
(850)
N
Is
trailing
TP?
N
Y
N
Criteria for
raising TP
met?
Y
Raise the TP
(870)

Fig. 9
Obtain liquidation trigger
(900)
Set a target price threshold for each instrument in the basket
(902)
Compare, for each instrument, current price to target price threshold using computationally inexpensive operation
(904)
Threshold breached?
N
Y
Calculate P&L of each position using computationally expensive operation and determine if liquidation trigger met
(906)
Liquidation trigger met?
N
Revise target price threshold(s)
(908)
Y
Liquidate
(910)

Fig. 10

Preprocess each object using computationally inexpensive operation
(1000)
No
Results of at least one preprocessing satisfies predetermined criteria?
Yes
Process each object using computationally expensive operation
(1005)
Process the plurality of objects
(1010)
Revise predetermined criteria such that they are not in breach
(1020)
No
Condition met?
Yes
Take an action
(1015)

Fig. 11

Set a target price threshold for each instrument held in a trading position
(1101)
Compare market price of each instrument with its respective target price threshold
(1102)
breach?
N
Y
Calculate P&L of each trading position
(1103)
Calculate portfolio value
(1104)
Compare portfolio value with liquidation trigger
(1105)
breach?
N
Y
Liquidate the portfolio
(1106)

Fig 12

(1200)
(1202)
(1204)
(1206)
(1208)
(1210)
(1212)

| P | i | u | $P_0$ | $u \times P_0$ | $T_i$ |
|---|---|---|---|---|---|
| P1 | X | 1 | 100 | 100 | 90 |
| P2 | Y | 2 | 25 | 50 | 22.5 |
| P3 | Z | 2 | 15 | 30 | 13.5 |

Fig 13

(1300)
(1302)
(1304)
(1308)
(1310)

| P | i | u | $P_0$ | $u \times P_0$ | $T_i$ |
|---|---|---|---|---|---|
| P1 | X | 1 | 100 | 100 | 88 |
| P2 | Y | 2 | 25 | 50 | 22 |
| Cash ($30) | - | - | - | - | - |

Fig 14

(1400)
(1402)
(1404)
(1404)

| P | t = 0 | T | t = 1 | T' |
|---|---|---|---|---|
| GOOG | 75 | 60 | 75 | 67.5 |
| Gold | 25 | 20 | 25 | 22.50 |
| Cash | 100 | - | 0 | - |

Fig. 15

Monitor copied trader's account
(1501)
Copied trader transferred cash in or out?
out
in
Calculate the amount of cash for copying trader to transfer out
(1502)
Calculate the amount of cash for copying trader to transfer in
(1503)
Transfer the calculated amount in/out of mirror portfolio
(1504)
Revise target price threshold(s)
(1505)

Fig 16

Receive from first trader first criteria for identifying at least first trading position of trader to mirror, and second criteria for identifying at least a second trading position to open
(1600)
Identify trading positions satisfying first and second criteria
(1605)
Open, in a mirror portfolio of the first trader, a basket of trading positions comprising the identified trading positions
(1610)
Receive from first trader stop loss to apply to mirror portfolio
(1615)
Liquidate the mirror portfolio upon stop loss being met
(1620)

Fig 17

Receive from copying trader copy trade buy order indicative of copied trader portfolio and TSL
(1700)
Associate copying trader with a LI portfolio linked to each copied trader portfolio
(1705)
Execute, in the LI portfolio, trades mirroring trades executed in copied trader portfolio(s)
(1710)
Monitor performance of the LI portfolio
(1720)
N
First criterion met?
Y
N
Second criterion met?
Y
Liquidate the LI portfolio
(1730)
Revise TSL
(1740)

Fig. 18

Obtain first criteria received from copying trader for identifying target trading position opened by a copied trader to mirror, and one or more second criteria for identifying one or more second trading positions
(1800)
Open, in a mirror portfolio of the copying trader, a first basket comprising one or more trading positions in accordance with the first criteria, and one or more second baskets of trading positions in accordance with the one or more second criteria, respectively
(1810)
Obtain liquidation trigger comprising two or more components each having a specified percentage weight of the entire liquidation trigger, in which the first component is applicable to the first basket, and each second or more components is applicable to the second or more baskets, respectively
(1815)
Change the liquidation trigger upon a performance measure for the mirror portfolio satisfying a trigger change criteria
(1820)
Determine if at least one component is met in respect of at least one basket
(1825)
Liquidate the given basket
(1825)

Fig. 19

1900

| Invested Cash | Trade |
|---|---|
| 150 | Buy EURUSD |
| 100 | Buy OIL |
| 100 | Buy EURUSD |
| 150 | Sell AAPL |
| + $500 CASH | |

1906

1908

1902

1904

Fig. 20

1825

Obtain a first parameter indicative of a liquidation threshold associated with the basket, the first parameter determined utilizing the percentage weight allocated to the basket (2002)

Set target price thresholds for instruments held in trading positions in the basket, a target price threshold determined utilizing the first parameter and in accordance with the instrument's current price and number of units held in the trading position (2004)

Determine, using a computationally inexpensive operation, if a current price of any instrument held in a trading position in the basket breaches the target price threshold set for the instrument, thereby giving rise to a breach event (2006)

In response to a breach event, determine, using one or more computationally expensive operations, if the first parameter has been breached, whereby the first parameter being breached is indicative of the component of the liquidation trigger applicable to the basket being met (2008)

Fig. 21

2100

50% loss liquidation trigger, allocated 50% Bill, 50% Charlie

| | Copied trader | Invested cash | Trade / Instrument | Open rate | Units | US$ Value | Threshold | Max loss |
|---|---|---|---|---|---|---|---|---|
| 2102 | Bill | 150 | Buy EURUSD | 1.1 | 5000 | 5500 | 1.07 | 150 |
| 2104 | Bill | 100 | Buy OIL | 35.5 | 100 | 3550 | 34.5 | 100 |
| | | | | | | | | |
| 2106 | Charlie | 100 | Buy EURUSD | 1.09 | 5000 | 5450 | 1.07000 | 100 |
| 2108 | Charlie | 150 | Sell AAPL | 100 | 74.5 | 7450 | 102.013423 | 150 |
| | + CASH $500 | | | | | | | |

Fig. 22

2200

50% loss liquidation trigger, allocated 75% Bill, 25% Charlie

| | Copied trader | Invested cash | Trade / Instrument | Open rate | Units | US$ Value | Threshold | Max loss |
|---|---|---|---|---|---|---|---|---|
| 2202 | Bill | 150 | Buy EURUSD | 1.1 | 5000 | 5500 | 1.055 | 225 |
| 2204 | Bill | 100 | Buy OIL | 35.5 | 100 | 3550 | 34 | 150 |
| | | | | | | | | |
| 2206 | Charlie | 100 | Buy EURUSD | 1.09 | 5000 | 5450 | 1.0888 | 50 |
| 2208 | Charlie | 150 | Sell AAPL | 100 | 74.5 | 7450 | 72.8221477 | 75 |
| | + CASH $500 | | | | | | | |

Fig. 23

2300

50% loss liquidation trigger,
allocated 75% Bill, 25% Charlie

| Copied trader | Invested cash | Trade / Instrument | Open rate | Units | US$ Value | Threshold | Max loss |
|---|---|---|---|---|---|---|---|
| Bill | 150 | Buy Trader "Dillon" | - | - | 5500 | - | 228 |
| Bill | 100 | Buy OIL | 35.5 | 100 | 3550 | 34.03 | 147 |
| | | | | | | | |
| Charlie | 100 | Buy EURUSD | 1.09 | 5000 | 5450 | 1.0888 | 50 |
| Charlie | 150 | Sell AAPL | 100 | 74.5 | 7450 | 72.8221477 | 75 |
| + CASH $500 | | | | | | | |

2302, 2304

2310

Trader "Dillon"

| Copied trader | Invested cash | Trade / Instrument | Open rate | Units | US$ Value | Threshold | Max loss |
|---|---|---|---|---|---|---|---|
| - | Does not affect | Buy Gold | 1,253 | 2.968 | 3720 | 1,201.05 | 154.21 |
| - | Does not affect | Buy OIL | 35.60 | 50 | 1780 | 34.12 | 73.79 |

2312, 2314

Fig. 24

Obtain first criteria received from copying trader for identifying target trading position opened by a copied trader to mirror, and one or more second criteria for identifying one or more second trading positions
(2400)
Open, in a mirror portfolio of the copying trader, a first basket comprising one or more trading positions in accordance with the first criteria, and one or more second baskets of trading positions in accordance with the one or more second criteria, respectively
(2402)
Obtain one or more values indicative of a respective one or more risk thresholds, each value applicable to at least a part of the mirror portfolio
(2404)
Continually calculate a risk score for each part of the mirror portfolio in respect of which a value indicative of a risk threshold was obtained
(2406)
Automatically liquidate a given part of the mirror portfolio upon the calculated value indicative of a risk score for the given part breaching the obtained value indicative of a risk threshold for the given part
(2408)

Europäisches Patentamt
European Patent Office
Office européen des brevets

# EUROPEAN SEARCH REPORT

Application Number
EP 21 17 6331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/228019 A1 (ASSIA JOHNATHAN ALEXANDER [IL]) 13 August 2015 (2015-08-13) * the whole document * ----- | 1-15 | INV. G06Q40/06 G06Q40/04 |
| X | US 2013/060672 A1 (ASSIA JOHNATHAN [IL]) 7 March 2013 (2013-03-07) * the whole document * ----- | 1-15 | |
| X | US 7 739 172 B2 (VOUDRIE JEFFREY O [US]) 15 June 2010 (2010-06-15) * the whole document * ----- | 1-15 | |
| A | US 2013/297481 A1 (ASSIA JOHNATHAN [IL]) 7 November 2013 (2013-11-07) * abstract; claims 1-4 * ----- | 1-15 | |
| A | US 2015/317733 A1 (CHIBLY MARCOS DE ALMEIDA [BR]) 5 November 2015 (2015-11-05) * abstract; claims 1,2 * ----- | 1-15 | TECHNICAL FIELDS SEARCHED (IPC) |
| A | US 2016/055580 A1 (FOX JOSEPH [US]) 25 February 2016 (2016-02-25) * abstract; claim 1; figures 1,2 * ----- | 1-15 | G06Q |
| A | US 2013/268423 A1 (GILES MICHAEL HARLAND [US]) 10 October 2013 (2013-10-10) * abstract; claim 1; figure 3 * ----- | 1-15 | |

The present search report has been drawn up for all claims

1

| Place of search | Date of completion of the search | Examiner |
|---|---|---|
| The Hague | 23 August 2021 | Fernández Ferreira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 17 6331

This annex lists the patent family members relating to the patent documents cited in the above-mentioned European search report. The members are as contained in the European Patent Office EDP file on
The European Patent Office is in no way liable for these particulars which are merely given for the purpose of information.

23-08-2021

| Patent document cited in search report | Publication date | Patent family member(s) | Publication date |
|---|---|---|---|
| US 2015228019 A1 | 13-08-2015 | IL 237715 A | 30-11-2020 |
| | | US 2015228019 A1 | 13-08-2015 |
| | | WO 2014041541 A1 | 20-03-2014 |
| US 2013060672 A1 | 07-03-2013 | AU 2012216489 A1 | 21-03-2013 |
| | | EP 2568420 A2 | 13-03-2013 |
| | | IL 220499 A | 31-07-2016 |
| | | US 2013060672 A1 | 07-03-2013 |
| US 7739172 B2 | 15-06-2010 | US 2005273409 A1 | 08-12-2005 |
| | | US 2005273410 A1 | 08-12-2005 |
| | | US 2005273411 A1 | 08-12-2005 |
| | | US 2005273412 A1 | 08-12-2005 |
| | | US 2005273413 A1 | 08-12-2005 |
| US 2013297481 A1 | 07-11-2013 | EP 2847731 A1 | 18-03-2015 |
| | | US 2013297481 A1 | 07-11-2013 |
| | | WO 2013164828 A1 | 07-11-2013 |
| US 2015317733 A1 | 05-11-2015 | NONE | |
| US 2016055580 A1 | 25-02-2016 | US 2016055580 A1 | 25-02-2016 |
| | | US 2017301018 A1 | 19-10-2017 |
| | | US 2019228470 A1 | 25-07-2019 |
| | | US 2020342535 A1 | 29-10-2020 |
| US 2013268423 A1 | 10-10-2013 | NONE | |

EPO FORM P0459

For more details about this annex : see Official Journal of the European Patent Office, No. 12/82